# EUROPEAN PATENT APPLICATION

(11) **EP 4 557 633 A1**
(43) Date of publication of application: **21.05.2025**
(21) Application number: 24212702.5
(22) Date of filing: 13.11.2024
(51) Int. Cl.: H04B 7/185, H04W 56/00

(54) **APPARATUS AND METHOD FOR PROVIDING ACCESS IN NON-TERRESTRIAL NETWORK**

(30) Priority: 14.11.2023 KR 20230157750
(71) Applicant: Thinkware Corporation, Seongnam-si, Gyeonggi-do 13493 (KR)
(72) Inventor: HAN, Taekyu, Seongnam-si, Gyeonggi-do (KR); LIM, Donghee, Seongnam-si, Gyeonggi-do (KR); KIM, Daewon, Seongnam-si, Gyeonggi-do (KR); KANG, Boram, Seongnam-si, Gyeonggi-do (KR); KOO, Nahyeon, Seongnam-si, Gyeonggi-do (KR)
(74) Representative: BCKIP Part mbB

(57) **Abstract**

In embodiments, an apparatus of a satellite for providing non-terrestrial network (NTN) access is provided. The apparatus includes at least one processor and at least one transceiver. The at least one processor is configured to transmit, to a terminal on a cell provided by the satellite through the at least one transceiver, a message including information related to a handover. The information related to a handover includes information for a group to which the satellite belongs, information for a target satellite of a target cell of a handover for the terminal, information for a terminal group to which the terminal belongs, information for a condition of a conditional handover of the terminal, and information for at least one of a position, a velocity, or an orbit of the target satellite.

## Description

### BACKGROUND

### TECHNICAL FIELD

The present disclosure generally relates to a non-terrestrial network (NTN) that provides a wireless communication service through a satellite located in an orbit of the earth or an aerial vehicle flying at high altitude, instead of a base station on the ground, and more particularly, relates to an apparatus and a method for selecting a cell in the non-terrestrial network.

### DESCRIPTION OF RELATED ART

In order to complement a terrestrial network that provides a wireless communication system a non-terrestrial network (NTN) has been introduced. The non-terrestrial network may provide a communication service even in an area where the terrestrial network is difficult to build or in a disaster situation. In addition, due to a recent decrease in a satellite launch cost, an access network environment may be provided efficiently.

### SUMMARY

In embodiments, an apparatus of a satellite for providing non-terrestrial network (NTN) access is provided. The apparatus may comprise at least one processor and at least one transceiver. The at least one processor may be configured to transmit, to a terminal on a cell provided by the satellite through the at least one transceiver, a message including information related to a handover. The information related to a handover may include information for a group to which the satellite belongs, information for a target satellite of a target cell of a handover for the terminal, information for a terminal group to which the terminal belongs, information for a condition of a conditional handover of the terminal, and information for at least one of a position, a velocity, or an orbit of the target satellite.

In embodiments, a method performed by a satellite for providing non-terrestrial network (NTN) access is provided. The method may comprise transmitting, to a terminal on a cell provided by the satellite, a message including information related to a handover. The information related to a handover may include information for a group to which the satellite belongs, information for a target satellite of a target cell of a handover for the terminal, information for a terminal group to which the terminal belongs, information for a condition of a conditional handover of the terminal, and information for at least one of a position, a velocity, or an orbit of the target satellite.

In embodiments, a non-transitory recording medium is provided. The non-transitory recording medium may include a memory storing instructions. The instructions, when executed by at least one processor, may cause a satellite for providing non-terrestrial network (NTN) access to transmit, to a terminal on a cell provided by the satellite, a message including information related to a handover, and the information related to a handover may include information for a group to which the satellite belongs, information for a target satellite of a target cell of a handover for the terminal, information for a terminal group to which the terminal belongs, information for a condition of a conditional handover of the terminal, and information for at least one of a position, a velocity, or an orbit of the target satellite.

### BRIEF DESCRIPTION OF THE DRAWINGS

FIG. 1 illustrates a wireless communication system.
FIGS. 2A and 2B illustrate an example of a non-terrestrial network (NTN).
FIG. 3A illustrates an example of a control plane (C-plane).
FIG. 3B illustrates an example of a user plane (U-plane).
FIG. 4 illustrates an example of a resource structure in a time-frequency domain in a wireless communication system.
FIG. 5 illustrates an example of a network structure for an NTN.
FIG. 6A illustrates an example of a control plane of a regenerative satellite.
FIG. 6B illustrates an example of a user plane of a regenerative satellite.
FIG. 7A illustrates an example of a group handover in a satellite communication.
FIG. 7B illustrates an example of a handover of a non-terrestrial base station.
FIG. 8A illustrates an example of system information for an NTN.
FIG. 8B illustrates an example of a radio resource control (RRC) message for an NTN.
FIGS. 9A and 9B illustrate an example of signaling through an F1 interface in an NTN.
FIG. 10 illustrates an example of signaling through an XN interface in an NTN.
FIGS. 11A and 11B illustrate an example of signaling through an NG interface in an NTN.
FIG. 12A illustrates an example of a handover procedure using a regenerative satellite.
FIG. 12B illustrates an example of cell selection using a regenerative satellite.
FIG. 13 illustrates an example of components of a satellite.
FIG. 14 illustrates an example of components of a terminal.

### DETAILED DESCRIPTION

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since various embodiments of the present disclosure include technology that uses both hardware and software, the various embodiments of the present disclosure do not exclude a software-based approach.

Terms referring to a signal (e.g., a signal, information, a message, or signaling), terms referring to a resource (e.g., a symbol, a slot, a subframe, a radio frame, a subcarrier, a resource element (RE),a resource block (RB), a bandwidth part (BWP), or an occasion), terms referring for an operational state (e.g., a step, an operation, or a procedure), terms referring to data (e.g., a packet, a user stream, information, a bit, a symbol, or a codeword), terms referring to a channel, terms referring to a network entity, terms referring to a device component, and the like, used in the following description are exemplified for convenience of explanation. Therefore, the present disclosure is not limited to terms to be described below, and another term having an equivalent technical meaning may be used.

In the following description, a physical channel and a signal may be used interchangeably with data or a control signal. For example, a physical downlink shared channel (PDSCH) is a term referring to a physical channel through which data is transmitted, but PDSCH may also be used to refer to data. That is, in the present disclosure, an expression 'transmitting a physical channel' may be interpreted equally to an expression 'transmitting data or a signal through a physical channel'.

Hereinafter, in the present disclosure, upper signaling indicates a signal transmission method transmitted from a base station to a terminal using a downlink data channel of a physical layer or from a terminal to a base station using an uplink data channel of a physical layer. The upper signaling may be understood as radio resource control (RRC) signaling or a MAC control element (hereinafter, referred to as a 'CE").

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' means at least one of elements from A (including A) to B (including B). Hereinafter, 'C' and/or 'D' means that at least one of 'C' or 'D', that is, {'C', 'D', 'C' and 'D'}.

In the present disclosure, a signal quality may be, for example, at least one of reference signal received power (RSRP), beam reference signal received power (BRSRP), a reference signal received quality (RSRQ), a received signal strength indicator (RSSI), a signal to interference and interference (SINR), a carrier to interference and noise ratio (CINR), a signal to noise ratio (SNR), error vector magnitude (EVM), a bit error rate (BER), and a block error rate (BLER). In addition to the above-described example, of course, other terms having an equivalent technical meaning or other metrics indicating a channel quality may be used. Hereinafter, in the present disclosure, high signal quality means a case in which a signal quality value related to a signal size is large or a signal quality value related to an error rate is small. When the signal quality is high, it may mean that a smooth wireless communication environment is guaranteed. In addition, an optimal beam may mean a beam having the highest signal quality among beams.

This disclosure describes various embodiments using terms used in a portion of communication standards (e.g., 3rd Generation Partnership Project (3GPP) and European Telecommunications Standards Institute (ETSI)), but this is only an example for explanation. Various embodiments of the present disclosure may be easily modified and applied in another communication system.

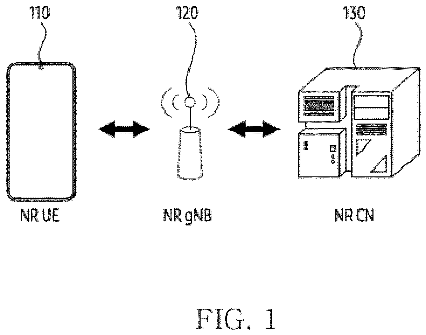

FIG. 1 illustrates a wireless communication system.

Referring to FIG. 1, FIG. 1 illustrates a terminal 110 and a base station 120 as a portion of nodes that utilize a wireless channel in a wireless communication system using New Radio (NR) as a wireless interface of Radio Access Technology (RAT). FIG. 1 illustrates only one base station, but the wireless communication system may further include another base station identical or similar to the base station (e.g., NR gNB) 120.

The terminal 110, which is an apparatus used by a user, communicates with the base station 120 through a wireless channel. A link from the base station 120 to the terminal 110 is referred to as a downlink (DL), and a link from the terminal 110 to the base station 120 is referred to as an uplink (UL). In addition, although not illustrated in FIG. 1, the terminal 110 and another terminal may communicate with each other through a wireless channel. At this time, a device-to-device link (D2D) between the terminal 110 and another terminal is referred to as a sidelink, and the sidelink may be used interchangeably with a PC5 interface. In some other embodiments, the terminal 110 may be operated without user involvement. According to an embodiment, the terminal 110, which is an apparatus that performs machine type communication (MTC), may not be carried by a user. In addition, according to an embodiment, the terminal 110 may be a narrowband (NB)-internet of things (loT) device.

In describing the systems and methods in the present specification, the terminal 110 may be an electronic device used to communicate voice and/or data to the base station 120, and the base station 120 may, in turn, communicate with a network of devices (e.g., a public exchange telephone network (PSTN), the Internet, and the like).

In addition, the terminal 110 may be referred to as a terminal, a 'user equipment (UE)', a 'vehicle', a 'customer premises equipment (CPE)', a 'mobile station', a 'subscriber station', a 'remote terminal', a 'wireless terminal', an 'electronic device', a 'user device', an 'access terminal', a 'mobile terminal', a 'remote station', a 'user terminal', a 'subscriber unit', a 'mobile device', or another term having an equivalent technical meaning thereto.

Additionally, examples of terminals 110 include cellular phones, smart phones, personal digital assistants (PDAs), laptop computers, netbooks, e-readers, wireless modems, and the like. In 3GPP standards, the terminal 110 is typically referred to as a UE. However, since scope disclosed in the present specification should not be limited to the 3GPP standards, terms "UE" and "terminal" may be used interchangeably in the present specification to represent to a more general term "wireless communication device". The UE may also more generally be referred to as a terminal device.

The base station 120 is a network infrastructure that provides wireless access to the terminal 110. The base station 120 has coverage defined based on a distance at which a signal may be transmitted. In the 3GPP standards, the base station 120 may generally be referred to as a `node B', an `evolved node B (eBodeB, eNB)', a '5th generation node', a 'next generation nodeB (gNB)', a 'home enhanced or evolved node B (HeNB)', an 'access point (AP)', a 'wireless point', a 'transmission/reception point (TRP)', or another term having an equivalent technical meaning thereto.

Since scope disclosed in the present specification should not be limited to the 3GPP standards, terms "base station", "node B", "eNB", and "HeNB" may be used interchangeably in the present specification to represent to a more general term "base station". In addition, a term "base station" may be used to refer to an access point. The access point may be an electronic device that provides access to a network (e.g., a local area network (LAN), the Internet, and the like) for wireless communication devices. A term "communication device" may be used to refer to both a wireless communication device and/or a base station. The eNB or the gNB may also more generally be referred to as a base station device.

The base station 120 may communicate with an NR Core Network (NR CN) entity 130. For example, a core network entity 130 may include an Access and Mobility Management Function (AMF) that is in charge of a control plane such as terminal 110 access, a mobility control function, and the like, and a User Plane Function (UPF) that is in charge of a control function for user data.

The terminal 110 may perform beamforming with the base station 120. The terminal 110 and the base station 120 may transmit and receive a wireless signal in a relatively low frequency band (e.g., frequency range 1 (FR 1) of NR). In addition, the terminal 110 and the base station 120 may transmit and receive wireless signals in a relatively high frequency band (e.g., FR 2 (or, FR 2-1, FR 2-2, FR 2-3), or FR 3 of NR), a millimeter wave (mmWave) band (e.g., 28 GHz, 30 GHz, 38 GHz, or 60 GHz)). In order to improve a channel gain, the terminal 110 and the base station 120 may perform the beamforming. Here, the beamforming may include transmission beamforming and reception beamforming. The terminal 110 and the base station 120 may assign directivity to a transmission signal or a reception signal. To this end, the terminal 110 and the base station 120 may select serving beams through a beam search or a beam management procedure. After the serving beams are selected, subsequent communication may be performed through a resource that is in a Quasi Co-Location (QCL) relationship with a resource transmitting the serving beams.

If large-scale characteristics of a channel transferring a symbol on a first antenna port may be inferred from a channel transferring a symbol on a second antenna port, the first antenna port and the second antenna port may be evaluated to be in the QCL relationship. For example, the large-scale characteristics may include at least one of a delay spread, a doppler spread, a doppler shift, an average gain, an average delay, and a spatial receiver parameter.

Both the terminal 110 and the base station 120 may perform the beamforming, but embodiments of the present disclosure are not necessarily limited thereto. In some embodiments, the terminal 110 may or may not perform beamforming. In addition, the base station 120 may or may not perform the beamforming. That is, only one of the terminal 110 and the base station 120 may perform the beamforming, or both the terminal 110 and the base station 120 may not perform the beamforming.

In the present disclosure, a beam, which means a spatial flow of a signal in a wireless channel, may be formed by one or more antennas (or antenna elements), and this formation process may be referred to as the beamforming. The beamforming may include at least one of analog beamforming or digital beamforming (e.g., Precoding). A reference signal transmitted based on the beamforming may include, for example, a demodulation-reference signal (DM-RS), a channel state information-reference signal (CSI-RS), a synchronization signal/physical broadcast channel (SS/PBCH), and a sounding reference signal (SRS). In addition, as a configuration for each reference signal, an information element (IE) such as a CSI-RS resource or an SRS-resource may be used, and this configuration may include information associated with the beam. Information associated with the beam may mean whether a corresponding configuration (e.g., CSI-RS resource) uses the same spatial domain filter as another configuration (e.g., another CSI-RS resource in the same CSI-RS resource set), or a different spatial domain filter, or which reference signal is quasi-co-located (QCL) with, and if it is QCL, which type (e.g., QCL type A, B, C, and D).

Hereinafter, in order to describe embodiments, a terminal may be referred to as a UE 110, and a base station may be referred to as a gNB 120.

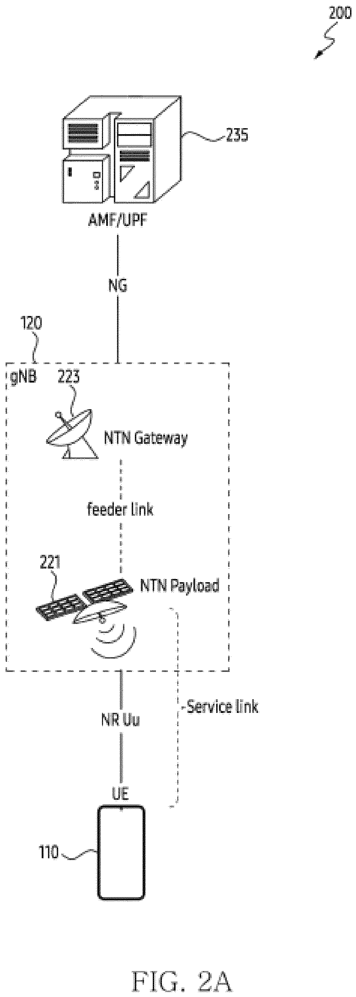

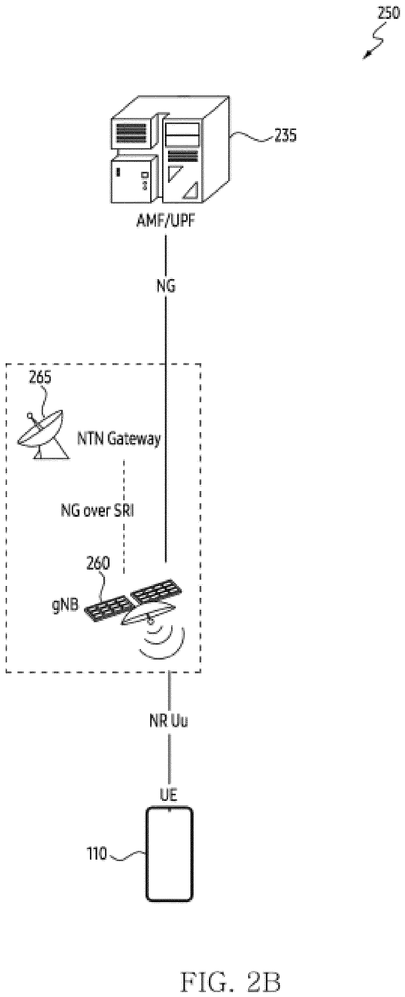

FIGS. 2A and 2B illustrate an example of a non-terrestrial network (NTN). In FIG. 2A, an example of the non-terrestrial network (NTN) using a transparent satellite is illustrated. In FIG. 2B, an example of the non-terrestrial network (NTN) using a regenerative satellite is illustrated. The NTN means a NG-RAN that provides non-terrestrial NR access to a UE (e.g., a UE 110) through an NTN payload and an NTN gateway mounted on an airborne or space-borne NTN vehicle. The NG-RAN may include one or more gNB (e.g., a gNB 120).

Referring to FIG. 2A, an NTN 200 indicates a network environment according to the transparent satellite. The NTN 200, which is the gNB 120, may include an NTN payload 221 and an NTN gateway 223. The NTN payload 221 is a network node mounted on a phase or a high altitude platform station (HAPS) and the network node provides a connection function between a service link (described later) and a feeder link (described later). The NTN gateway 223 is an earth station disposed on a surface of the earth that provides a connection to the NTN payload 221 using the feeder link. The NTN gateway 223 is a transport network layer (TNL) node. The NTN 200 may provide the non-terrestrial NR access to the UE 110. The NTN 200 may provide the non-terrestrial NR access to the UE 110 through the NTN payload 221 and the NTN gateway 223. A link between the NTN payload 221 and the UE 110 may be referred to as the service link. A link between the NTN gateway 223 and the NTN payload 221 may be referred to as the feeder link. The feeder link may correspond to a wireless link.

The NTN payload 221 may receive wireless protocol data from the UE 110 through the service link. The NTN payload 221 may transparently transmit the wireless protocol data to the NTN gateway 223 through the feeder link. Accordingly, the NTN payload 221 and the NTN gateway 223 may be seen as one gNB 120 from a perspective of the UE 110. The NTN payload 221 and the NTN gateway 223 may communicate with the UE 110 through a Uu interface, which is a general wireless protocol. That is, the NTN payload 221 and the NTN gateway 223 may perform wireless protocol communication with the UE 110 like one gNB 120. The NTN gateway 223 may communicate with a core network entity 235 (AMF or UPF) through an NG interface.

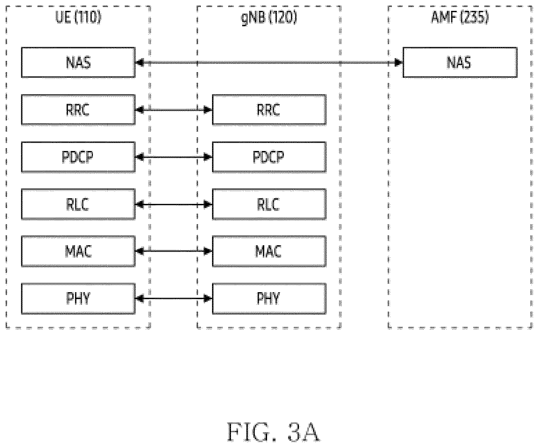

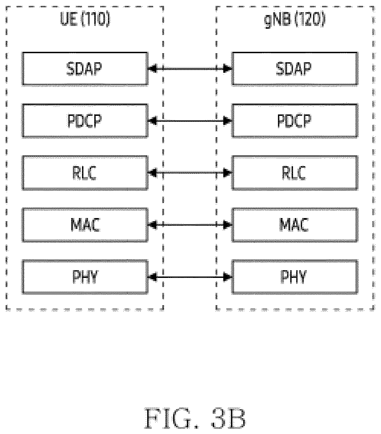

According to an embodiment, the NTN payload 221 and the NTN gateway 223 may use a wireless protocol stack in a control plane of FIG. 3A to be described later. In addition, according to an embodiment, the NTN payload 221 and the NTN gateway 223 may use the wireless protocol stack in a user plane of FIG. 3B.

In FIG. 2A, one NTN payload 221 and one NTN gateway 223 included in the gNB 120 are described, but embodiments of the present disclosure are not limited thereto. For example, a gNB may include a plurality of NTN payloads. In addition, for example, an NTN payload may be provided by a plurality of gNB. That is, an implementation scenario illustrated in FIG. 2A is an example and does not limit embodiments of the present disclosure.

Referring to FIG. 2B, an NTN 250 illustrates a network environment according to the regenerative satellite. The NTN 250 may include a satellite 260 operating as the gNB 120. The satellite 260 indicates a space-borne vehicle equipped with a regenerative payload communication transmitter disposed in a low-earth orbit (LEO), a medium-earth orbit (MEO), or a geostationary earth orbit (GEO). The satellite 260 may be referred to as a regenerative payload or a regenerative satellite. The satellite 260 indicates a payload configured to convert and amplify an uplink RF signal before transmitting the uplink RF signal to a downlink, and the conversion of the signal may mean digital processing capable of including demodulation, decoding, re-encoding, re-modulation and/or filtering. The NTN 250 may include an NTN gateway 265, which is an entity connected to the satellite 260 and disposed on the ground. The NTN gateway 265 is an earth station, disposed on a surface of the earth, that provides a connection to the satellite 260 using the feeder link. The NTN 250 may provide the non-terrestrial NR access to the UE 110. The NTN 250 may provide the non-terrestrial NR access to the UE 110 through the satellite 260 and the NTN gateway 265.

The satellite 260 may be configured to reproduce signals received from the Earth. The Uu interface may be defined between the satellite 260 and the terminal 110. A satellite radio interface (SRI) on the feeder link may be defined between the satellite 260 and the NTN gateway 265. Although not illustrated in FIG. 2B, the satellite 260 may provide inter-satellite links (ISL) between satellites. The ISL may be a transmission link between satellites, and an ISL may be a wireless interface (e.g., an XN interface) or an optical interface defined in a 3GPP, or not defined in the 3GPP. The satellite 260 may communicate with the core network entity 235 (AMF or UPF) through an NG interface, based on the NTN gateway 265. According to an embodiment, the satellite 260 may use the wireless protocol stack in the control plane of FIG. 3A to be described later. In addition, according to an embodiment, the satellite 260 may use the wireless protocol stack in the user plane of FIG. 3B.

In FIG. 2B, the satellite 260 operating as the gNB 120 is described, but embodiments of the present disclosure are not limited thereto. The gNB 120 according to embodiments may be implemented as a distributed deployment using a centralized unit (CU) configured to perform a function of upper layers of an access network (e.g., packet data convergence protocol (PDCP), or radio resource control (RRC)) and a distributed unit (DU) configured to perform a function of lower layers. An interface between the CU and the distributed unit (DU) may be referred to as an F1 interface. The centralized unit (CU) may be in charge of a function of a layer upper than the DU, by being connected to one or more DUs. For example, the CU may be in charge of a function of radio resource control (RRC) and packet data convergence protocol (PDCP) layers, and the DU and a radio unit (RU) may be in charge of a function of a lower layer. DU may be in charge of a function of radio link control (RLC), media access control (MAC), and physical (PHY) layers. In this distributed disposition, the satellite 260 may be used as the CU or the DU constituting the gNB 120.

FIG. 3A illustrates an example of a control plane (C-plane). Hereinafter, at least a portion of descriptions of a gNB 120 may be understood as pertaining to a satellite 260.

Referring to FIG. 3A, in the C-plane, a UE 110 and an AMF 235 may perform non-access stratum (NAS) signaling. In the C-plane, the UE 110 and the gNB 120 may communicate according to a protocol specified in each of a RRC layer, a PDCP layer, a RLC layer, a MAC layer, and a PHY layer.

In NTN access, a main function of the RRC layer may include at least a portion of the following functions.
- Broadcasting access stratum (AS) and NAS related system information
- Paging initiated by 5G Core (5GC) or Next Generation-Radio Access network (NG-RAN)
- Establishment, maintenance, and release of RRC connection between UE and NG-RAN, including, more specifically, control over RLC, MAC, and PHY, including:
   - Addition, modification and release of Carrier Aggregation
   - Addition, modification and release of dual connectivity between NR or E-UTRA and NR.
- Security function including Key Management;
- Establishment, configuration, maintenance and release of SRB (Signaling Radio Bearer) and DRB (Data Radio Bearer)
- Movement function including:
   - Transferring handover and context;
   - Control UE cell selection and reselection and cell selection and reselection;
   - Mobility between RATs.
- Quality of service (QoS) management function;
- UE measurement report and report control;
- Radio link failure detection and recovery
- Message transmission from/to UE to/from NAS.

In the NTN access, a main function of the PDCP layer may include at least a portion of the following functions.
- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink.

In the NTN access, a main function of the RLC layer may include at least a portion of the following functions.
- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

In the NTN access, the MAC layer may be connected to multiple RLC layer devices configured in a terminal, and a main function of the MAC may include at least a portion of the following functions.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

In the NTN access, the physical layer may perform operations of channel coding and modulating upper layer data, converting into an OFDM symbol and transmitting it to a wireless channel, or demodulating and channel decoding the OFDM symbol received via the wireless channel and transmitting it to the upper layers.

FIG. 3B illustrates an example of a user plane (U-plane). Hereinafter, at least a portion of descriptions of the gNB 120 may be understood as pertaining to the satellite 260.

Referring to FIG. 3B, in U-plane, a UE 110 and a gNB 120 may communicate according to a protocol specified in each of a SDAP layer, a PDCP layer, a RLC layer, a MAC layer, and a PHY layer. For the PDCP layer, the RLC layer, the MAC layer, and the PHY layer, except for the SDAP layer, a description of FIG. 3A may be referenced.

In the NTN access, the SDAP layer may provide a QoS flow of 5GC. A single protocol entity of a SDAP may be configured for each individual PDU session, and a function of the SDAP layer may include at least a portion of the following functions.
- Mapping between QoS flow and data radio bearer;
- Display of QoS flow identifier (ID) (QFI) in both DL and UL packets.

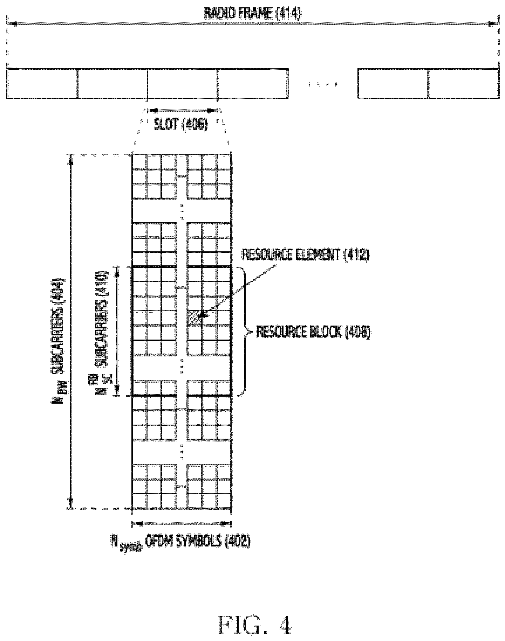

FIG. 4 illustrates an example of a resource structure of a time-frequency domain supported by a wireless communication system to which an embodiment proposed in the present specification may be applied. FIG. 4 illustrates a basic structure of a time-frequency domain corresponding to a radio resource domain in which data channel or a control channel is transmitted in downlink or uplink in a 5G NR system to which the present embodiment may be applied.

Referring to FIG. 4, a horizontal axis indicates a time domain, and a vertical axis indicates a frequency domain. A minimum transmission unit in the time domain is an OFDM symbol, and one slot 406 may be configured with N_{symb} OFDM symbols 402 . Referring to FIG. 4, in the wireless communication system to which the present invention is applied, one radio frame 414 may be defined as having a length of 10 ms, which is configured with 10 subframes having the same length of 1 ms. Additionally, one radio frame 414 may be divided into 5 ms half-frame, and each half-frame includes 5 subframes. In FIG. 4, a slot 406 is configured with 14 OFDM symbols, but a length of a slot may vary according to subcarrier spacing. For example, in case of Numerology having 15-khz subcarrier spacing, the slot is configured with a length of 1 ms, which is the same length as a subframe. In contrast, in case of Numerology having a 30 kHz subcarrier spacing, the slot is configured with 14 OFDM symbols, but two slots may be included in one subframe with a length of 0.5 ms.

That is, a subframe and a frame are defined with a fixed time length, and a slot is defined as the number of symbols, so that a time length may vary according to the subcarrier spacing. Referring again to FIG. 4, a radio resource supported by the wireless communication system to which the invention proposed in the present specification may be applied may be configured with a symbol, which is a plurality of time resources, and a sub-carrier, which is a plurality of frequency resource, and each of the time resources and the frequency resources may be expressed by a two-dimensional resource grid. In FIG. 4, one quadrilateral, which is the smallest physical resource being configured with one sub-carrier and one symbol in a resource grid, is called a resource element (RE) 412.

In the wireless communication system to which the invention proposed in the present specification may be applied, a minimum transmission unit in the frequency domain is a subcarrier, and a carrier bandwidth constituting the resource grid consists of N_{BW} subcarriers 404.

In a time-frequency domain, a basic unit of a resource, which is the resource element (hereinafter referred to as 'RE') 412, may be indicated as an OFDM symbol index and a subcarrier index. A resource block 408 may include a plurality of resource elements 412. In the wireless communication system to which the invention proposed in the present specification may be applied, the resource block 408 (or a physical resource block (hereinafter referred to as 'PRB')) may be defined as N_{symb} consecutive OFDM symbols in the time domain and N_{SC}^{RB} consecutive subcarriers in the frequency domain. In a NR system, the resource block (RB) 408 may be defined as N_{SC}^{RB} consecutive subcarriers 410 in the frequency domain. One RB 408 includes N_{SC}^{RB} REs 412 in a frequency axis.

In general, a minimum transmission unit of data is RB and the number of subcarriers is N_{SC}^{RB} =12. The frequency domain may include common resource blocks (CRBs). In a bandwidth part (BWP) on the frequency domain, a physical resource block (PRB) may be defined. The CRB and PRB numbers may be determined according to subcarrier spacing. A data rate may increase in proportion to the number of RBs scheduled to a terminal.

In the NR system, in case of an FDD (frequency division duplex) system that operates a downlink and an uplink separately by frequency, a downlink transmission bandwidth and an uplink transmission bandwidth may be different from each other. A channel bandwidth indicates a radio frequency (RF) bandwidth corresponding to a system transmission bandwidth. Table 1 indicates a portion of a corresponding relationship between the system transmission bandwidth, the subcarrier spacing (SCS) and the channel bandwidth defined in the NR system, in a frequency band (e.g., frequency range (FR) 1 (410 MHz to 7125 MHz)) lower than an upper limit (e.g., 7.125 GHz) defined in a standard. Additionally, Table 2 indicates a portion of a corresponding relationship between a transmission bandwidth, the subcarrier spacing, and the channel bandwidth defined in the NR system in a frequency band (e.g., FR2 (24250 MHz to 52600 MHz)) higher than a lower limit (e.g., 24.25 GHz) or FR2-2 (52600 MHz - 71,000 MHz) defined in a standard. For example, the transmission bandwidth of the NR system having a 100 MHz channel bandwidth at 30 kHz subcarrier spacing consists of 273 RBs. In Table 1 and Table 2, N/A may be a bandwidth-subcarrier combination that is not supported by the NR system.

**[Table 1]**

| Channel bandwidth [MHz] | SCS | 5 | 10 | 20 | 50 | 80 | 100 |
|---|---|---|---|---|---|---|---|
| Transmission bandwidth configuration N_{RB} | 15kHz | 25 | 52 | 106 | 207 | N/A | N/A |
| | 30kHz | 11 | 24 | 51 | 133 | 217 | 273 |
| | 60kHz | N/A | 11 | 24 | 65 | 107 | 135 |

**[Table 2]**

| Channel bandwidth [MHz] | SCS | 50 | 100 | 200 | 400 |
|---|---|---|---|---|---|
| Transmission bandwidth configuration N_{RB} | 60kHz | 66 | 132 | 264 | N/A |
| | 120kHz | 32 | 66 | 132 | 264 |

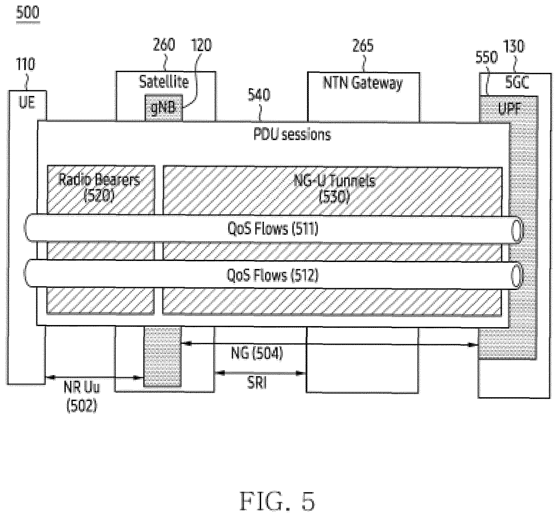

FIG. 5 illustrates an example of a network structure for an NTN. A satellite 260 may be mounted on a space vehicle or an aerial vehicle to provide a structure, power, a command, telemetry, posture control (corresponding HAPS) for a satellite, an appropriate thermal environment, and radiation shielding. In FIG. 5, an example in which the satellite 260, as a regenerative payload, operates as a full base station (e.g., a gNB 120) is described.

Referring to FIG. 5, the satellite 260 may operate as the gNB 120. The gNB 120 may communicate with a terminal 110 or may communicate with a core network entity 130. In FIG. 5, a UPF 550 is illustrated as the core network entity 130. An NR Uu interface 502 may be used between the satellite 260 and the terminal 110. According to an embodiment, at least one radio bearer 520 may be generated between the satellite 260 and the terminal 110. For example, the radio bearer 520 may include a data radio bearer (DRB). For example, the radio bearer 520 may include a signaling radio bearer (SRB). An NG interface 504 may be used between the satellite 260 and a core network entity (e.g., AMF and UPF). For example, an N3 interface may be used between the satellite 260 and the UPF. For example, an N2 interface may be used between the satellite 260 and the AMF. According to an embodiment, a traffic tunnel may be generated between the satellite 260 and the core network entity 130. For example, an NG-U tunnel 530 may be generated between the satellite 260 and a UPF 550.

A packet data unit (PDU) session 540 may be generated between a UE 110 and the core network entity 130 (e.g., the UPF 550). The PDU session 540 may be used to provide an end-to-end user plane connection between the terminal 110 and a data network through the UPF 550. The PDU session 540 may support one or more quality of service (QoS) flows. For example, the PDU session 540 may support a first QoS flow 511 and a second QoS flow 512. In a user plane, the radio bearer 520 may be mapped to a QoS flow (e.g., a first QoS flow 511 and a second QoS flow 512). According to an embodiment, the satellite 260, which is the gNB 120, may perform mapping between the DRB and the QoS flow.

Although not illustrated in FIG. 5, operation and maintenance (O&M) may be used to provide a wireless access network through the satellite 260. The O&M may provide one or more parameters related to an NTN 500 to the gNB 120 (e.g., the satellite 260). For example, operation and maintenance (O&M) 510 may provide at least following NTN related parameters to the gNB 120 for operation.
a) Earth fixed beams: for each beam provided by given NTN payload:
   - Cell identifier mapped to beam (NG and Uu)
   - Reference position of cell (e.g., center and range of cell).
b) Quasi earth fixed beams: for each beam provided by given NTN payload:
   - Cell identifier (NG and Uu) and time window mapped to beam;
   - Reference position of cell/beam (e.g., center and range of cell)
   - Time window of continuous switch-over (feather link, service link)
   - Identifier and time window of all satellites and NTN gateways that provide service.
c) Earth moving beams: for each beam provided by given NTN payload:
   - Uu cell identifier mapped to beam, mapping information on fixed geographic area reported to NG, information on movement of foot-print of beam on the Earth;
   - Elevation for NTN payload;
   - Continuous service schedule of NTN gateways/gNBs;
   - Continuous switch-over schedule (feather link, service link).

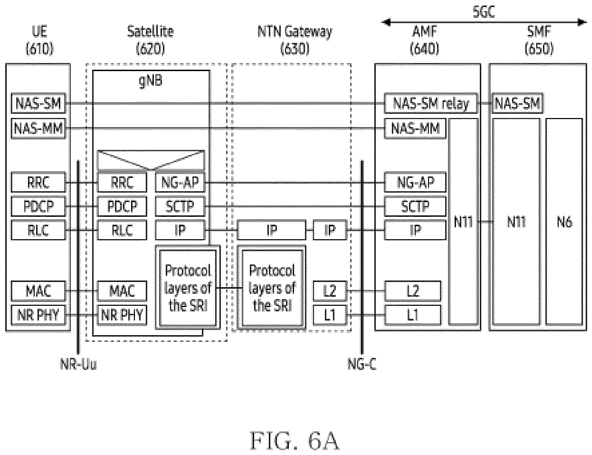

FIG. 6A illustrates an example of a control plane of a regenerative satellite (e.g., the satellite 260).

Referring to FIG. 6A, a UE 610 may support a protocol of a PHY layer, a MAC layer, a RLC layer, a PDCP layer, and a RRC layer. A satellite 620, which is a gNB, may support the protocol of the PHY layer, the MAC layer, the RLC layer, the PDCP layer, and the RRC layer. For the satellite 620, a description of the satellite 260 may be referenced. A description of the protocol of each layer, the description of FIG. 3A may be referenced. An interface between the UE 610 and the satellite 620 may be a Uu interface.

The satellite 620, which is a gNB mounted on a board or a portion of the gNB, may perform an NG-RAN protocol function. The satellite 620 may perform communication (e.g., IP communication) with an NTN gateway 630 located on the ground through an SRI. The satellite 620 may access 5GC through the NTN gateway 630. As a network entity for the 5GC, an AMF 640 (e.g., AMF 235) and an SMF 650 are exemplified. The satellite 620 may support a protocol of an NG-AP layer, a stream control transmission protocol (SCTP) layer, and an IP layer for communication with the 5GC. The NG-AP layer may be used through an NTN gateway over a SCTP between the AMF 640 being a 5GC entity, and the satellite 620. NAS signaling between the UE 610 and the AMF 640 may be performed through the satellite 620 and the NTN gateway 630. The NAS signaling may include a NAS-mobility management (NAS-MM) interface for the AMF 640. The NAS signaling may include a NAS-SM relay and/or a NAS- session management (SM) for the SMF 650. The NAS signaling may be transmitted through an NG-AP layer protocol between the AMF 640, which is the 5GC entity, and the satellite 620, via the NTN gateway 630.

In FIG. 6A, an example in which a satellite operates as a full gNB is described, but embodiments of the present disclosure are not limited thereto. As a non-limiting example, the satellite may operate as a gNB-DU according to functional separation. Accordingly, the satellite may be configured to support a protocol of the RLC layer, the MAC layer, and the PHY layer.

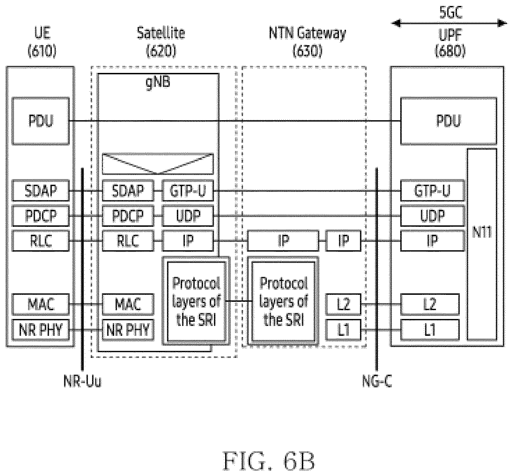

FIG. 6B illustrates an example of a user plane of a regenerative satellite (e.g., the satellite 260).

Referring to FIG. 6B, the UE 610 may support a protocol of the PHY layer, the MAC layer, the RLC layer, the PDCP layer, and an SDAP layer. The satellite 620, which is the gNB, may support the protocol of the PHY layer, the MAC layer, the RLC layer, the PDCP layer, and the SDAP layer. As a description of the protocol of each layer, the description of FIG. 3B may be referenced. The interface between the UE 610 and the satellite 620 may be the Uu interface.

The satellite 620, which is the gNB mounted on a board, may perform the NG-RAN protocol function. The satellite 620 may perform communication (e.g., IP communication) with the NTN gateway 630 located on the ground through the SRI. The satellite 620 may access the 5GC through the NTN gateway 630. An UPF 680 is exemplified as the network entity for the 5GC. The satellite 620 may support protocols of a General Packet Radio Service (GPRS) tunneling protocol-user plane (GTP-U) layer, a user datagram protocol (UDP) layer, and the IP layer for communication with the 5GC. A PDU session (e.g., the PDU session 540 of FIG. 5) between the UE 610 and the UPF 680 may be generated. A protocol stack of the SRI may be used to transmit a UE user plane between a satellite and an NTN-gateway. Signals on the PDU session may be transmitted through the NTN gateway 630 between the UPF 680, which is the 5GC, and the satellite 620 via a GTP-U tunnel.

In FIG. 6B, an example in which a satellite operates as a full gNB is described, but embodiments of the present disclosure are not limited thereto. As a non-limiting example, the satellite may operate as a gNB-DU according to functional separation. Accordingly, the satellite may be configured to support protocols of the RLC layer, the MAC layer, and the PHY layer.

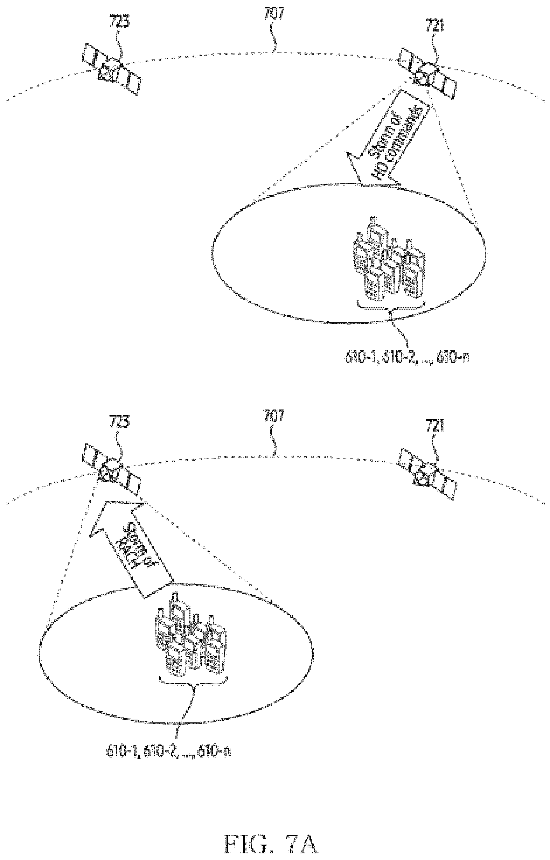

FIG. 7A illustrates an example of a group handover in a satellite communication.

Referring to FIG. 7A, satellites moving on the same orbit 707 may serve terminals. For example, the satellites may include a first satellite 721 and a second satellite 723. For the first satellite 721 and the second satellite 723, a description of a satellite 620 may be referenced. The satellites may move from left to right on FIG. 7A along an orbit 707. The terminals (e.g., UE 610-1, UE 610-2, ..., and UE 610-n) may be serviced through a cell provided by the first satellite 721. As the first satellite 721 moves repeatedly along a designated orbit, the terminals (e.g., UE 610-1, UE 610-2, ..., UE 610-n) serviced by the first satellite 721 should inevitably perform a handover to a new cell.

For example, it is assumed in a case that multiple terminals receiving service from a ground fixed cell should move to a new cell at cell stop time or a case that a satellite moves to a point where a gateway needs to be switched. In the above-described cases, all terminals are required to access new cells. As the satellite providing a serving cell to the terminals is switched from the first satellite 721 to the second satellite 723, a cell (e.g., a PCell) may be changed even when a terminal does not move. In the cases, providing an individual handover command to each UE is inefficient in terms of resource utilization as it results in large signaling overhead. In addition, high signaling overhead in terms of system throughput may cause a result in providing a handover command too fast or may cause radio link failure (RLF). Therefore, a message and information according to embodiments of the present disclosure may be used to reduce signaling overhead between the terminal and a source cell (e.g., a cell of the first satellite 721) in the handover command. According to an embodiment, in order to reduce signaling overhead, a time-based conditional handover may be configured. The network may know a time range in which the terminal should be handed over, and may cause the terminal to initiate the handover through a specific trigger condition (e.g., a time range and RSRP-based event). Furthermore, the message and the information according to embodiments of the present disclosure may be used to reduce congestion to a target cell. According to an embodiment, in order to reduce congestion of the target cell, a RACH-less handover may be used. According to an embodiment, transmission of a random access preamble for a target cell may be initiated by introducing a random backoff mechanism.

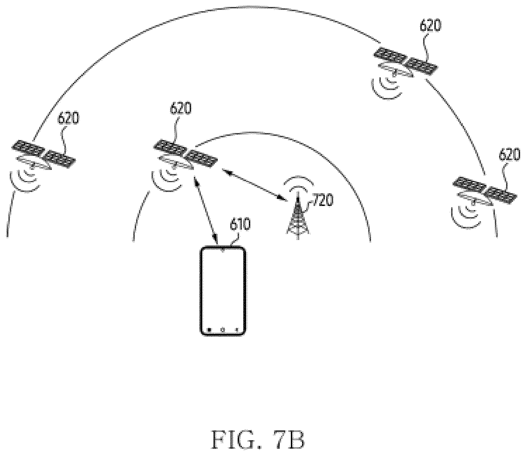

FIG. 7B illustrates an example of a handover of a non-terrestrial base station (e.g., the satellite 620).

Referring to FIG. 7B, aspects of a handover in the satellite 620 may be performed not only a handover between a satellite and another satellite (e.g., a handover between the first satellite 721 and the second satellite 723), but also a handover between a satellite and a terrestrial base station (e.g., a base station 720). For a handover between a satellite and another satellite, an interface between satellites may be referred to as an inter-satellite link (ISL). For example, in case that each satellite operates as a gNB, the interface between the satellites may be referred to as an XN interface. Since a satellite have a geographical characteristic of orbiting a designated orbit, a network may provide more efficient mobility management (e.g., cell selection, and a handover) to a terminal (e.g., a UE 610) based on an orbit of the satellite. In the handover between satellites, as well as the handover between the satellite and the terrestrial base station, as a satellite moves away from a specific area by moving along an orbit, the terrestrial base station instead of the satellite may provide a communication service to an area the satellite already served.

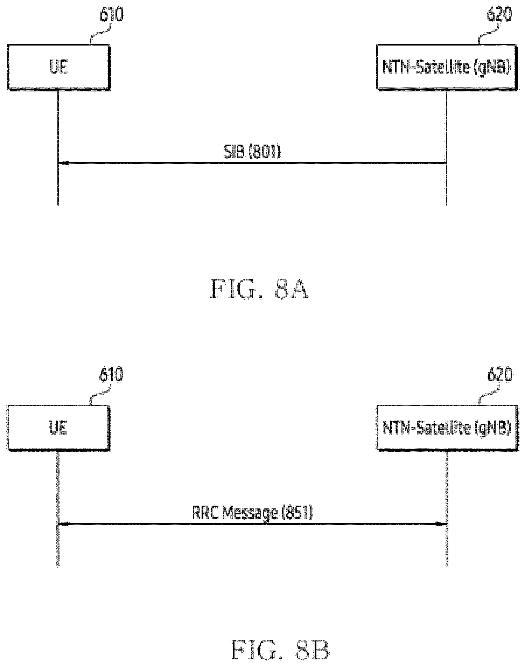

FIG. 8A illustrates an example of system information for an NTN.

Referring to FIG. 8A, in an operation 801, a satellite 620 may broadcast system information. The system information may include information related to a satellite. A UE 610 may receive the system information. The UE 610 may receive the system information from the satellite 620. According to an embodiment, the system information, which is a system information block (SIB) 801, may be a previously defined SIB (e.g., SIB 19, SIB 1, and SIB 2), or a separately defined SIB (e.g., SIB extend (SIBx)) for a regenerative satellite. For example, the SIBx may include information as shown in the following table.

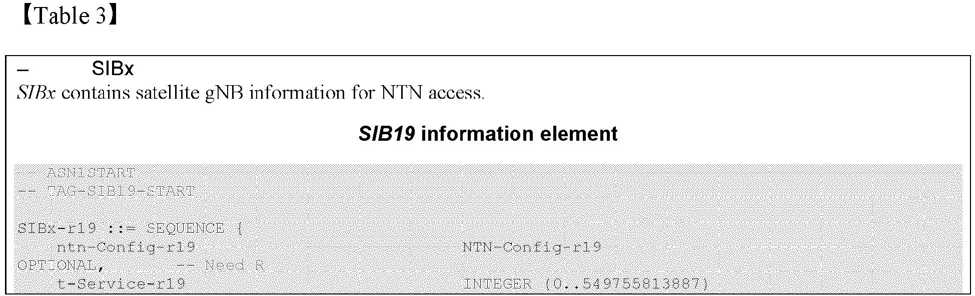

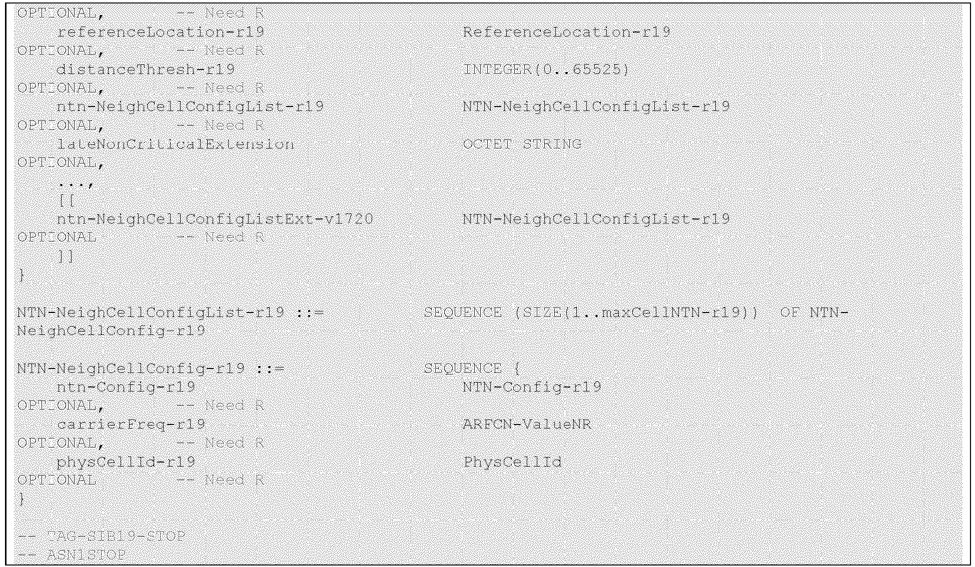

'ntn-Config' indicates parameters for accessing a wireless network through NTN access, and the following table (e.g., Table 4) may be referenced. 't-service' may indicate time information on when a cell provided through an NTN quasi-Earth fixed system will stop a service for an area currently in charge. 'referenceLocation' indicates a reference location of a serving cell provided through the NTN quasi-Earth fixed system. 'distanceThresh' may indicate a distance from the reference location of the serving cell and may be used for location-based measurement in a RRC IDLE or RRC INACITVE state. 'ntn-NeighCellConfigList' may indicate information on a neighboring cell for a cell provided through a satellite (e.g., the satellite 620).

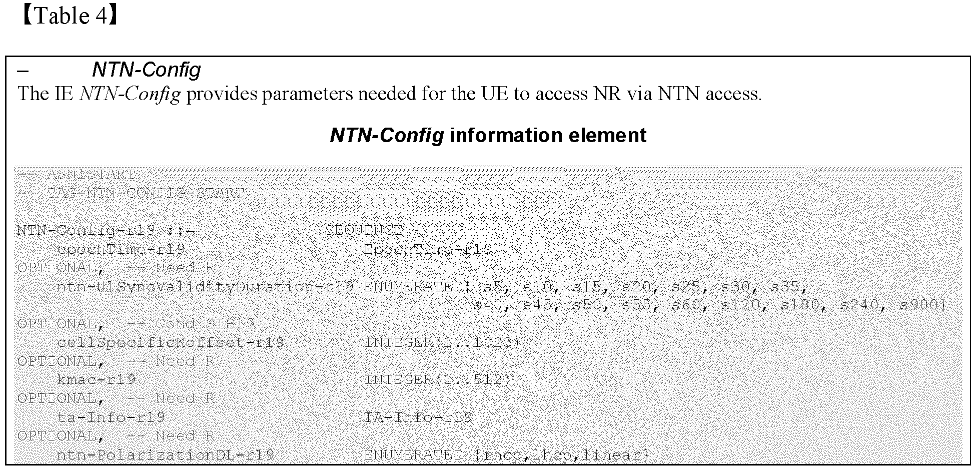

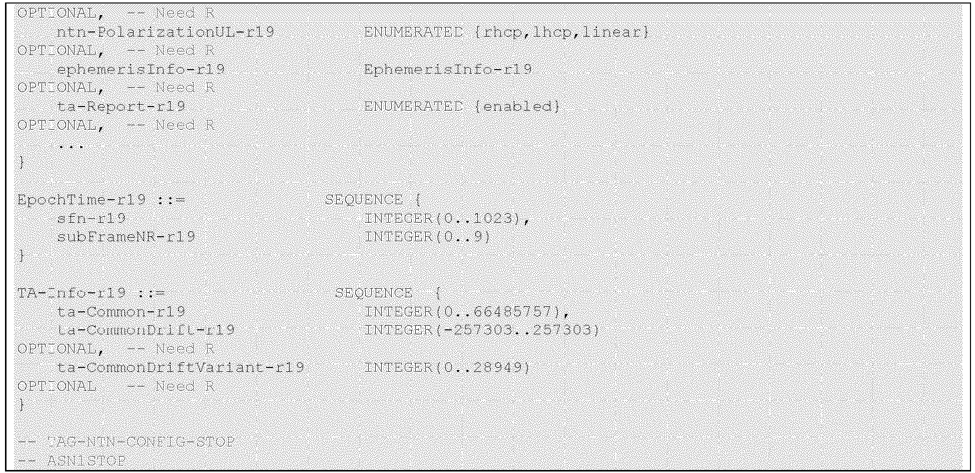

'epochTime' indicates epoch time of NTN support information. In case of providing explicitly through an SIB or providing through dedicated signaling, the epoch time may indicate start time of a DL subframe, and may display a number of a subframe signaled together with a system frame number (SFN) and support information. As a non-limiting example, for higher granularity, 'epochTime' may further include an information element (IE) indicating a symbol in addition to the subframe. The IE may indicate one of 0 to 13 and may indicate one of 14 symbols.

'ntn-UlSyncValidityDuration' is a validity duration for auxiliary information (e.g., ephemeris information, and common TA parameters) set by a network. In other words, the duration indicates maximum time for which support information may be applied without obtaining new NTN support information. The time duration may start from the epoch time. "cellSpecificKoffset" indicates a scheduling offset used for timing relationships modified for the NTN. 'kmac' indicates a scheduling offset used in case that downlink timing and uplink timing do not match. 'ta-Info' may include information for a timing advance (TA). The information for the TA may include 'ta-common', a common TA controlled by a network, 'ta-common Drift' indicating a drift rate of the common TA, and 'ta-common DriftVariant' indicating a variation of the drift rate. 'ntn-polarizationDL' and 'ntn-polarizationUL' represent polarization information in a DL and a UL, respectively, 'ephemerisInfo' may indicate the ephemeris information, and the following table (e.g., Table 5) may be exemplified. 'ta-Report' indicates that TA reporting is activated during RRC connection establishment, RRC connection resume, and RRC connection re-establishment.

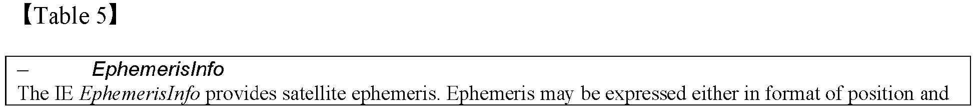

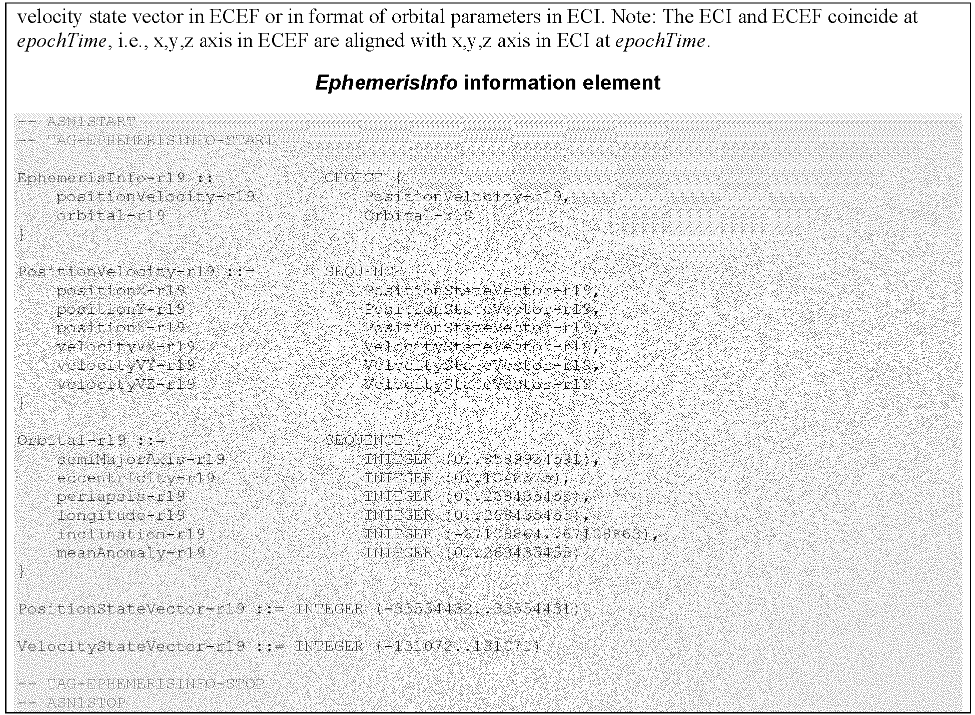

'positionX', 'positionY', and 'positionZ', respectively, indicate a position state vector of earth-centered and earth-fixed (ECEF) in a xyz coordinate system. A unit indicates meter, and one step indicates 1.3 meters (m). For example, an actual value may be a field value* 1.3. 'velocityX', 'velocityY', and 'velocity/', respectively, indicates a velocity state vector of the ECEF in the xyz coordinate system. One step indicates 0.06 meters/seconds (m/s). For example, an actual value may be a field value*0.06. 'semiMajorAxis' is a semi-major axis, `ecentricit' is an eccentricity, 'periapsis' is a periapsis, 'longitude' is a longitude, 'inclination' is an inclination, and 'meanAnomaly' indicates a ratio of an elapsed elliptic orbital period, after an object orbiting a mean anomaly passes periapsis.

Parameters transmitted through the system information may include various satellite-related information in addition to IEs defined in Table 3 to Table 5.

### 1. Satellite groups and identification information

The satellite 620 may transmit identification information for a group (hereinafter, referred to as a satellite group) including the satellite 620 to the UE 610. According to an embodiment, satellites orbiting the same orbit may be divided into the same satellite group. For example, the satellites of the same satellite group may share the same orbit. As an example, satellites of the same satellite group may have the same orbital information (e.g., an 'Orbital-r19' IE) in the ephemeris information. As a non-limiting example, instead of including orbital information for each satellite, the system information may include specific orbital information in a satellite group. According to another embodiment, satellites using the same NTN gateway (e.g., an NTN gateway 630) may be divided into the same group. The NTN gateway may be used in a fixed position on the ground. Therefore, satellites connected to the NTN gateway may be understood to be disposed within a certain distance from the NTN gateway. Therefore, satellites concentrated in a specific area may be commonly connected to the NTN gateway. As a satellite operates as an independent base station, one or more cells may be provided. Therefore, a satellite may also be required to have a unique ID in addition to a physical cell ID. For example, a gNB ID may be used to identify the satellite. For another example, a gNB-DU ID may be used to identify the satellite. For another example, a separately defined ID may be used to identify the satellite. The satellite group may be identified through a satellite group ID. For example, a satellite may be identified through the satellite group ID and a satellite ID within a group. For another example, a satellite may be assigned an individual satellite ID separate from a group. The satellite 620 may broadcast information on the satellite 620 or information on a satellite included in the same group as the satellite 620 as system information. The UE 610 may recognize information on surrounding satellites through identification information of the satellite 620 or identification information of a satellite group to which the satellite 620 belongs.

### 2. Class information

Referring to Table 5, in indicating a position of the ephemeris information, approximately 26-bits information is required for each axis (e.g., in each of x-axis, y-axis, and z-axis). As the number of satellites increases, many other satellites may be located in an orbit of the Earth in addition to a satellite that currently provide a serving cell. Therefore, in indicating the position of each satellite, requirement of approximately 84-bits (26-bits per satellite) per satellite for an xyz coordinate system in three-dimensional space may cause a burden on a satellite configured to perform operations according to a communication protocol. Therefore, in order to reduce a burden of satellites operation and signal processing, a class may be operated instead of a specific value. For example, a range of a position state vector 'PositionStateVector-r19' is "(-33554432..33554431)," but it may be divided into four classes as shown in Table 6 below.

**[Table 6]**

| Category | Field | Example of related information |
|---|---|---|
| POSITION CLASS #1 | 00 | First range (e.g., -33,554,432∼-16,777,217) |
| POSITION CLASS #2 | 01 | Second range (e.g., -16,777,216∼-1) |
| POSITION CLASS #3 | 10 | Third range (0∼16,777,215) |
| POSITION CLASS #4 | 11 | Fourth range (16,777,216∼33,554,431) |

The satellite 620 may be configured to indicate one of the four classes to the UE 610. In case that the position information of the satellite 620 is designated into four classes as shown in the Table 6, as only two bits are sufficient to identify four classes, so the number of bits required to indicate a position state vector of the satellite 620 on each axis of a three-dimensional coordinate system may be reduced from 26-bits to 2-bits (22=4). In the example, an example in which four classes are operated is illustrated, but more classes may be operated. For example, when 64 classes are operated, the number of bits required to indicate the position state vector on each axis may be reduced from 26-bits to 6-bits. On the other hand, just because the class is set, a resolution of a value indicating a position does not decrease, it may be understood that a method of instruction is simplified. That is, an operator operating the satellite may set a fixed value to a position within a range of the class.

Referring to Table 5, in indicating a velocity of ephemeris information, approximately 18-bits information is required for each axis (e.g., each of x-axis, y-axis, and z-axis). As the number of satellites increases, many other satellites are located in the orbit of the Earth the satellite that currently provide the serving cell to UEs. Therefore, in indicating a velocity, approximately 54-bits are required per satellite for the xyz coordinate system, which may cause a burden on the satellite configured to perform operations according to the communication protocol. In order to reduce a burden of system operation and signal processing, the class may be operated instead of a specific value. For example, a range of a velocity state vector 'VelocityStateVector-r19' is "(-131072... 131071)", but may be divided into four classes as shown in Table 7 below.

**[Table 7]**

| Category | Field | Example of related information |
|---|---|---|
| VELOCITY CLASS #1 | 00 | First range (e.g., -131072∼ - 65,537) |
| VELOCITY CLASS #2 | 01 | Second range (e.g., -65,536∼-1) |
| VELOCITY CLASS #3 | 10 | Third range (0∼65,535) |
| VELOCITY CLASS #4 | 11 | Fourth range (65,536∼131071) |

The satellite 620 may be configured to indicate one of the four classes to the UE 610. Accordingly, the number of bits required to indicate the velocity state vector on each axis (x-axis, y-axis, and z-axis) constituting a three-dimensional coordinate may be reduced from 18-bits to 2-bits. In the example, an example in which four classes are operated is illustrated, but more classes may be operated. For example, when 64 classes are operated, the number of bits required to indicate the velocity state vector on each axis may be reduced from 18-bits to 6-bits. On the other hand, just because the class is set, a resolution of a value indicating a velocity does not decrease, but it may be understood that a method of instructing is simplified. That is, the operator operating the satellite may set a fixed value at a velocity within a range of the class.

Referring to Table 5, in indicating ephemeris information, from 20 bits to 33 bits are required to indicate each of 'semiMajorAxis', 'eccentricity', 'periapsis', 'longitude', 'inclination', and 'meanAnomaly'. As the number of satellites increases, many other satellites are located in the orbit of the Earth in addition to the satellite that currently provide the serving cell to UEs. That is, in indicating ephemeris information for one satellite, more than 100 bits of information are required. In order to include more simplified information, a class for orbital information may be defined. For example, an orbital class may be defined as shown in Table 8 below.

**[Table 8]**

| Category | Example of related information |
|---|---|
| ORBIT CLASS #1 | First range |
| ORBIT CLASS #2 | Second range |
| ORBIT CLASS #3 | Third range |
| ORBIT CLASS #4 | Fourth range |
| ORBIT CLASS #5 | Fifth range |

Each orbital class may indicate a type of a combination of predefined 'semiMajorAxis', 'ecentricity', 'periapsis', 'longitude', 'inclination', and 'meanAnomaly'. In the above example, five preset orbital information operated by a satellite operator may be designated as orbital classes, and a satellite (e.g., the satellite 620) operating as a gNB may notify one of the orbital classes to a terminal (e.g., the UE 610) in a cell. As a non-limiting example, according to the orbital class, a group of satellites, that is, a satellite group may be defined. For example, satellites belonging to the same satellite group may have the same orbital class.

### 3. Group handover information

As shown in FIG. 7A, since satellites move along a fixed satellite orbit, a handover of a terminal may be expected on a network side. For example, in case of a satellite located at an altitude of approximately 200 km from the Earth, the satellite moves along a satellite orbit at a ground velocity of approximately 7.8 km/s (4.8 mils) (28,000 km/h (17,000 mph)), so it is expected that a current satellite (e.g., a first satellite 721) serving a specific area (a serving cell) will be changed to another satellite (e.g., a second satellite 723). Furthermore, a handover procedure is expected for each of terminals located in the specific area. Since the satellite provide a wider coverage area than a base station on a general ground, a relatively larger amount of handover procedures may be expected than the handover in the general base station. Therefore, in an embodiment of the present invention, in order to reduce excessive signaling and lower congestion that are capable of occurring instantaneously to UEs in a terrestrial coverage area (a serving cell) receiving a service from the satellite, a satellite (e.g., the first satellites 721 or the satellite 620) providing the serving cell may provide various information to the terminal. For example, the various information may be illustrated as shown in Table 9 below.

**[Table 9]**

| Category | Example of related information |
|---|---|
| Terminal group | Terminal ID (RNTI) set, Terminal group ID, Associated cell ID, Cell set, Associated tracking area (TA) identity |
| Satellite ID (serving satellite) | Satellite ID, Cell ID, gNB ID, gNB-DU ID, Orbital information of ephemeris information, Position information of ephemeris information, PLMN ID, mobile network code (MNC) + mobile country code (MCC) |
| Condition for conditional handover | Event type to trigger handover and parameter information for corresponding event type |
| Service related information | PDU session ID, DRB ID, SRB ID, QoS Flow ID, Logical Channel ID |
| Handover related information (target satellite) | RACHLESS information, valid time information, |
| | Specific limited movement speed limit per terminal |
| | Individual handover timer setting for satellite |
| | Target cell information (Ephemeris information, orbital information, target cell service time information) |
| | Terminal group definition associated with TA |
| Valid time information | Timer |

The system information of FIG. 8A may include at least one of the information in the Table 9. The terminal group of the Table 9 may be used to identify terminals to perform a group handover. A terminal identifying itself as belonging to the terminal group may prepare for the group handover. For example, the terminal may start a timer. According to an embodiment, in case that the terminal does not belong to the terminal group, related information may be ignored. The satellite ID of Table 9 may indicate an ID of a satellite to which the terminal is currently connected. An entity (e.g., an AMF 640 or the satellite 620) of an operator operating a network may reduce an amount of information required in the handover procedure by setting the terminal group and operating the timer for each terminal group. Terminals located in one service area may form groups by being temporally divided. For example, in a first time period, terminals of a first group may perform a handover, and in a second time period following the first time period, terminals of a second group may perform the handover. The service-related information of the Table 9 may be provided for data forwarding (e.g., to prevent disconnection of data transmission that may occur during a handover). The handover related information in the Table 9 may include information on a target satellite adjacent to a current source satellite. By informing the terminal of information on the target satellite in advance, the terminal may be enabled to perform a handover. As a non-limiting example, in the example, a satellite ID may be fixed, and only a physical satellite responsible for the satellite ID may be changed. Therefore, the terminals may continuously perform access through a fixed satellite ID. A satellite (e.g., the first satellite 721) that leaves a specific area may may change the satellite ID to a new ID, and a satellite (e.g., the second satellite 723) entering the specific area may use a new satellite ID used by an existing satellite.

**[Table 10]**

| Category | Example of related information |
|---|---|
| Satellite group | Satellite group ID, Cell group ID, gNB group ID, gNB-DU group ID, Definition of satellite group associated with TA, Shared orbital information, Shared time information, Definition of satellite list information for the same orbit |
| Terminal ID | RNTI, IMSI, Utilize global unique temporary identity (GUTI) |
| Service related information | PDU session ID, DRB ID, SRB ID, QoS Flow ID, Logical Channel ID |
| Handover related information | RACHLESS information, valid time information, |
| | Specifying scenario per terminal (same TA) |
| | Individual handover timer setting for satellite |
| | Candidate cell information (ephemeris information, orbital information, valid candidate cell time information) |
| | Define satellite group associated with specific orbit |

The system information of FIG. 8A may include at least one of the information in the Table 10. A satellite group indicates the satellite group mentioned above. For example, satellites having the same orbit may be defined as one satellite group. For another example, satellites connected to the same NTN gateway may be defined as one satellite group. A serving satellite (e.g., the satellite 620) that provides a current serving cell to the terminal 610 may provide a seamless service to the UE 610, by providing related satellite information to the terminal 610 in advance while a radio link is connected, and by notifying information on a satellite (the target satellite) to serve the corresponding serving cell in advance even if the serving satellite (e.g., the satellite 620) is out of the current serving cell where the terminal 610 is located.

The related satellite information in the present specification may be determined by at least one of ephemeris data or constellation data of a predetermined satellite on the system. The terminal ID of the Table 10 may indicate terminal information mapped to the satellite group, and may be omitted according to a situation. The service related information may be provided for data forwarding (e.g., to prevent disconnection of data transmission that may occur during a handover). The handover related information in the Table 10 may include information on a target satellite adjacent to a current source satellite. The terminal may be able to perform handover, by the information on the target satellite.

### 4. Coverage Information

In the examples, an example of providing only information on the satellite are described, but a neighboring cell may be provided from a terrestrial base station in addition to the satellite. Therefore, information on coverage served by the terrestrial base station may be provided to the terminal (e.g., the UE 610). For example, satellite information provided by a non-terrestrial base station (e.g., the satellite 620) is as follows.

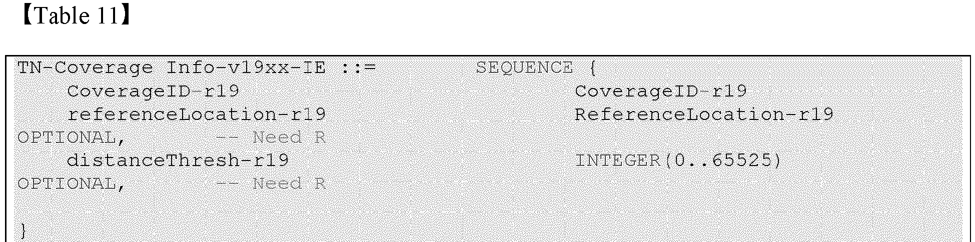

In Table 11, 'coverageID' indicates a coverage ID, and 'referenceLocation' indicates a reference position of the cell provided through the terrestrial base station. 'DistanceThresh' indicates a distance from a reference position of the cell. As a non-limiting example, not only coverage information, but also other information related to a geographical position of the terrestrial base station may be included in the system information.

As information on the terrestrial base station is provided through the non-terrestrial base station, information on the non-terrestrial base station may also be provided through the terrestrial base station. According to an embodiment, the information provided through the Table 3 to the Table 10 may be provided by a terrestrial base station (e.g., a base station 720) in addition to the satellite 620. For example, the terrestrial base station may provide the UE 610 with at least one of information exemplified through Table 3 to Table 10 as information on the neighboring cell. Parameters described in Table 3 to Table 11 may be included in existing system information instead of separate system information (e.g., SIBx, and SIB 19). According to an embodiment, IEs of Table 3 to Table 5 may be included in a SIB 1 including scheduling of other system information and configuration information of a serving cell. According to another embodiment, the IEs of Table 3 to Table 5 may be included in a SIB 2 including random access parameters.

FIG. 8B illustrates an example of a radio resource control (RRC) message for an NTN. In FIG. 8A, system information is exemplified for transmitting cell-specific parameters to terminals within a cell. In FIG. 8B, RRC messages 851 defined for transmitting UE-specific parameters to a specific UE within the cell are exemplified.

Referring to FIG. 8B, the satellite 620 may transmit an RRC message 851 to the UE 610. The RRC message 851 may include information related to a satellite. The UE 610 may receive the RRC message 851. According to an embodiment, the RRC message 851 may be an RRC setup message. According to an embodiment, the RRC message 851 may be an RRC resume message. According to an embodiment, the RRC message may be an RRC re-establishment message. According to an embodiment, the RRC message 851 may be an RRC reconfiguration message.

The RRC message 851 may include at least one of the information mentioned in FIG. 8A. According to an embodiment, the RRC message 851 may include at least one of 'ntn-Config', 't-service', 'referenceLocation', 'distanceThresh', or'ntn-NeighborCellConfigList'. According to an embodiment, the RRC message 851 may include at least one of 'epochTime', 'ntn-UlSyncValidityDuration', 'cellSpecificKoffset', 'kmac', 'ta-Info', 'ntn-Polarization DL', 'ntn-Polarization UL', 'ta-Report', and 'ephemisInfo'. According to an embodiment, the RRC message 851 may include at least one of 'PositionVelocity' and/or 'Orbital'.

According to an embodiment, the RRC message 851 may include identification information related to a satellite group. The satellite 620 may transmit the RRC message 851 including the identification information for a group (hereinafter, referred to as a satellite group) in which the satellite 620 is included to the UE 610. According to an embodiment, satellites orbiting the same orbit may be divided into the same satellite group. For example, satellites in the same satellite group may share the same orbit. For example, satellites in the same satellite group may have the same orbital information (e.g., an 'Orbital-r19' IE) in ephemeris information. As a non-limiting example, instead of including orbital information for each satellite, the RRC message 851 may include orbital information specific to the satellite group.

According to another embodiment, satellites using the same NTN gateway (e.g., the NTN gateway 630) may be divided into the same group. The NTN gateway may be used in a fixed position on the ground. Therefore, satellites connected to the NTN gateway may be understood to be disposed within a certain distance from the NTN gateway. Therefore, satellites concentrated in a specific area may be commonly connected to the NTN gateway. As the satellite acts as an independent base station, one or more cells may be provided. Therefore, the satellite may also be required to have a unique ID in addition to a physical cell ID. For example, a gNB ID may be used to identify the satellite.

For another example, a gNB-DU ID may be used to identify the satellite. For another example, in order to identify the satellite, a separately defined ID may be used. The satellite group may be identified through a satellite group ID. For example, satellite may be identified through the satellite group ID and a satellite ID in a group. For another example, a satellite may be assigned an individual satellite ID separate from a group. The satellite 620 may transmit the RRC message including information on the satellite 620 or information on a satellite included in the same group as the satellite 620. The UE 610 may recognize information on surrounding satellites through identification information of the satellite 620 or identification information of a satellite group to which the satellite 620 belongs.

According to an embodiment, the RRC message 851 may include class information. As exemplified in Table 6 to Table 8, the class information may be a position state vector, a velocity state vector, and/or the ephemeris information in a more simplified manner. For example, the satellite 620 may transmit the RRC message 851 including information indicating a position class to the UE 610, as exemplified in Table 6. For example, the satellite 620 may transmit the RRC message 851 including information indicating a velocity class to the UE 610, as exemplified in Table 7. For example, the satellite 620 may transmit the RRC message 851 including information indicating an orbit class to the UE 610, as exemplified in Table 8.

According to an embodiment, the RRC message 851 may include information related to a group handover. For example, the RRC message 851 may include at least one of items exemplified in Table 9. In addition, for example, the RRC message 851 may include at least one of items exemplified in Table 10.

According to an embodiment, the RRC message 851 may include coverage information. The coverage information may include information on coverage of a terrestrial base station adjacent to a satellite providing a serving cell. For example, the RRC message 851 may include information indicating a reference position of a cell provided through a terrestrial base station and/or information indicating a distance from a reference position of the cell.

In FIG. 8B, an example of the RRC message 851 provided by the satellite 620 to the terminal is described, but embodiments of the present disclosure are not limited thereto. Providing the above-described information by the terminal 610 to the satellite 620 may also be understood as an embodiment of the present disclosure.

In FIGS. 8A to 8B, examples of information that the satellite 620 may provide to the terminal 610 are described. The information may be used to improve efficiency of the handover procedure through satellites that move repeatedly in a designated orbit. A satellite of a target cell that is a handover target may be predicted according to movement of the satellite. A handover time may be predicted according to a position and a velocity of the satellite. Based on this circumstance, terminals may be prepared for a handover in advance, and the handover procedure may be simplified within the NTN. Meanwhile, as a role of a satellite operating as a base station is diversified, 3GPP messages may be used for each interface according to a satellite deployment scenario, and parameters/information mentioned in FIGS. 8A to 8B may be included in an existing 3GPP message.

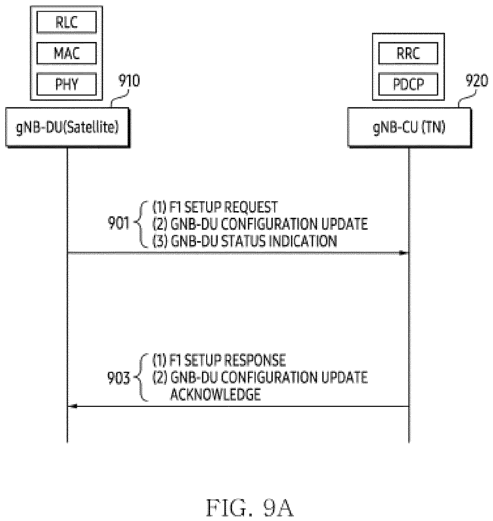

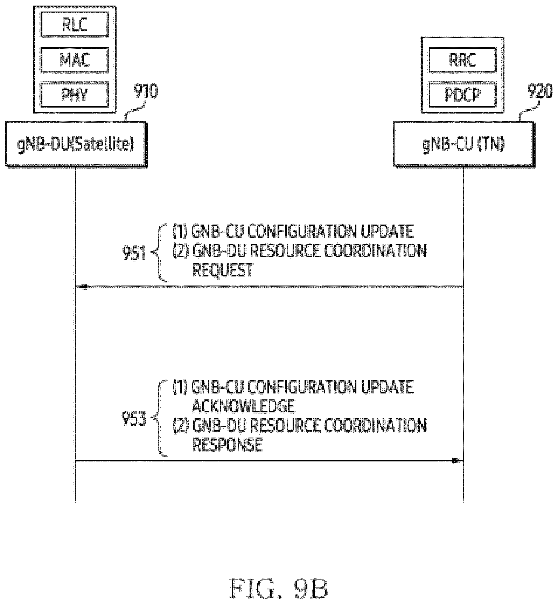

FIGS. 9A and 9B illustrate an example of signaling through an F1 interface in an NTN.

Referring to FIG. 9A, in an operation 901, a gNB-DU 910 may transmit a first message to a gNB-CU 920 through the F1 interface. The gNB-CU 920 may receive the first message from the gNB-DU 910.

In an operation 903, the gNB-CU 920 may transmit a second message to the gNB-DU 910 through the F1 interface. The gNB-DU 910 may receive the second message from the gNB-CU 920.

According to an embodiment, the first message may be an F1 setup request message, and the second message may be an F1 setup response message. The gNB-DU 910 may transmit a F1 setup request message to the gNB-CU 920 through the F1 interface. The gNB-CU 920 may transmit a F1 setup response message to the gNB-DU 910 through the F1 interface. The F1 setup request message may include at least one of the information in Table 3 to Table 11. The F1 setup response message may include at least one of the information in Table 3 to Table 11. For example, the first message may include the following IEs as exemplified in Table 12 to Table 14.

**[Table 12]**

| **IE/Group Name** | | | **Presen ce** | **Range** | **IE type and reference** | **Semantic s descripti on** | **Criticali ty** | **Assigne d Criticali ty** |
|---|---|---|---|---|---|---|---|---|
| Message Type | | | M | | 9.3.1.1 | | YES | reject |
| Transaction ID | | | M | | 9.3.1.23 | | YES | reject |
| gNB-DU ID | | | M | | 9.3.1.9 | | YES | reject |
| gNB-DU Name | | | O | | PrintableString(SIZE(1..15 0,...)) | | YES | ignore |
| **gNB-DU Served Cells List** | | | | *0*.. *1* | | List of cells configure d in the gNB-DU | YES | reject |
| | **>gNB-DU Served Cells Item** | | | *1*.. *<maxCellingNBD U*> | | | EACH | reject |
| | | >>Served Cell Information | M | | 9.3.1.10 | Informatio n about the cells configure d in the gNB-DU | - | |
| | | >>gNB-DU System Information | O | | 9.3.1.18 | RRC container with system informatio n owned by gNB-DU | - | |
| gNB-DU RRC version | | | M | | RRC version 9.3.1.70 | | YES | reject |
| Transport Layer Address Info | | | O | | 9.3.2.5 | | YES | ignore |
| BAP Address | | | O | | 9.3.1.111 | Indicates a BAP address assigned to the IAB-node. | YES | ignore |
| Extended gNB-DU Name | | | O | | 9.3.1.205 | | YES | ignore |
| NTN-Config | | | O | | 9.3.xxx | 3GPP TS 38.331 NTN-Config IE | | |
| t-Service | | | O | | | 3GPP TS 38.331 NTN-Config IE | | |
| referenceLocatio n | | | O | | | 3GPP TS 38.331 NTN-Config IE | | |
| distanceThresh | | | O | | | 3GPP TS 38.331 NTN-Config IE | | |
| ntn-NeighCellConfig List | | | | *0*.*.1* | | 3GPP TS 38.331 NTN-Config IE | | |
| >NTN-Config | | | O | | 9.3.xxx | 3GPP TS 38.331 NTN-Config IE | | |
| >carrierFreq | | | O | | | 3GPP TS 38.331 NTN-Config IE | | |
| >physCellId | | | O | | | 3GPP TS 38.331 NTN-Config IE | | |
| CLASS INFORMATION | | | | *0*.*.1* | | | | |
| > POSITION CLASS | | | O | | | TABLE 6 | | |
| > VELOCITY CLASS | | | O | | | TABLE 7 | | |
| > ORBIT CLASS | | | O | | | TABLE 8 | | |
| UE Group Information | | | O | | | TABLE 9 | | |
| Satellite ID | | | O | | | TABLE 9 | | |
| Trigger Condition for CHO | | | O | | | TABLE 9 | | |
| Service Information | | | O | | | TABLE 9: PDU session ID, DRB ID, SRB ID, QoS Flow ID, Logical Channel ID | | |
| Target Cell Information | | | O | | | TABLE 9 | | |
| Validty Time (Timer) | | | O | | | TABLE 9 | | |
| Satellite Group | | | | | | TABLE 10 | | |
| UE ID | | | | | | RNTI, IMSI, GUTI | | |
| Handover related Information | | | | | | RACH less Info, validity Time info, Timer for satellite | | |
| TN Coverage Information | | | | | | TABLE 11 | | |

### 9.3.xxx NTN-Config

**[Table 13]**

| **IE/Group Name** | **Presence** | **Range** | **IE type and reference** | **Semantics description** | **Criticality** | **Assigned Criticality** |
|---|---|---|---|---|---|---|
| epochTime | | *0*.*.1* | | 3GPP TS 38.331 | | |
| | | | | NTN-Config IE | | |
| >sfn | O | | | 3GPP TS 38.331 | | |
| | | | | NTN-Config IE | | |
| >subFrameNR | O | | | 3GPP TS 38.331 | | |
| | | | | NTN-Config IE | | |
| ntn-ULSyncValidityDuration | O | | | 3GPP TS 38.331 | | |
| | | | | NTN-Config IE | | |
| cellSpecificKoffset | O | | | 3GPP TS 38.331 | | |
| | | | | NTN-Config IE | | |
| kmac | O | | | 3GPP TS 38.331 | | |
| | | | | NTN-Config IE | | |
| ta-Info | | *0*.*.1* | | 3GPP TS 38.331 | | |
| | | | | NTN-Config IE | | |
| >ta-Common | O | | | 3GPP TS 38.331 | | |
| | | | | NTN-Config IE | | |
| >ta-CommonDrift | O | | | 3GPP TS 38.331 | | |
| | | | | NTN-Config IE | | |
| >ta-CommonDriftVariant | O | | | 3GPP TS 38.331 | | |
| | | | | NTN-Config IE | | |
| ntn-PolarizationDL | O | | | 3GPP TS 38.331 | | |
| | | | | NTN-Config IE | | |
| ntn-PolarizationUL | O | | | 3GPP TS 38.331 | | |
| | | | | NTN-Config IE | | |
| ephmerisInfo | O | | 9.3.yyy | 3GPP TS 38.331 | | |
| | | | | NTN-Config IE | | |
| ta-Report | O | | | 3GPP TS 38.331 | | |
| | | | | NTN-Config IE | | |

### 9.3.yyy EphemerisInfo

**[Table 14]**

| **IE/Group Name** | **Presence** | **Range** | **IE type and reference** | **Semantics description** | **Criticality** | **Assigned Criticality** |
|---|---|---|---|---|---|---|
| positionVelocity | | *0*.*.1* | | 3GPP TS 38.331 | | |
| | | | | NTN-Config IE | | |
| >Position | O | | | | | |
| >>PositionX | | | | 3GPP TS 38.331 | | |
| | | | | NTN-Config IE | | |
| >>PositionY | | | | 3GPP TS 38.331 | | |
| | | | | NTN-Config IE | | |
| >>PositionZ | | | | 3GPP TS 38.331 | | |
| | | | | NTN-Config IE | | |
| >Velocitv | O | | | | | |
| >>VelocityX | | | | 3GPP TS 38.331 | | |
| | | | | NTN-Config IE | | |
| » VelocityY | O | | | 3GPP TS 38.331 | | |
| | | | | NTN-Config IE | | |
| >> VelocityZ | O | | | 3GPP TS 38.331 | | |
| | | | | NTN-Config IE | | |
| Orbital | | *0*.*.1* | | | | |
| >semiMajorAxis | O | | | 3GPP TS 38.331 | | |
| | | | | NTN-Config IE | | |
| >eccentricity | O | | | 3GPP TS 38.331 | | |
| | | | | NTN-Config IE | | |
| >periapsis | O | | | 3GPP TS 38.331 | | |
| | | | | NTN-Config IE | | |
| >longitude | O | | | 3GPP TS 38.331 | | |
| | | | | NTN-Config IE | | |
| >inclination | O | | | 3GPP TS 38.331 | | |
| | | | | NTN-Config IE | | |
| >meanAnomaly | O | | | 3GPP TS 38.331 | | |
| | | | | NTN-Config IE | | |

According to an embodiment, the first message may be a GNB-DU configuration update message, and the second message may be a gNB-DU configuration update acknowledge message. The gNB-DU 910 may transmit a GNB-DU configuration update message to the gNB-CU 920 through the F1 interface. The gNB-CU 920 may transmit a gNB-DU configuration update acknowledge message to the gNB-DU 910 through the F1 interface. The GNB-DU configuration update message may include at least one of the information in Table 3 to Table 11. The GNB-DU configuration update message may acknowledge include at least one of the information in Table 3 to Table 11. For example, the first message may include the following IEs as exemplified in Table 15.

**[Table 15]**

| IE/Group Name | **Presen ce** | **Range** | **IE type and reference** | **Semanti cs descripti on** | **Critical ity** | **Assign ed Critical ity** |
|---|---|---|---|---|---|---|
| Message Type | M | | 9.3.1.1 | | YES | reject |
| Transaction ID | M | | 9.3.1.23 | | YES | reject |
| Served Cells To Add List | | *0*.*.1* | | Complet e list of added cells served by the gNB-DU | YES | reject |
| >Served Cells To Add Item | | *1.. <maxCellingNBDU>* | | | EACH | reject |
| Cell Information | M | | 9.3.1.10 | Informati on about the cells configure d in the gNB-DU | - | |
| >>gNB-DU System Information | O | | 9.3.1.18 | RRC container with system informati on owned by gNB-DU | - | |
| Served Cells To Modify List | | *0*.*.1* | | Complet e list of modified cells served by the gNB-DU | YES | reject |
| >Served Cells To Modifv Item | | *1..* <*maxCellingNBDU*> | | | EACH | reject |
| >>Old NR CGI | M | | NR CGI 9.3.1.12 | | - | |
| Cell Information | M | | 9.3.1.10 | Informati on about the cells configure d in the gNB-DU | - | |
| >>gNB-DU System Information | O | | 9.3.1.18 | RRC container with system informati on owned by gNB-DU | - | |
| Served Cells To Delete List | | *0*..*1* | | Complet e list of deleted cells served by the gNB-DU | YES | reject |
| >Served Cells To Delete Item | | *1.. <maxCellingNBDU>* | | | EACH | reject |
| >>Old NR CGI | M | | NR CGI 9.3.1.12 | | | |
| Cells Status List | | *0*.*.1* | | Complet e list of active cells | YES | reject |
| > Cells Status Item | | *0* .. *<maxCellingNBDU>* | | | EACH | reject |
| >> NR CGI | M | | 9.3.1.12 | | - | |
| >>Service Status | M | | 9.3.1.68 | | - | |
| Dedicated SI Delivery Needed UE List | | *0*.*.1* | | List of UEs unable to receive system informati on from broadcas t | YES | ignore |
| > Dedicated SI Delivery Needed UE Item | | *1.. <maxnoofUEIDs>* | | | EACH | ignore |
| >>gNB-CU UE F1AP ID | M | | 9.3.1.4 | | - | - |
| >>NR CGI | M | | 9.3.1.12 | | - | - |
| gNB-DU ID | O | | 9.3.1.9 | | YES | reject |
| gNB-DU TNL Association To Remove List | | *0*.*.1* | | | YES | reject |
| >gNB-DU TNL Association To Remove Item IEs | | *1.. <maxnoofTNLAssoci ation>* | | | EACH | reject |
| >>TNL Association Transport Layer Address | M | | CP Transport Layer Address 9.3.2.4 | Transpor t Layer Address of the gNB-DU. | - | |
| >>TNL Association Transport Layer Address gNB-CU | O | | CP Transport Layer Address 9.3.2.4 | Transpor t Layer Address of the qNB-CU | - | |
| Transport Layer Address Info | O | | 9.3.2.5 | | YES | ignore |
| Coverage Modification Notification | O | | 9.3.1.213 | | YES | Ignore |
| gNB-DU Name | O | | PrintableString(SIZE(1.. 150,...)) | Human readable name of the gNB-DU. | YES | ignore |
| Extended gNB-DU Name | O | | 9.3.1.205 | | YES | ignore |
| NTN-Config | O | | 9.3.xxx | 3GPP TS 38.331 NTN-Config IE | | |
| t-Service | O | | | 3GPP TS 38.331 NTN-Config IE | | |
| referenceLocati on | O | | | 3GPP TS 38.331 NTN-Config IE | | |
| distanceThresh | O | | | 3GPP TS 38.331 NTN-Config IE | | |
| ntn-NeighCellConfi gList | | *0*.*.1* | | 3GPP TS 38.331 NTN-Config IE | | |
| >NTN-Config | O | | 9.3.xxx | 3GPP TS 38.331 NTN-Config IE | | |
| >carrierFreq | O | | | 3GPP TS 38.331 NTN-Config IE | | |
| >physCellId | O | | | 3GPP TS 38.331 NTN-Config IE | | |
| CLASS INFORMATIO N | | *0*.*.1* | | | | |
| > POSITION CLASS | O | | | TABLE 6 | | |
| > VELOCITY CLASS | O | | | TABLE 7 | | |
| > ORBIT CLASS | O | | | TABLE 8 | | |
| UE Group Information | O | | | TABLE 9 | | |
| Satellite ID | O | | | TABLE 9 | | |
| Trigger Condition for CHO | O | | | TABLE 9 | | |
| Service Information | O | | | TABLE 9: PDU session ID, DRB ID, SRB ID, QoS Flow ID, Logical Channel ID | | |
| Target Cell Information | O | | | TABLE 9 | | |
| Validty Time (Timer) | O | | | TABLE 9 | | |
| Satellite Group | | | | TABLE 10 | | |
| UE ID | | | | RNTI, IMSI, GUTI | | |
| Handover related Information | | | | RACH less Info, validity Time info, Timer for satellite | | |
| TN Coverage Information | | | | TABLE 11 | | |

For the IEs according to the Table 15, Table 13 for 'NTN-Config' and Table 14 for 'Ephemistrylnfo' may be referenced.

According to an embodiment, the first message may be a GNB-DU state indication message. In case that the first message is a GNB-DU status indication message, transmission of the second message may be omitted. The GNB-DU status indication message may include at least one of the information in Table 3 to Table 11. For example, the first message may include the following IEs as exemplified in Table 16.

**[Table 16]**

| **IE/Group Name** | | **Presence** | | **Range** | | **IE type and reference** | **Semantics description** | **Criticality** | **Assigned Criticality** |
|---|---|---|---|---|---|---|---|---|---|
| Message Type | | M | | | | 9.3.1.1 | | YES | ignore |
| Transaction ID | | M | | | | 9.3.1.23 | | YES | reject |
| gNB-DU Overload Information | | M | | | | ENUMERATE D (overloaded, not-overloaded) | | YES | reject |
| IAB Congestion Indication | | O | | | | 9.3.1.227 | | YES | ignore |
| NTN-Config | | O | | | | 9.3.xxx | 3GPP TS 38.331 NTN-Config IE | | |
| t-Service | | O | | | | | 3GPP TS 38.331 NTN-Config IE | | |
| referenceLocation | | O | | | | | 3GPP TS 38.331 NTN-Config IE | | |
| distanceThresh | | O | | | | | 3GPP TS 38.331 NTN-Config IE | | |
| ntn-NeighCellConfigList | | | | *0*.*.1* | | | 3GPP TS 38.331 NTN-Config IE | | |
| >NTN-Config | | O | | | | 9.3.xxx | 3GPP TS 38.331 NTN-Config IE | | |
| >carrierFreq | | O | | | | | 3GPP TS 38.331 NTN-Config IE | | |
| >physCellId | | O | | | | | 3GPP TS 38.331 NTN-Config IE | | |
| CLASS INFORMATION | | | | *0*.*.1* | | | | | |
| > POSITION CLASS | | O | | | | | TABLE 6 | | |
| > VELOCITY CLASS | | O | | | | | TABLE 7 | | |
| > ORBIT CLASS | | O | | | | | TABLE 8 | | |
| UE Group Information | | O | | | | | TABLE 9 | | |
| Satellite ID | | O | | | | | TABLE 9 | | |
| Trigger Condition for CHO | | O | | | | | TABLE 9 | | |
| Service Information | | O | | | | | TABLE 9: PDU session ID, DRB ID, SRB ID, QoS Flow ID, Logical Channel ID | | |
| Target Cell Information | | O | | | | | TABLE 9 | | |
| Validtv Time (Timer) | | O | | | | | TABLE 9 | | |
| Satellite Group | | | | | | | TABLE 10 | | |
| UE ID | | | | | | | RNTI, IMSI, GUTI | | |
| Handover related Information | | | | | | | RACH less Info, validity Time info, Timer for satellite | | |
| TN Coverage Information | | | | | | | TABLE 11 | | |

For the IEs according to the Table 16, Table 13 for 'NTN-Config' and Table 14 for `EphemerisInfo' may be referenced.

Referring to FIG. 9B, in an operation 951, the gNB-CU 920 may transmit a first message to the gNB-DU 910 through the F1 interface. The gNB-DU 910 may receive the first message from the gNB-CU 920.

In an operation 953, the gNB-DU 910 may transmit a second message to the gNB-CU 920 through the F1 interface. The gNB-CU 920 may receive the second message from the gNB-DU 910.

According to an embodiment, the first message may be a gNB-CU configuration update message, and the second message may be a gNB-CU configuration update acknowledge message. The gNB-CU 920 may transmit a gNB-CU configuration update message to the gNB-DU 910 through the F1 interface. The gNB-DU 910 may transmit a GNB-CU configuration update acknowledge message to the gNB-CU 920 through the F1 interface. The GNB-CU configuration update message may include at least one of the information in Table 3 to Table 11. The GNB-CU configuration update acknowledge message may include at least one of the information in Table 3 to Table 11. For example, the first message may include the following IEs as exemplified in Table 17.

**[Table 17]**

| **IE/Group Name** | | | **Presen ce** | **Range** | **IE type and reference** | **Semantic s descripti on** | **Critical ity** | **Assign ed Critical ity** |
|---|---|---|---|---|---|---|---|---|
| Message Type | | | M | | 9.3.1.1 | | YES | reject |
| Transaction ID | | | M | | 9.3.1.23 | | YES | reject |
| **Cells to be Activated List** | | | | *0*.*.1* | | List of cells to be activated or modified | YES | reject |
| | **>Cells to be Activated List Item** | | | *1.. <maxCellingNBDU>* | | | EACH | reject |
| | | >> NR CGI | M | | 9.3.1.12 | | - | |
| | | >> NR PCI | O | | INTEGER (0..1007) | Physical Cell ID | - | |
| | | >> gNB-CU System Informatio n | O | | 9.3.1.42 | RRC container with system informatio n owned by gNB-CU | YES | reject |
| | | >>Availabl e PLMN List | O | | 9.3.1.65 | | YES | ignore |
| | | >>Extend ed Available PLMN List | O | | 9.3.1.76 | This is included if *Available PLMN List* IE is included and if more than 6 Available PLMNs is to be signalled. | YES | ignore |
| | | >>IAB Info IAB-donor-CU | O | | 9.3.1.105 | IAB-related configurat ion sent by the IAB-donor-CU. | YES | ignore |
| | | >>Availabl e SNPN ID List | O | | 9.3.1.163 | Indicates the available SNPN ID list. If this IE is included, the content of the *Available PLMN List* IE and *Extended Available PLMN List* IE if present in the *Cells to be Activated List Item* IE is ignored. | YES | ignore |
| | | >>MBS Broadcast Neighbour Cell List | O | | 9.3.1.226 | | YES | ignore |
| **Cells to be Deactivated List** | | | | *0*..*1* | | List of cells to be deactivat ed | YES | reject |
| | **>Cells to be Deactivated List Item** | | | *1.. <maxCellingNBDU>* | | | EACH | reject |
| | | >> NR CGI | M | | 9.3.1.12 | | - | |
| **gNB-CU TNL Association To Add List** | | | | *0*.*.1* | | | YES | ignore |
| | **>gNB-CU TNL** | | | *1..<maxnoofTNLAssoci ations>* | | | EACH | ignore |
| | **Association To Add Item IEs** | | | | | | | |
| | | >>TNL Associatio n Transport Layer Informatio n | M | | CP Transport Layer Address 9.3.2.4 | Transport Layer Address of the gNB-CU. | - | |
| | | >>TNL Associatio n Usage | M | | ENUMERATED (ue, non-ue, both, ...) | Indicates whether the TNL associatio n is only used for UE-associate d signalling, or non-UE-associate d signalling, or both. For usage of this IE, refer to TS 38.472 [22]. | - | |
| **gNB-CU TNL Association To Remove List** | | | | *0*.*.1* | | | YES | ignore |
| | **>gNB-CU TNL Association To Remove Item IEs** | | | *1.. <maxnoofTNLAssoci ation>* | | | EACH | ignore |
| | | >>TN L Associatio n Transport Layer Address | M | | CP Transport Layer Address 9.3.2.4 | Transport Layer Address of the gNB-CU. | | |
| | | >>TNL Associatio n Transport Layer Address gNB-DU | O | | CP Transport Layer Address 9.3.2.4 | Transport Layer Address of the gNB-DU. | YES | reject |
| **gNB-CU TNL Association To Update List** | | | | *0*.*.1* | | | YES | ignore |
| | **>gNB-CU TNL** | | | *1.. <maxnoofTNLAssoci ations>* | | | EACH | ignore |
| | **Association To Update Item IEs** | | | | | | | |
| | | >>TNL Associatio n Transport Layer Address | M | | CP Transport Layer Address 9.3.2.4 | Transport Layer Address of the gNB-CU. | - | |
| | | >>TNL Associatio n Usage | O | | ENUMERATED (ue, non-ue, both, ...) | Indicates whether the TNL associatio n is only used for UE-associate d signalling, or non-UE-associate d signalling, or both. For usage of this IE, refer to TS 38.472 [22]. | - | |
| **Cells to be barred List** | | | | *0*..*1* | | List of cells to be barred. | YES | ignore |
| | **>Cells to be barred List Item** | | | *1.. <maxCellingNBDU>* | | | EACH | ignore |
| | | >>NR CGI | M | | 9.3.1.12 | | - | |
| | | >>Cell Barred | M | | ENUMERATED (barred, not-barred, ...) | | - | |
| | | >>IAB Barred | O | | ENUMERATED (barred, not-barred, ...) | | - | |
| **Protected E-UTRA Resources List** | | | | *0*.*.1* | | List of Protected E-UTRA Resource s. | YES | reject |
| | **>Protected E-UTRA Resources List Item** | | | *1.. <maxCellineNB>* | | | EACH | reject |
| | | >>Spectru m Sharing Group ID | M | | INTEGER (1.. maxCellineNB) | Indicates the E-UTRA cells involved in resource coordinati on with the NR cells affiliated with the same Spectrum Sharing Group ID. | - | |
| | **>>E-UTRA Cells List** | | | 1 | | List of applicabl e E-UTRA cells. | - | |
| | | **>>> E-UTRA Cells List Item** | | *1* .. *<maxCellineNB>* | | | - | |
| | | >>>>EU TRA Cell ID | M | | BIT STRING (SIZE(28)) | Indicates the E-UTRAN Cell Identifier IE contained in the ECGI as defined in subclaus e 9.2.14 in TS 36.423 [9]. | - | |
| | | >>>>Se rved E-UTRA Cell Informat ion | M | | 9.3.1.64 | | | |
| | **Neighbour Cell Information List** | | | *0*.*.1* | | | YES | ignore |
| | **>Neighbour Cell Information List Item** | | | *1* .. *<maxCellingNBDU>* | | | EACH | ignore |
| | >>NR CGI | | M | | 9.3.1.12 | | - | |
| | >>Intende d TDD DL-UL Configurat ion | | O | | 9.3.1.89 | | - | |
| Transport Layer Address Info | | | O | | 9.3.2.5 | | YES | ignore |
| Uplink BH Non-UP Traffic Mapping | | | O | | 9.3.1.103 | | YES | reject |
| BAP Address | | | O | | 9.3.1.111 | Indicates a BAP address assigned to the IAB-donor-DU. | YES | ignore |
| CCO Assistance Information | | | O | | 9.3.1.211 | Indicates CCO Assistanc e Informatio n for cells and beams served by the gNB-DU of the same NG-RAN node or for cells and beams not served by the gNB-DU. | YES | Ignore |
| Cells for SON List | | | O | | 9.3.1.214 | | YES | ignore |
| gNB-CU Name | | | O | | PrintableString(SIZE(1.. 150,...)) | Human readable name of the gNB-CU. | YES | ignore |
| Extended gNB-CU Name | | | O | | 9.3.1.206 | | YES | ignore |
| NTN-Config | | | O | | 9.3.xxx | 3GPP TS 38.331 NTN-Config IE | | |
| t-Service | | | O | | | 3GPP TS 38.331 NTN-Config IE | | |
| referenceLocati on | | | O | | | 3GPP TS 38.331 NTN-Config IE | | |
| distanceThresh | | | O | | | 3GPP TS 38.331 NTN-Config IE | | |
| ntn-NeighCellConfi gList | | | | *0*..*1* | | 3GPP TS 38.331 NTN-Config IE | | |
| >NTN-Config | | | O | | 9.3.xxx | 3GPP TS 38.331 NTN-Config IE | | |
| >carrierFreq | | | O | | | 3GPP TS 38.331 NTN-Config IE | | |
| >physCellId | | | O | | | 3GPP TS 38.331 NTN-Config IE | | |
| CLASS INFORMATIO N | | | | *0*..*1* | | | | |
| > POSITION CLASS | | | O | | | TABLE 6 | | |
| > VELOCITY CLASS | | | O | | | TABLE 7 | | |
| > ORBIT CLASS | | | O | | | TABLE 8 | | |
| UE Group Information | | | O | | | TABLE 9 | | |
| Satellite ID | | | O | | | TABLE 9 | | |
| Trigger Condition for CHO | | | O | | | TABLE 9 | | |
| Service Information | | | O | | | TABLE 9: PDU session ID, DRB ID, SRB ID, QoS Flow ID, Logical Channel ID | | |
| Target Cell Information | | | O | | | TABLE 9 | | |
| Validty Time (Timer) | | | O | | | TABLE 9 | | |
| Satellite Group | | | | | | TABLE 10 | | |
| UE ID | | | | | | RNTI, IMSI, GUTI | | |
| Handover related Information | | | | | | RACH less Info, validity Time info, Timer for satellite | | |
| TN Coverage Information | | | | | | TABLE 11 | | |

For the IEs according to the Table 17, Table 13 for 'NTN-Config' and Table 14 for `EphemerisInfo' may be referenced.

According to an embodiment, the first message may be a GNB-DU resource coordination request message, and the second message may be a gNB-DU resource coordination response message. The gNB-CU 920 may transmit a GNB-DU resource coordination request message to the gNB-DU 910 through the F1 interface. The gNB-DU 910 may transmit a GNB-DU resource coordination response message to the gNB-CU 920 through the F1 interface. The GNB-DU resource coordination request message may include at least one of the information in Table 3 to Table 11. The GNB-DU resource coordination response message may include at least one of the information in Table 3 to Table 11. For example, the first message may include the following IEs as exemplified in Table 18.

**[Table 18]**

| **IE/Group Name** | **Presence** | **Range** | **IE type and reference** | **Semantics description** | **Criticality** | **Assigned Criticality** |
|---|---|---|---|---|---|---|
| Message Type | M | | 9.3.1.1 | | YES | reject |
| Transaction ID | M | | 9.3.1.23 | | YES | reject |
| Request type | M | | ENUMERATED (offer, execution, ...) | | YES | reject |
| E-UTRA- NR Cell Resource Coordination Request Container | M | | OCTET STRING | In EN-DC case, includes the X2AP E-UTRA - NR CELL RESOURCE COORDINATION REQUEST message as defined in subclause 9.1.4.24 in TS 36.423 [9]. In NG-RAN cases, includes the XnAP E-UTRA - NR CELL RESOURCE COORDINATION REQUEST message as defined in subclause 9.1.2.23 in TS 38.423 [28]. | YES | reject |
| Ignore Coordination Request Container | O | | ENUMERATED (ves, ...) | | YES | reject |
| NTN-Config | O | | 9.3.xxx | 3GPP TS 38.331 NTN-Config IE | | |
| t-Service | O | | | 3GPP TS 38.331 NTN-Config IE | | |
| referenceLocation | O | | | 3GPP TS 38.331 NTN-Config IE | | |
| distanceThresh | O | | | 3GPP TS 38.331 NTN-Config IE | | |
| ntn-NeighCellConfigList | | *0*..*1* | | 3GPP TS 38.331 NTN-Config IE | | |
| >NTN-Config | O | | 9.3.xxx | 3GPP TS 38.331 NTN-Config IE | | |
| >carrierFreq | O | | | 3GPP TS 38.331 NTN-Config IE | | |
| >physCellId | O | | | 3GPP TS 38.331 NTN-Config IE | | |
| CLASS INFORMATION | | *0*..*1* | | | | |
| > POSITION CLASS | O | | | TABLE 6 | | |
| > VELOCITY CLASS | O | | | TABLE 7 | | |
| > ORBIT CLASS | O | | | TABLE 8 | | |
| UE Group Information | O | | | TABLE 9 | | |
| Satellite ID | O | | | TABLE 9 | | |
| Trigger Condition for CHO | O | | | TABLE 9 | | |
| Service Information | O | | | TABLE 9: PDU session ID, DRB ID, SRB ID, QoS Flow ID, Logical Channel ID | | |
| Target Cell Information | O | | | TABLE 9 | | |
| Validtv Time (Timer) | O | | | TABLE 9 | | |
| Satellite Group | | | | TABLE 10 | | |
| UE ID | | | | RNTI, IMSI, GUTI | | |
| Handover related Information | | | | RACH less Info, validity Time info, Timer for satellite | | |
| TN Coverage Information | | | | TABLE 11 | | |

For the IEs according to the Table 18, Table 13 for 'NTN-Config' and Table 14 for 'Ephemistrylnfo' may be referenced.

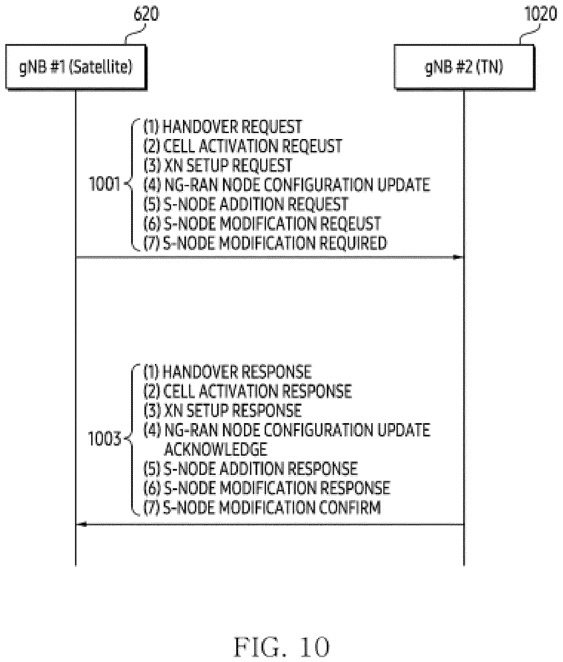

FIG. 10 illustrates an example of signaling through an XN interface in an NTN. In FIG. 10, signaling between a non-terrestrial base station and a terrestrial base station is described as an example, but embodiments of the present disclosure are not limited thereto. Messages on the XN interface described in FIG. 10 may be transmitted not only between the non-terrestrial base station and the terrestrial base station, but also between the non-terrestrial base station and the non-terrestrial base station, or between the terrestrial base station and the terrestrial base station. In addition, the messages described in FIG. 10 are described as being transmitted from the non-terrestrial base station to the terrestrial base station first, but are not limited thereto. For example, a request message may be transmitted from the terrestrial base station to the non-terrestrial base station first, and then a response message may be transmitted from the non-terrestrial base station to the terrestrial base station. For example, the non-terrestrial base station may include a satellite 620. For example, the terrestrial base station may include a base station 1020.

Referring to FIG. 10, in an operation 1001, the satellite 620 may transmit a first message to the base station 1020 through the XN interface. The base station 1020 may receive the first message from the satellite 620.

In an operation 1003, the base station 1020 may transmit a second message to the satellite 620 through the XN interface. The satellite 620 may receive the second message from the base station 1020.

According to an embodiment, the first message may be a handover request message, and the second message may be a handover response message. The satellite 620 may transmit a handover request message to the base station 1020 through the XN interface. The base station 1020 may transmit a handover response message to the satellite 620 through the XN interface. The handover request message may include at least one of the information in Table 3 to Table 11. The handover response message may include at least one of the information in Table 3 to Table 11. For example, the first message may include the following IEs as exemplified in Table 19.

**[Table 19]**

| **IE/Group Name** | | **Presenc e** | **Rang e** | **IE type and reference** | **Semantics description** | **Criticalit y** | **Assigne d Criticalit y** |
|---|---|---|---|---|---|---|---|
| Message Type | | M | | 9.2.3.1 | | YES | reject |
| Source NG-RAN node UE XnAP ID reference | | M | | NG-RAN node UE XnAP ID 9.2.3.16 | Allocated at the source NG-RAN node | YES | reject |
| Cause | | M | | 9.2.3.2 | | YES | reject |
| Target Cell Global ID | | M | | 9.2.3.25 | Includes either an E-UTRA CGI or an NR CGI | YES | reject |
| GUAMI | | M | | 9.2.3.24 | | YES | reject |
| **UE Context Information** | | | *1* | | | YES | reject |
| | >NG-C UE associated Signalling reference | M | | AMF UE NGAP ID 9.2.3.26 | Allocated at the AMF on the source NG-C connection. | - | |
| | >Signalling TNL association address at source NG-C side | M | | CP Transport Layer Information 9.2.3.31 | This IE indicates the AMF's IP address of the SCTP association used at the source NG-C interface instance. Note: If no UE TNLA binding exists at the source NG-RAN node, the source NG-RAN node indicates the TNL association address it would have selected if it would have had to create a UE TNLA binding. | - | |
| | >UE Security Capabilities | M | | 9.2.3.49 | | - | |
| | >AS Security Information | M | | 9.2.3.50 | | - | |
| | >Index to RAT/Frequency Selection Priority | O | | 9.2.3.23 | | - | |
| | >UE Aggregate Maximum Bit Rate | M | | 9.2.3.17 | | - | |
| | >PDU Session Resources To Be Setup List | | 1 | 9.2.1.1 | Similar to NG-C signalling, containing UL tunnel information per PDU Session Resource; and in addition, the source side QoS flow ⇔ DRB mapping | - | |
| | >RRC Context | M | | OCTET STRING | Either includes the *HandoverPreparationInformati* on message as defined in subclause 10.2.2. of TS 36.331 [14], or the *HandoverPreparationInformati on-NB* message as defined in subclause 10.6.2 of TS 36.331 [14], if the target NG-RAN node is an ng-eNB, or the *HandoverPreparationInformati on* message as defined in subclause 11.2.2 of TS 38.331 [10], if the target NG-RAN node is a gNB. | - | |
| | >Location Reporting Information | O | | 9.2.3.47 | Includes the necessary parameters for location reporting. | - | |
| | >Mobility Restriction List | O | | 9.2.3.53 | | - | |
| | >5GC Mobility Restriction List Container | O | | 9.2.3.100 | | YES | ignore |
| | >NR UE Sidelink Aggregate Maximum Bit Rate | O | | 9.2.3.107 | This IE applies only if the UE is authorized for NR V2X services. | YES | ignore |
| | >LTE UE Sidelink Aggregate Maximum Bit Rate | O | | 9.2.3.108 | This IE applies only if the UE is authorized for LTE V2X services. | YES | ignore |
| | >Management Based MDT PLMN List | O | | MDT PLMN List 9.2.3.133 | | YES | ignore |
| | >UE Radio Capability ID | O | | 9.2.3.138 | | YES | reject |
| | >MBS Session Information List | O | | 9.2.1.36 | | YES | ignore |
| | >5G ProSe UE PC5 Aggregate Maximum Bit Rate | O | | NR UE Sidelink Aggregate Maximum Bit Rate 9.2.3.107 | This IE applies only if the UE is authorized for 5G ProSe services. | YES | ignore |
| | >UE Slice Maximum Bit Rate List | O | | 9.2.3.167 | | YES | ignore |
| Trace Activation | | O | | 9.2.3.55 | | YES | ignore |
| Masked IMEISV | | O | | 9.2.3.32 | | YES | ignore |
| UE History Information | | M | | 9.2.3.64 | | YES | ignore |
| **UE Context Reference at the S-NG-RAN node** | | O | | | | YES | ignore |
| | >Global NG-RAN Node ID | M | | 9.2.2.3 | | - | |
| | >S-NG-RAN node UE XnAP ID | M | | NG-RAN node UE XnAP ID 9.2.3.16 | | - | |
| **Conditional Handover Information Request** | | O | | | | YES | reject |
| | >CHO Trigger | M | | ENUMERATE D (CHO-initiation, CHO-replace, ...) | | - | |
| | >Target NG-RAN node UE XnAP ID | C-ifCHOmo d | | NG-RAN node UE XnAP ID 9.2.3.16 | Allocated at the target NG-RAN node | - | |
| | >Estimated Arrival Probability | O | | INTEGER (1..100) | | - | |
| NR V2X Services Authorized | | O | | 9.2.3.105 | | YES | ignore |
| LTE V2X Services Authorized | | O | | 9.2.3.106 | | YES | ignore |
| PC5 QoS Parameters | | O | | 9.2.3.109 | This IE applies only if the UE is authorized for NR V2X services. | YES | ignore |
| Mobility Information | | O | | BIT STRING (SIZE (32)) | Information related to the handover; the source NG-RAN node provides it in order to enable later analysis of the conditions that led to a wrong HO. | YES | ignore |
| UE History Information from the UE | | O | | 9.2.3.110 | | YES | ignore |
| IAB Node Indication | | O | | ENUMERATE D (true, ...) | | YES | reject |
| No PDU Session Indication | | O | | ENUMERATE D (true, ...) | This IE applies only if the UE is an IAB-MT. | YES | ignore |
| Time Synchronisation Assistance Information | | O | | 9.2.3.153 | | YES | ignore |
| QMC Configuration Information | | O | | 9.2.3.156 | | YES | ignore |
| 5G ProSe Authorized | | O | | 9.2.3.159 | | YES | ignore |
| 5G ProSe PC5 QoS Parameters | | O | | 9.2.3.160 | This IE applies only if the UE is authorized for 5G ProSe services. | YES | ignore |
| NTN-Config | | O | | 9.3.xxx | 3GPP TS 38.331 NTN-Config IE | | |
| t-Service | | O | | | 3GPP TS 38.331 NTN-Config IE | | |
| referenceLocation | | O | | | 3GPP TS 38.331 NTN-Config IE | | |
| distanceThresh | | O | | | 3GPP TS 38.331 NTN-Config IE | | |
| ntn-NeighCellConfigLi st | | | *0*..*1* | | 3GPP TS 38.331 NTN-Config IE | | |
| >NTN-Config | | O | | 9.3.xxx | 3GPP TS 38.331 NTN-Config IE | | |
| >carrierFreq | | O | | | 3GPP TS 38.331 NTN-Config IE | | |
| >physCellId | | O | | | 3GPP TS 38.331 NTN-Config IE | | |
| CLASS INFORMATION | | | *0*..*1* | | | | |
| > POSITION CLASS | | O | | | TABLE 6 | | |
| > VELOCITY CLASS | | O | | | TABLE 7 | | |
| > ORBIT CLASS | | O | | | TABLE 8 | | |
| UE Group Information | | O | | | TABLE 9 | | |
| Satellite ID | | O | | | TABLE 9 | | |
| Trigger Condition for CHO | | O | | | TABLE 9 | | |
| Service | | O | | | TABLE 9: PDU session ID, | | |
| Information | | | | | DRB ID, SRB ID, QoS Flow ID, Logical Channel ID | | |
| Target Cell Information | | O | | | TABLE 9 | | |
| Validty Time (Timer) | | O | | | TABLE 9 | | |
| Satellite Group | | | | | TABLE 10 | | |
| UE ID | | | | | RNTI, IMSI, GUTI | | |
| Handover related Information | | | | | RACH less Info, validity Time info, Timer for satellite | | |
| TN Coverage Information | | | | | TABLE 11 | | |

For the IEs according to the Table 19, 3GPP TS 38.423 standard, Table 13 for 'NTN-Config', and Table 14 for `EphemerisInfo' may be referenced.

According to an embodiment, the first message may be a cell activation request message, and the second message may be a cell activation response message. The satellite 620 may transmit a cell activation request message to the base station 1020 through the XN interface. The base station 1020 may transmit a cell activation response message to the satellite 620 through the XN interface. The cell activation request message may include at least one of the information in Table 3 to Table 11. The cell activation response message may include at least one of the information in Table 3 to Table 11. For example, the first message may include the following IEs as exemplified in Table 20.

**[Table 20]**

| **IE/Group Name** | | | | | **Presence** | **Range** | **IE type and reference** | **Semantics description** | **Criticality** | **Assigned Criticality** |
|---|---|---|---|---|---|---|---|---|---|---|
| Message Type | | | | | M | | 9.2.3.1 | | YES | reject |
| CHOICE *Served Cells To Activate* | | | | | M | | | | YES | reject |
| | *>NR Cells* | | | | | | | | | |
| | | **>>NR Cells** List | | | | *1* | | | - | |
| | | | **>>>NR Cells item** | | | 1.. < *maxnoofCellsinNG-RANnode>* | | | - | |
| | | | | >>>>NR CGI | M | | 9.2.2.7 | | - | |
| | *>E-UTRA Cells* | | | | | | | | - | |
| | | **>>E-UTRA Cells List** | | | | *1* | | | - | |
| | | | **>>>E-UTRA Cells item** | | | *1*.. < *maxnoofCellsinNG-RANnode>* | | | - | |
| | | | | >>>>E-UTRA CGI | M | | 9.2.2.8 | | - | |
| Activation ID | | | | | M | | INTEGER (0..255) | Allocated by the NG-RAN nodei | YES | reject |
| Interface Instance Indication | | | | | O | | 9.2.2.39 | | YES | reject |
| NTN-Config | | | | | O | | 9.3.xxx | 3GPP TS 38.331 NTN-Config IE | | |
| t-Service | | | | | O | | | 3GPP TS 38.331 NTN-Config IE | | |
| referenceLocation | | | | | O | | | 3GPP TS 38.331 NTN-Config IE | | |
| distanceThresh | | | | | O | | | 3GPP TS 38.331 NTN-Config IE | | |
| ntn-NeighCellConfigList | | | | | | *0*..*1* | | 3GPP TS 38.331 NTN-Config IE | | |
| >NTN-Config | | | | | O | | 9. 3. xxx | 3GPP TS 38.331 NTN-Config IE | | |
| >carrierFreq | | | | | O | | | 3GPP TS 38.331 NTN-Config IE | | |
| >physCellId | | | | | O | | | 3GPP TS 38.331 NTN-Config IE | | |
| CLASS INFORMATION | | | | | | *0*..*1* | | | | |
| > POSITION CLASS | | | | | O | | | TABLE 6 | | |
| > VELOCITY CLASS | | | | | O | | | TABLE 7 | | |
| > ORBIT CLASS | | | | | O | | | TABLE 8 | | |
| UE Group Information | | | | | O | | | TABLE 9 | | |
| Satellite ID | | | | | O | | | TABLE 9 | | |
| Trigger Condition for CHO | | | | | O | | | TABLE 9 | | |
| Service Information | | | | | O | | | TABLE 9: PDU session ID, DRB ID, SRB ID, QoS Flow ID, Logical Channel ID | | |
| Target Cell Information | | | | | O | | | TABLE 9 | | |
| Validty Time (Timer) | | | | | O | | | TABLE 9 | | |
| Satellite Group | | | | | | | | TABLE 10 | | |
| UE ID | | | | | | | | RNTI, IMSI, GUTI | | |
| Handover related Information | | | | | | | | RACH less Info, validity Time info, Timer for satellite | | |
| TN Coverage Information | | | | | | | | TABLE 11 | | |

For the IEs according to the Table 20, 3GPP TS 38.423 standard, Table 13 for 'NTN-Config' and Table 14 for `EphemerisInfo' may be referenced.

According to an embodiment, the first message may be an XN setup request message, and the second message may be an XN setup response message. The satellite 620 may transmit an XN setup request message to the base station 1020 through the XN interface. The base station 1020 may transmit an XN setup response message to the satellite 620 through the XN interface. The XN setup request message may include at least one of the information in Table 3 to Table 11. The XN setup response message may include at least one of the information in Table 3 to Table 11. For example, the first message may include the following IEs as exemplified in Table 21.

**[Table 21]**

| **IE/Group Name** | | **Presenc e** | **Range** | **IE type and referenc e** | **Semantics description** | **Criticalit y** | **Assigne d Criticalit y** |
|---|---|---|---|---|---|---|---|
| Message Type | | M | | 9.2.3.1 | | YES | reject |
| Global NG-RAN Node ID | | M | | 9.2.2.3 | | YES | reject |
| TAI Support List | | M | | 9.2.3.20 | List of supported TAs and associated characteristic s. | YES | reject |
| AMF Region Information | | M | | 9.2.3.83 | Contains a list of all the AMF Regions to which the NG-RAN node belongs. | YES | reject |
| **List of Served Cells NR** | | | *0.. <maxnoofCellsinNG-RAN node>* | | Contains a list of cells served by the gNB. If a partial list of cells is signalled, it contains at least one cell per carrier configured at the gNB | YES | reject |
| | >Served Cell Information NR | M | | 9.2.2.11 | | - | |
| | >Neighbour Information NR | O | | 9.2.2.13 | | - | |
| | >Neighbour Information E-UTRA | O | | 9.2.2.14 | | - | |
| | >Served Cell Specific Info Request | O | | 9.2.2.102 | | YES | ignore |
| **List of Served Cells E-UTRA** | | | *0..* <*maxnoofCellsinNG-RAN node>* | | Contains a list of cells served by the ng-eNB. If a partial list of cells is signalled, it contains at least one cell per carrier configured at the ng-eNB | YES | reject |
| | >Served Cell Information E-UTRA | M | | 9.2.2.12 | | - | |
| | >Neighbour Information NR | O | | 9.2.2.13 | | - | |
| | >Neighbour Information E-UTRA | O | | 9.2.2.14 | | - | |
| | >SFN Offset | O | | 9.2.2.75 | Associated with the *ECGI* IE in the *Served Cell Information E-UTRA* IE | YES | ignore |
| Interface Instance Indication | | O | | 9.2.2.39 | | YES | reject |
| TNL Configuration Info | | O | | 9.2.3.96 | | YES | ignore |
| Partial List Indicator NR | | O | | Partial List Indicator 9.2.2.46 | Value "partial" indicates that a partial list of cells is included in the *List of Served Cells NR IE.* | YES | ignore |
| Cell and Capacity Assistance Information NR | | O | | 9.2.2.41 | Contains NR cell related assistance information. | YES | ignore |
| Partial List Indicator E-UTRA | | O | | Partial List Indicator 9.2.2.46 | Value "partial" indicates that a partial list of cells is included in the *List of Served Cells E-UTRA.* | YES | ignore |
| Cell and Capacity Assistance Information E-UTRA | | O | | 9.2.2.42 | Contains E-UTRA cell related assistance information. | YES | ignore |
| **Local NG-RAN Node Identifier** | | O | | 9.2.2.101 | | YES | ignore |
| Neighbour NG-RAN Node List | | | *0.. <maxnoofNeighbourN G-RAN nodes>* | | | YES | ignore |
| | >Global NG-RAN Node ID | M | | 9.2.2.3 | | - | |
| | >Local NG-RAN Node Identifier | M | | 9.2.2.101 | | - | |
| | NTN-Config | O | | 9.3.xxx | 3GPP TS 38.331 NTN-Config IE | | |
| | t-Service | O | | | 3GPP TS 38.331 NTN-Config IE | | |
| | referenceLocation | O | | | 3GPP TS 38.331 NTN-Config IE | | |
| | distanceThresh | O | | | 3GPP TS 38.331 NTN-Config IE | | |
| | ntn-NeighCellConfigLi st | | 0..1 | | 3GPP TS 38.331 NTN-Config IE | | |
| | >NTN-Config | O | | 9.3.xxx | 3GPP TS 38.331 NTN-Config IE | | |
| | >carrierFreq | O | | | 3GPP TS 38.331 NTN-Config IE | | |
| | >physCellId | O | | | 3GPP TS 38.331 NTN-Config IE | | |
| | CLASS INFORMATION | | 0..1 | | | | |
| | > POSITION CLASS | O | | | TABLE 6 | | |
| | > VELOCITY CLASS | O | | | TABLE 7 | | |
| | > ORBIT CLASS | O | | | TABLE 8 | | |
| | UE Group Information | O | | | TABLE 9 | | |
| | Satellite ID | O | | | TABLE 9 | | |
| | Trigger Condition for CHO | O | | | TABLE 9 | | |
| | Service Information | O | | | TABLE 9: PDU session ID, DRB ID, SRB ID, QoS Flow ID, Logical Channel ID | | |
| | Target Cell Information | O | | | TABLE 9 | | |
| | Validty Time (Timer) | O | | | TABLE 9 | | |
| | Satellite Group | | | | TABLE 10 | | |
| | UE ID | | | | RNTI, IMSI, GUTI | | |
| | Handover related Information | | | | RACH less Info, validity Time info, Timer for satellite | | |
| | TN Coverage Information | | | | TABLE 11 | | |

For the IEs according to the Table 21, 3GPP TS 38.423 standard, Table 13 for 'NTN-Config' and Table 14 for `EphemerisInfo' may be referenced.

According to an embodiment, the first message may be an NG-RAN node configuration update message, and the second message may be an NG-RAN node configuration update acknowledge message. The satellite 620 may transmit an NG-RAN node configuration update message to the base station 1020 through the XN interface. The base station 1020 may transmit an NG-RAN node configuration update acknowledge message to the satellite 620 through the XN interface. The NG-RAN node configuration update message may include at least one of the information in Table 3 to Table 11. The NG-RAN node configuration update acknowledge message may include at least one of the information in Table 3 to Table 11. For example, the first message may include the following IEs as exemplified in Table 22.

**[Table 22]**

| **IE/Group Name** | | | **Presence** | **Range** | **IE type and reference** | **Semantic s descripti on** | **Critic ality** | **Assig ned Critic ality** | |
|---|---|---|---|---|---|---|---|---|---|
| Message Type | | | M | | 9.2.3.1 | | YES | reject | |
| TAI Support List | | | O | | 9.2.3.20 | List of supported TAs and associate d characteri stics. | GLOB AL | reject | |
| CHOICE *Initiating NodeType* | | | M | | | | YES | ignore | |
| | *>gNB* | | | | | | | | |
| | | >>Served Cells To Update NR | O | | 9.2.2.15 | | YES | ignore | |
| | | >>Cell Assistanc e Informatio n NR | O | | 9.2.2.17 | | YES | ignore | |
| | | >>Cell Assistanc e Informatio n E-UTRA | O | | 9.2.2.43 | | YES | ignore | |
| | | >>Served Cell Specific Info Request | O | | 9.2.2.102 | | YES | ignore | |
| | *>ng-eNB* | | | | | | | | |
| | | >Served Cells to Update E-UTRA | O | | 9.2.2.16 | | YES | ignore | |
| | | >>Cell Assistanc e Informatio n NR | O | | 9.2.2.17 | | YES | ignore | |
| | | >>Cell Assistanc e Informatio n E-UTRA | O | | 9.2.2.43 | | YES | ignore | |
| **TNLA To Add List** | | | | 0..1 | | | YES | ignore | |
| | **>TNLA To Add Item** | | | *1.. <maxnoofTNLAss ociations>* | | | - | | |
| | | >>TNLA Transport Layer Informatio n | M | | CP Transport Layer Information 9.2.3.31 | CP Transport Layer Informatio n of NG-RAN node₁ | - | | |
| | | >> TNL Associatio n Usage | M | | 9.2.3.84 | | - | | |
| **TNLA To Update List** | | | | 0..1 | | | YES | ignore | |
| | **>TNLA To Update Item** | | | *1.. <maxnoofTNLAss ociations>* | | | - | | |
| | | >>TNLA Transport Layer Informatio n | M | | CP Transport Layer Information 9.2.3.31 | CP Transport Layer Informatio n of NG-RAN node₁ | - | | |
| | | >> TNL Associatio n Usage | O | | 9.2.3.84 | | - | | |
| **TNLA To Remove List** | | | | 0..1 | | | YES | ignore | |
| | **>TNLA To Remove Item** | | | *1.. <maxnoofTNLAss ociations*> | | | - | | |
| | | >>TNLA Transport Layer Informatio n | M | | CP Transport Layer Information 9.2.3.31 | CP Transport Layer Informatio n of NG-RAN node₁ | - | | |
| Global NG-RAN Node ID | | | O | | 9.2.2.3 | | YES | reject | |
| AMF Region Information To Add | | | O | | AMF Region Information 9.2.3.83 | List of all added AMF Regions to which the NG-RAN node belongs. | YES | reject | |
| AMF Region Information To Delete | | | O | | AMF Region Information 9.2.3.83 | List of all deleted AMF Regions to which the NG-RAN node belongs. | YES | reject | |
| Interface Instance Indication | | | O | | 9.2.2.39 | | YES | reject | |
| TNL Configuratio n Info | | | O | | 9.2.3.96 | | YES | ignore | |
| **Coverage Modificatio n List** | | | | *0* .. *1* | | List of cells with modified coverage. | GLOB AL | reject | |
| | **>Coverage Modificati on Item** | | | 0.. <*maxnoofCellsinNG -RAN node>* | | | - | | |
| | | >>Global NG-RAN Cell Identity | M | | Global NG-RAN Cell Identity 9.2.2.27 | NG-RAN Cell Global Identifier of the cell to be modified. | - | | |
| | | >>Cell Coverage State | M | | INTEGER (0..63, ...) | Value '0' indicates that the cell is inactive. Other values Indicates that the cell is active and also indicates the coverage configurat ion of the concerne d cell. | - | | |
| | | >>Cell Deployme nt Status Indicator | O | | ENUMERAT ED(pre-change-notification, .. .) | Indicates the Cell Coverage State is planned to be used at the next reconfigur ation. | - | | |
| | | **>>Cell Replacin q Info** | C-*ifCellDeploymentStatusInd icatorPresent* | | | | - | | |
| | | **>>>Repl acing Cells** | | 0.. *<maxnoofCellsinNG -RAN node>* | | | - | | |
| | | >>>>G lobal NG-RAN Cell Identity | | | Global NG-RAN Cell Identity 9.2.2.27 | NG-RAN Cell Global Identifier of a cell that may replace all or part of the coverage of the cell to be modified. | - | | |
| | | **>>SSB Coverage Modificat ion List** | | 0.. 1 | | List of SSB beams with modified coverage. | - | | |
| | | **>>>SSB Covera ge Modific ation Item** | | *0.. <maxnoofSSBAre* as> | | | - | | |
| | | >>>>S SB Index | M | | INTEGER (063) | Identifier of the SSB beam to be modified. | - | | |
| | | | >>>>S SB Covera ge State | M | | INTEGER (0..15, ...) | Value '0' indicates that the SSB beam is inactive. Other values Indicates that the SSB beam is active and also indicates the coverage configurat ion of the concerne d SSB beam. | - | |
| | | >>Covera ge Modificati on Cause | | O | | ENUMERAT ED (coverage, cell edge capacity, ...) | Indicates the reason for the coverage modificati on in NG-RAN node₁. | YES | ignore |
| Local NG-RAN Node Identifier | | | | O | | 9.2.2.101 | | YES | ignore |
| **Neighbour NG-RAN Node List** | | | | | *0.. <maxnoofNeighb ourNG-RAN nodes>* | | | YES | ignore |
| | >Global NG-RAN Node ID | | | M | | 9.2.2.3 | | - | |
| | >Local NG-RAN Node Identifier | | | M | | 9.2.2.101 | | - | |
| Local NG-RAN Node Identifier Removal | | | | O | | Local NG-RAN Node Identifier 9.2.2.101 | | YES | ignore |
| NTN-Config | | | | O | | 9.3.xxx | 3GPP TS 38.331 NTN-Config IE | | |
| t-Service | | | | O | | | 3GPP TS 38.331 NTN-Config IE | | |
| referenceLoc ation | | | | O | | | 3GPP TS 38.331 NTN-Config IE | | |
| distanceThre sh | | | | O | | | 3GPP TS 38.331 NTN-Config IE | | |
| ntn-NeighCellCo nfigList | | | | | 0..1 | | 3GPP TS 38.331 NTN-Config IE | | |
| >NTN-Config | | | | O | | 9.3.xxx | 3GPP TS 38.331 NTN-Config IE | | |
| >carrierFreq | | | | O | | | 3GPP TS 38.331 NTN-Config IE | | |
| >physCellId | | | | O | | | 3GPP TS 38.331 NTN-Config IE | | |
| CLASS INFORMATI ON | | | | | 0..1 | | | | |
| > POSITION CLASS | | | | O | | | TABLE 6 | | |
| > VELOCITY CLASS | | | | O | | | TABLE 7 | | |
| > ORBIT CLASS | | | | O | | | TABLE 8 | | |
| UE Group Information | | | | O | | | TABLE 9 | | |
| Satellite ID | | | | O | | | TABLE 9 | | |
| Trigger Condition for CHO | | | | O | | | TABLE 9 | | |
| Service Information | | | | O | | | TABLE 9: PDU session ID, DRB ID, SRB ID, QoS Flow ID, Logical Channel ID | | |
| Target Cell Information | | | | O | | | TABLE 9 | | |
| Validty Time (Timer) | | | | O | | | TABLE 9 | | |
| Satellite Group | | | | | | | TABLE 10 | | |
| UE ID | | | | | | | RNTI, IMSI, GUTI | | |
| Handover related Information | | | | | | | RACH less Info, validity Time info, Timer for satellite | | |
| TN Coverage Information | | | | | | | TABLE 11 | | |

For the IEs according to the Table 22, 3GPP TS 38.423 standard, Table 13 for 'NTN-Config' and Table 14 for 'EphemerisInfo' may be referenced.

According to an embodiment, the first message may be an S-node addition request message, and the second message may be an S-node addition response message. The satellite 620 may transmit an S-node addition request message to the base station 1020 through the XN interface. The base station 1020 may transmit an S-node addition response message to the satellite 620 through the XN interface. The S-node addition request message may include at least one of the information in Table 3 to Table 11. The S-node addition response message may include at least one of the information in Table 3 to Table 11. For example, the first message may include the following IEs as exemplified in Table 23.

**[Table 23]**

| **IE/Group Name** | | | **Presence** | **Range** | **IE type and reference** | **Semantics descriptio n** | **Criticalit y** | **Assigne d Criticalit y** |
|---|---|---|---|---|---|---|---|---|
| | | | | | | | | |
| Message Type | | | M | | 9.2.3.1 | | YES | reject |
| M-NG-RAN node UE XnAP ID | | | M | | NG-RAN node UE XnAP ID 9.2.3.16 | Allocated at the M-NG-RAN node | YES | reject |
| UE Security Capabilities | | | M | | 9.2.3.49 | | YES | reject |
| S-NG-RAN node Security Key | | | M | | 9.2.3.51 | | YES | reject |
| S-NG-RAN node UE Aggregate Maximum Bit Rate | | | M | | UE Aggregate Maximum Bit Rate 9.2.3.17 | The UE Aggregate Maximum Bit Rate is split into M-NG-RAN node UE Aggregate Maximum Bit Rate and S-NG-RAN node UE Aggregate Maximum Bit Rate which are enforced by M-NG-RAN node and S-NG-RAN node respectivel v. | YES | reject |
| Selected PLMN | | | O | | PLMN Identity 9.2.2.4 | The selected PLMN of the SCG in the S-NG-RAN node. | YES | ignore |
| Mobility Restriction List | | | O | | 9.2.3.53 | | YES | ignore |
| Index to RAT/Frequency Selection Priority | | | O | | 9.2.3.23 | | YES | reject |
| **PDU Session Resources To Be Added List** | | | | 1 | | | YES | reject |
| | **>PDU Session** | | | 1 .. | | NOTE: If | - | |
| **Resources To Be Added Item** | | | | *<maxnoofPDUSessio* ns> | | neither the *PDU Session Resource Setup Info - SN terminated* IE nor the *PDU Session Resource Setup Info - MN terminated* IE is present in a *PDU Session Resources To Be Added Item* IE, abnormal conditions as specified in clause 8.3.1.4 applv. | | |
| | >>PDU Session ID | | M | | 9.2.3.18 | | - | |
| | >>S-NSSAI | | M | | 9.2.3.21 | | - | |
| | >>S-N G-RAN node PDU Session Aggregate Maximum Bit Rate | | O | | PDU Session Aggregate Maximum Bit Rate 9.2.3.69 | | - | |
| | >>PDU Session Resource Setup Info - SN terminated | | O | | 9.2.1.5 | | - | |
| | >>PDU Session Resource Setup Info - MN terminated | | O | | 9.2.1.7 | | - | |
| M-NG-RAN node to S-NG-RAN node Container | | | M | | OCTET STRING | Includes the CG-*Configlnfo* message as defined in subclause 11.2.2 of TS 38.331 [10] | YES | reject |
| S-NG-RAN node UE XnAP ID | | | O | | NG-RAN node UE XnAP ID 9.2.3.16 | Allocated at the S-NG-RAN node | YES | reject |
| Expected UE Behaviour | | | O | | 9.2.3.81 | | YES | ignore |
| Requested Split SRBs | | | O | | ENUMERATE D (srb1, srb2, srb1&2, ...) | Indicates that resources for Split SRBs are requested. | YES | reject |
| PCell ID | | | O | | Global NG-RAN Cell Identity 9.2.2.27 | | YES | reject |
| Desired Activity Notification Level | | | O | | 9.2.3.77 | | YES | ignore |
| Available DRB IDs | | | C-ifSNterminat ed | | DRB List 9.2.1.29 | Indicates the list of DRB IDs that the S-NG-RAN node may use for SN-terminated bearers. | YES | reject |
| S-NG-RAN node Maximum Integrity Protected Data Rate Uplink | | | O | | Bit Rate 9.2.3.4 | The S-NG-RAN node Maximum Integrity Protected Data Rate Uplink is a portion of the UE's Maximum Integrity Protected Data Rate in the Uplink, which is enforced by the S-NG-RAN node for the UE's SN terminated PDU sessions. If the S-NG-*RAN node Maximum Integrity Protected Data Rate Downlink* IE is not present, this IE applies to both UL and DL. | YES | reject |
| S-NG-RAN node Maximum Integrity | | | O | | Bit Rate 9.2.3.4 | The S-NG-RAN node Maximum | YES | reject |
| Protected Data Rate Downlink | | | | | | Integrity Protected Data Rate Downlink is a portion of the UE's Maximum Integrity Protected Data Rate in the Downlink, which is enforced by the S-NG-RAN node for the UE's SN terminated PDU sessions. | | |
| Location Information at S-NODE reporting | | | O | | ENUMERATE D (pscell, ...) | Indicates that the user's Location Information at S-NODE is to be provided. | YES | ignore |
| MR-DC Resource Coordination Information | | | O | | 9.2.2.33 | Information used to coordinate resource utilisation between M-NG-RAN node and S-NG-RAN node. | YES | ignore |
| Masked IMEISV | | | O | | 9.2.3.32 | | YES | ignore |
| NE-DC TDM Pattern | | | O | | 9.2.2.38 | | YES | ignore |
| SN Addition Trigger Indication | | | O | | ENUMERATE D (SN change, inter-MN HO, intra-MN HO, ...) | This IE indicates the trigger for S-NG-RAN node Addition Preparatio n procedure | YES | reject |
| Trace Activation | | | O | | 9.2.3.55 | | YES | ignore |
| Requested Fast MCG recovery via SRB3 | | | O | | ENUMERATE D (true, ...) | Indicates that the resources for fast MCG recovery via SRB3 are requested. | YES | ignore |
| UE Radio Capability ID | | | O | | 9.2.3.138 | | YES | reject |
| Source NG-RAN Node ID | | | O | | Global NG-RAN Node ID 9.2.2.3 | The NG-RAN Node ID of the source NG-RAN node or the source SN. | YES | ignore |
| Management Based MDT PLMN List | | | O | | MDT PLMN List 9.2.3.133 | | YES | ignore |
| UE History Information | | | O | | 9.2.3.64 | | YES | ignore |
| UE History Information from the UE | | | O | | 9.2.3.110 | | YES | ignore |
| PSCell Change History | | | O | | ENUMERATE D (reporting full history, ...) | | YES | ignore |
| IAB Node Indication | | | O | | ENUMERATE D (true, ...) | | YES | reject |
| No PDU Session Indication | | | O | | ENUMERATE D (true, ...) | This IE applies only if the UE is an IAB-MT. | YES | ignore |
| **CHO Information SN Addition** | | | O | | | | YES | reject |
| | | >Source M-NG-RAN node ID | M | | Global NG-RAN Node ID 9.2.2.3 | | - | |
| | | >Source M-NG-RAN node UE XnAP ID | M | | NG-RAN node UE XnAP ID 9.2.3.16 | Allocated at the source M-NG-RAN node | - | |
| | | >Estimated Arrival Probability | O | | INTEGER (1..100) | | - | |
| SCG Activation Request | | | O | | 9.2.3.154 | | YES | ignore |
| **Conditional PSCell Addition Information Request** | | | O | | | | YES | reject |
| | | >Maximum Number of PSCells To Prepare | M | | INTEGER (1..8, ...) | Indicates the maximum number of PSCells that the target SN may prepare. | - | |
| | | >Estimated Arrival Probability | O | | INTEGER (1..100) | Indicates the arrival probability for the UE towards the candidate target SN. | - | |
| S-NG-RAN node | | | O | | UE Slice | This IE | YES | reject |
| UE Slice Maximum Bit Rate | | | | | Maximum Bit Rate List 9.2.3.167 | indicates the S-NG-RAN node portion of the UE Slice Aggregate Maximum Bit Rate as specified in TS 23.501 [7] | | |
| F1-terminating IAB-donor Indicator | | | O | | ENUMERATE D (true, ...) | This IE applies only if the UE is an IAB-MT. | YES | reject |
| NTN-Config | | | O | | 9.3.xxx | 3GPP TS 38.331 NTN-Config IE | | |
| t-Service | | | O | | | 3GPP TS 38.331 NTN-Config IE | | |
| referenceLocatio n | | | O | | | 3GPP TS 38.331 NTN-Config IE | | |
| distanceThresh | | | O | | | 3GPP TS 38.331 NTN-Config IE | | |
| ntn-NeighCellConfigL ist | | | | *0..1* | | 3GPP TS 38.331 NTN-Config IE | | |
| >NTN-Config | | | O | | 9.3.xxx | 3GPP TS 38.331 NTN-Config IE | | |
| >carrierFreq | | | O | | | 3GPP TS 38.331 NTN-Config IE | | |
| >physCellId | | | O | | | 3GPP TS 38.331 NTN-Config IE | | |
| CLASS INFORMATION | | | | *0..1* | | | | |
| > POSITION CLASS | | | O | | | TABLE 6 | | |
| > VELOCITY CLASS | | | O | | | TABLE 7 | | |
| > ORBIT CLASS | | | O | | | TABLE 8 | | |
| UE Group Information | | | O | | | TABLE 9 | | |
| Satellite ID | | | O | | | TABLE 9 | | |
| Trigger Condition for CHO | | | O | | | TABLE 9 | | |
| Service Information | | | O | | | TABLE 9: PDU session ID, DRB ID, SRB ID, QoS Flow ID, Logical Channel ID | | |
| Target Cell Information | | | O | | | TABLE 9 | | |
| Validty Time (Timer) | | | O | | | TABLE 9 | | |
| Satellite Group | | | | | | TABLE 10 | | |
| UE ID | | | | | | RNTI, IMSI, GUTI | | |
| Handover related Information | | | | | | RACH less Info, validity Time info, Timer for satellite | | |
| TN Coverage Information | | | | | | TABLE 11 | | |

For the IEs according to the Table 23, 3GPP TS 38.423 standard, Table 13 for 'NTN-Config' and Table 14 for `EphemerisInfo' may be referenced.

According to an embodiment, the first message may be an S-node modification request message, and the second message may be an S-node modification response message. The satellite 620 may transmit an S-node modification request message to the base station 1020 through the XN interface. The base station 1020 may transmit an S-node modification response message to the satellite 620 through the XN interface. The S-node modification request message may include at least one of the information in Table 3 to Table 11. The S-node modification response message may include at least one of the information in Table 3 to Table 11. For example, the first message may include the following IEs as exemplified in Table 24.

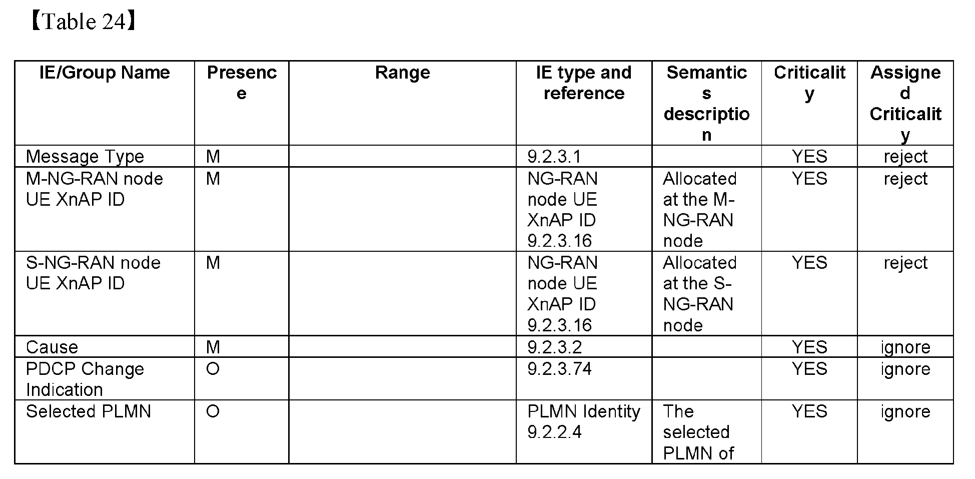

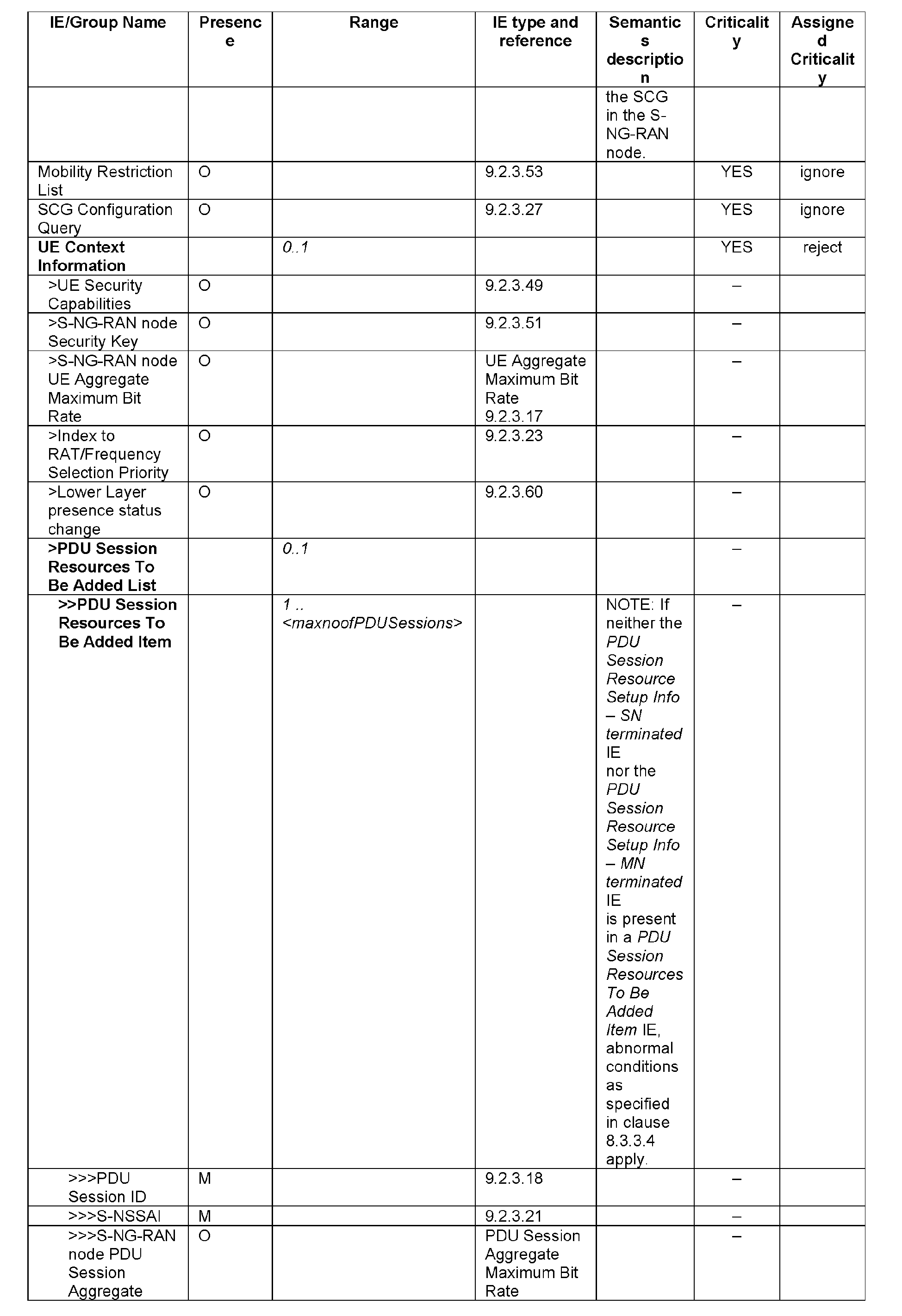

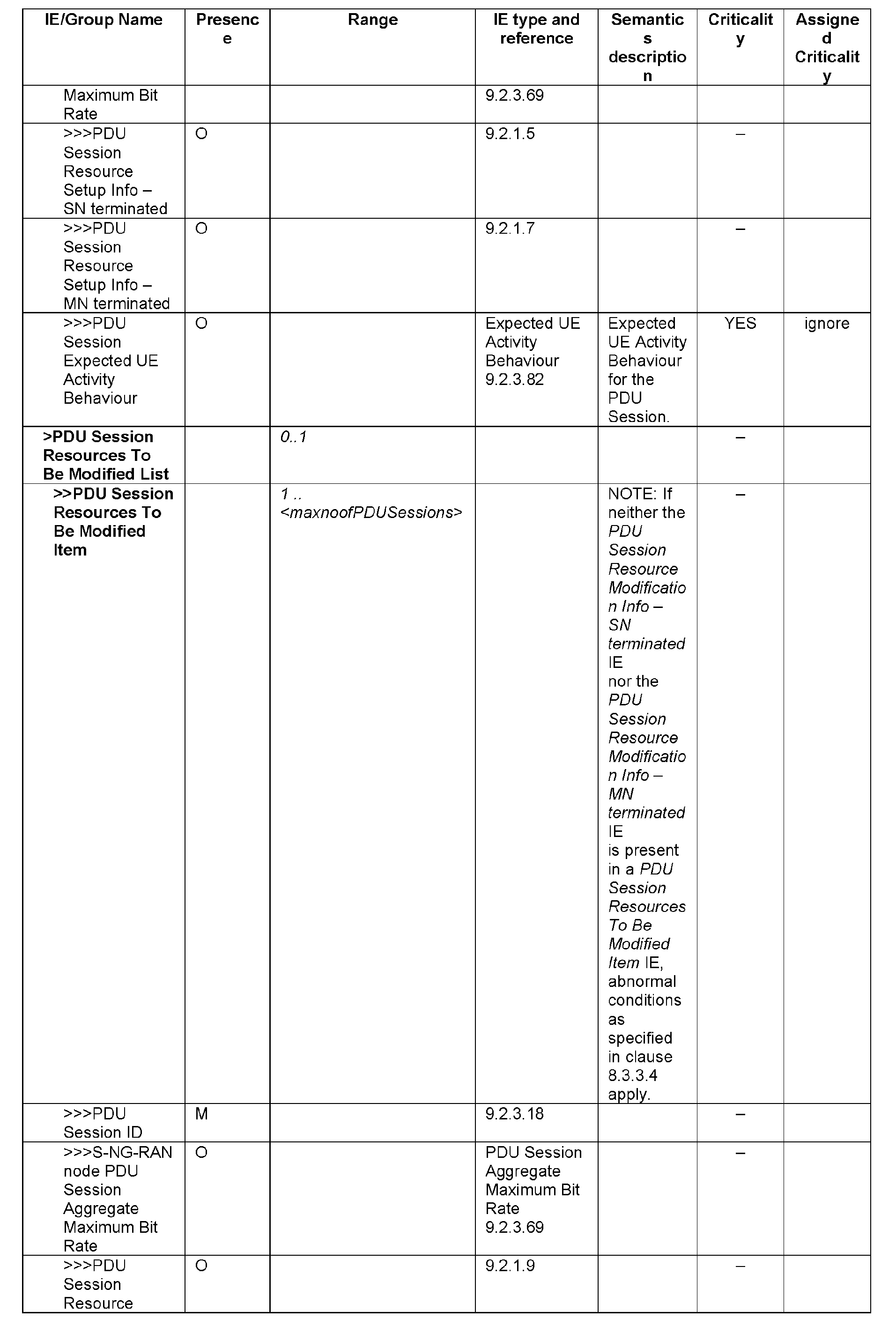

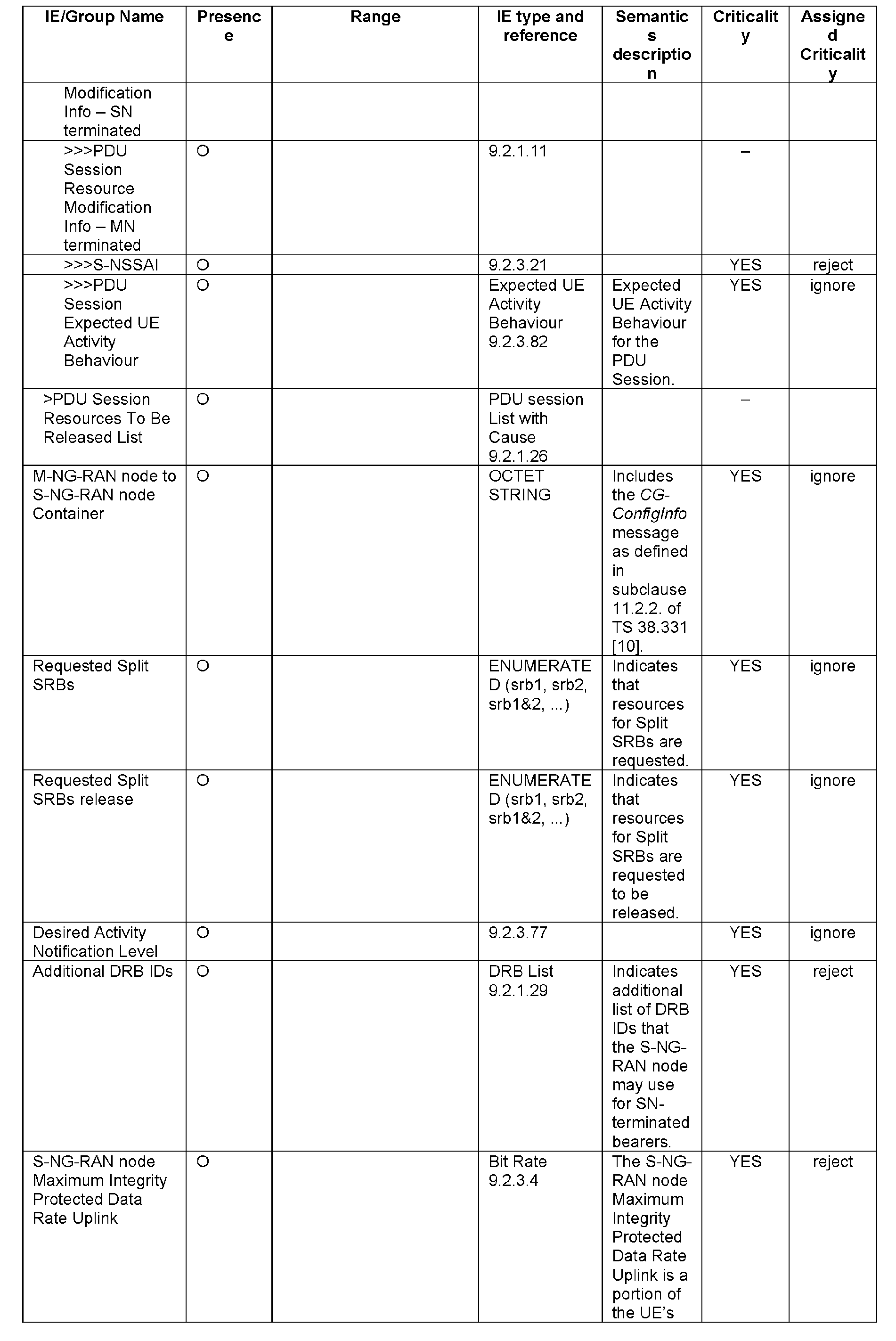

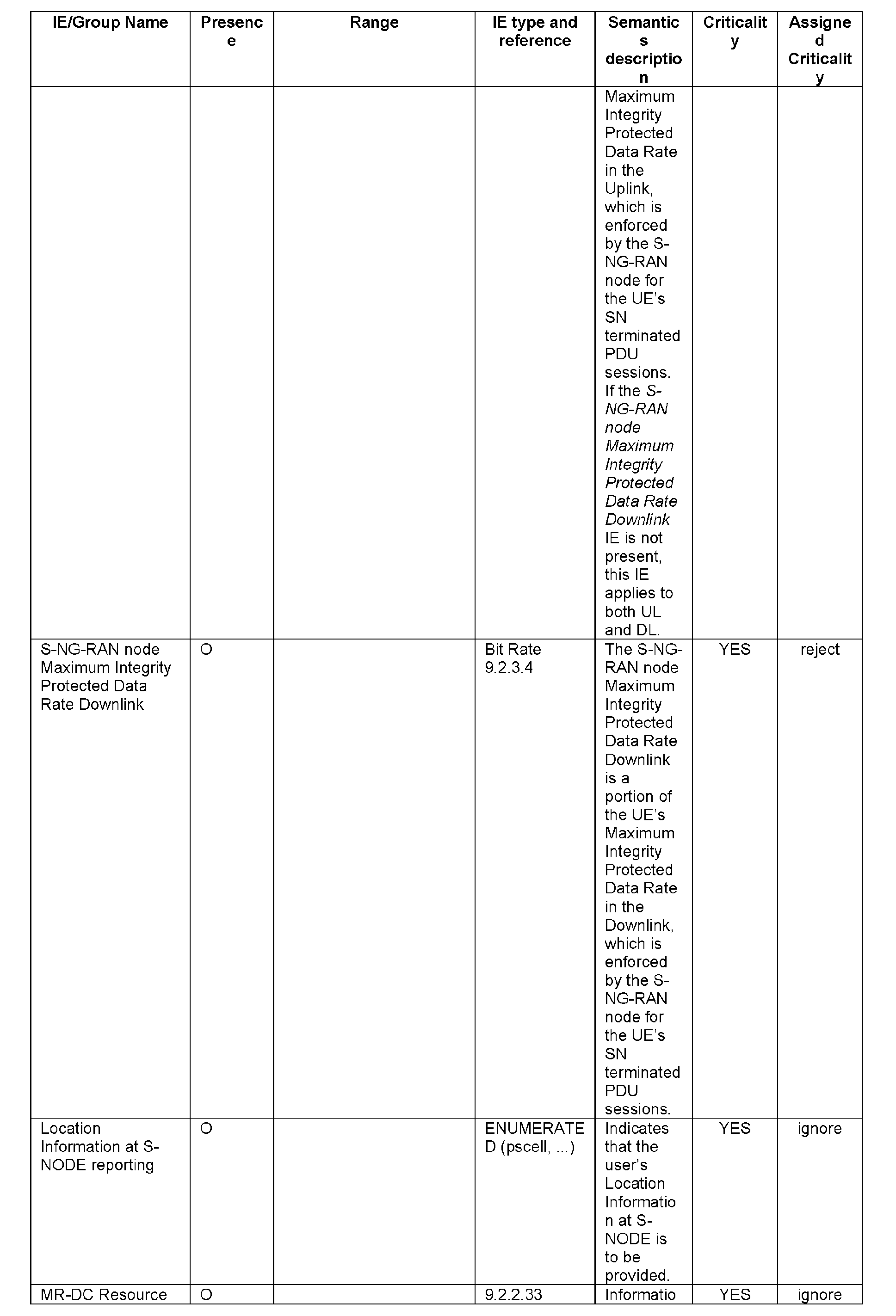

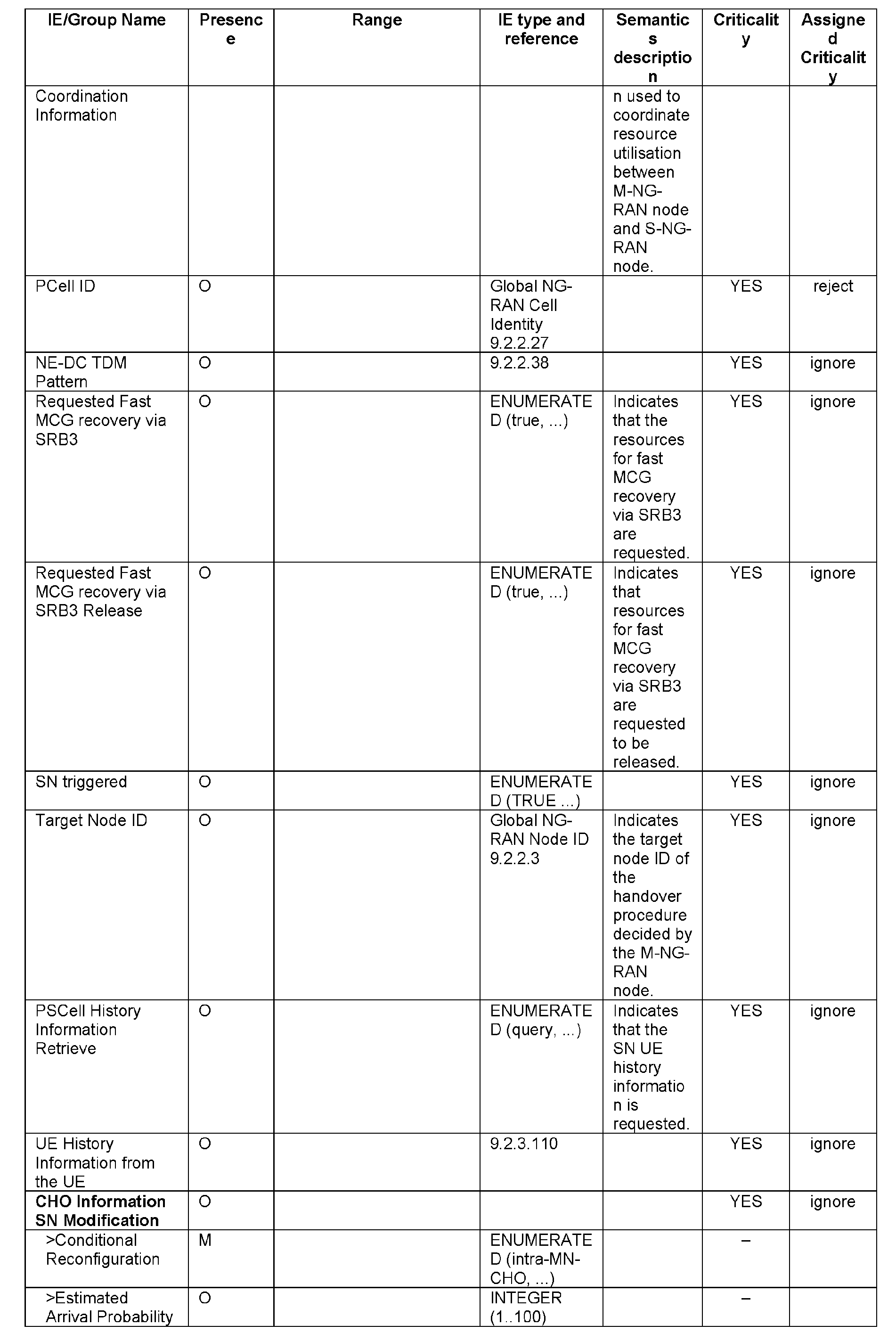

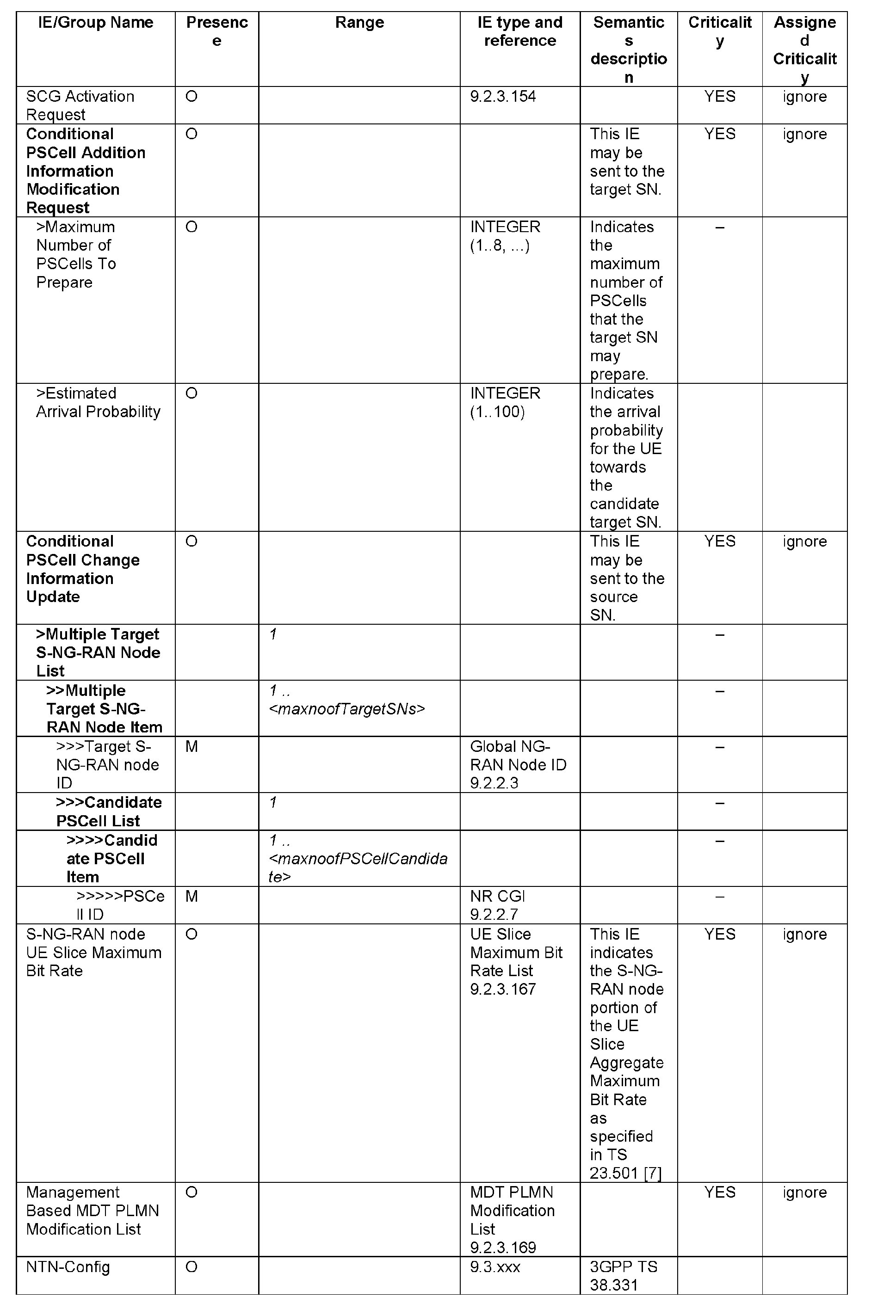

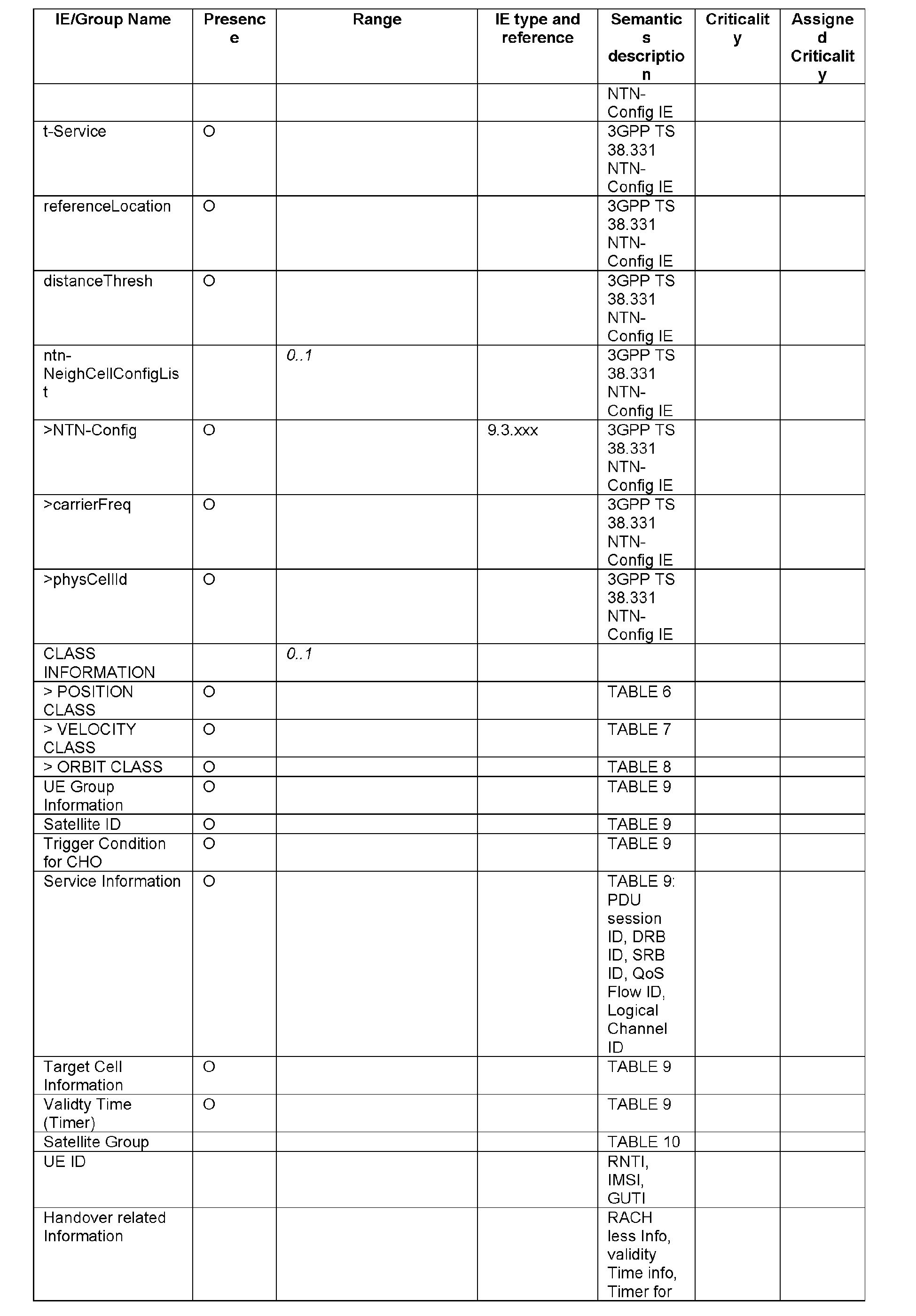

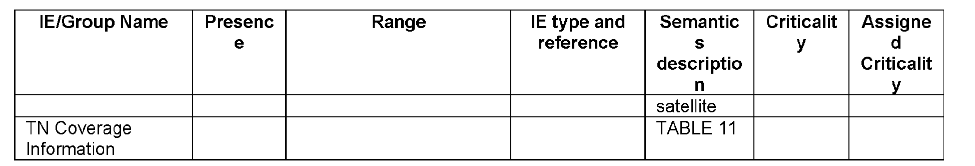

For the IEs according to the Table 24, 3GPP TS 38.423 standard, Table 13 for 'NTN-Config' and Table 14 for `EphemerisInfo' may be referenced.

According to an embodiment, the first message may be an S-node modification request message, and the second message may be an S-node modification acknowledge message. The satellite 620 may transmit an S-node modification request message to the base station 1020 through the XN interface. The base station 1020 may transmit an S-node modification acknowledge message to the satellite 620 through the XN interface. The S-node modification request message may include at least one of the information in Table 3 to Table 11. The S-node modification confirmation message may include at least one of the information in Table 3 to Table 11. For example, the first message may include the following IEs as exemplified in Table 25.

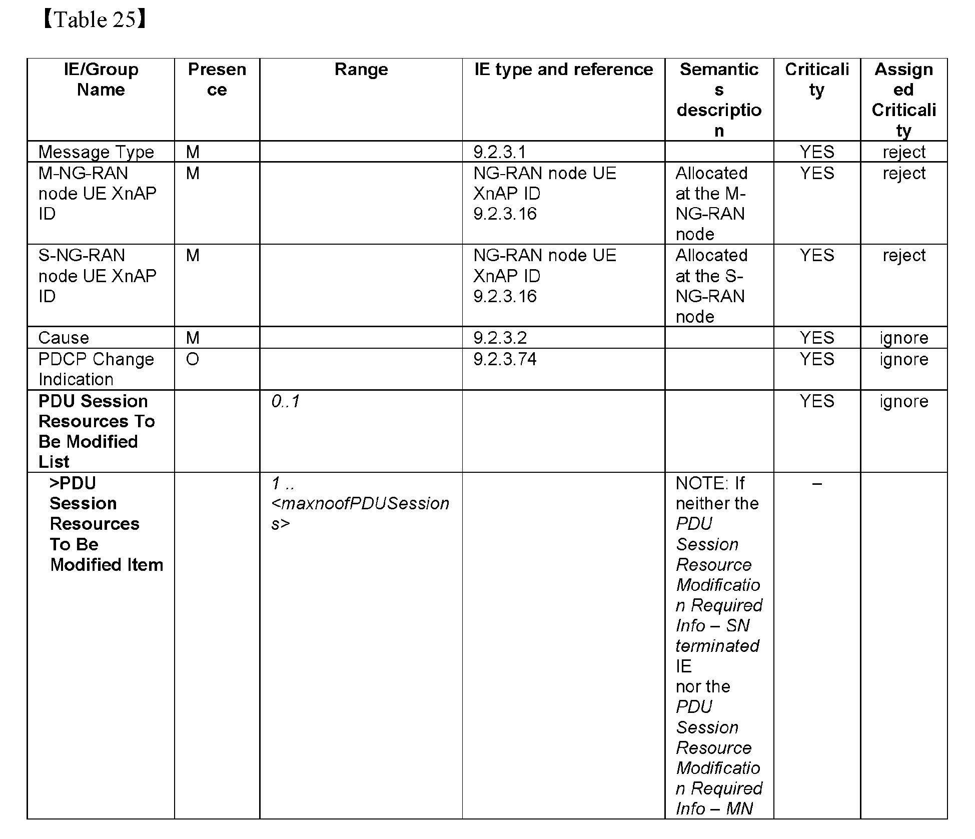

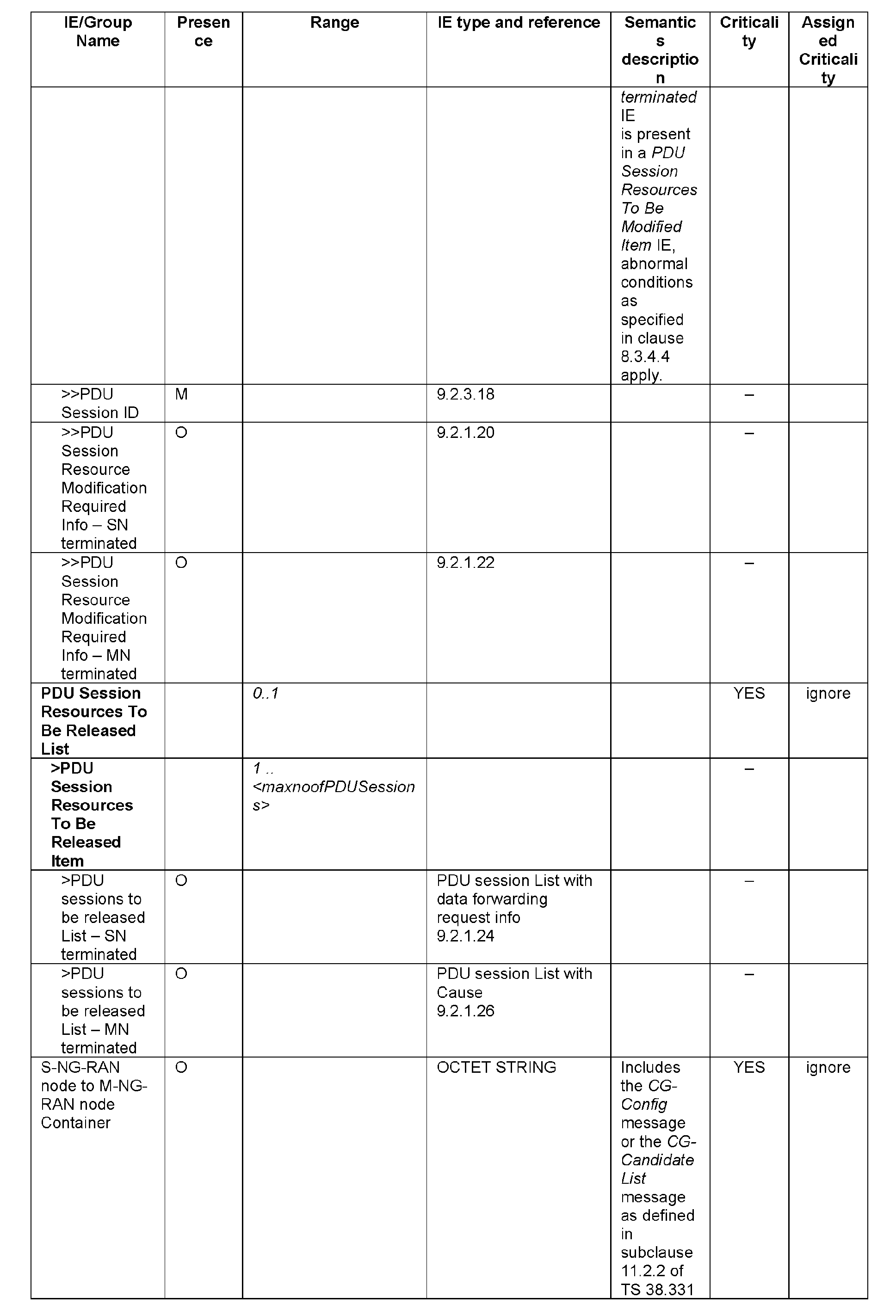

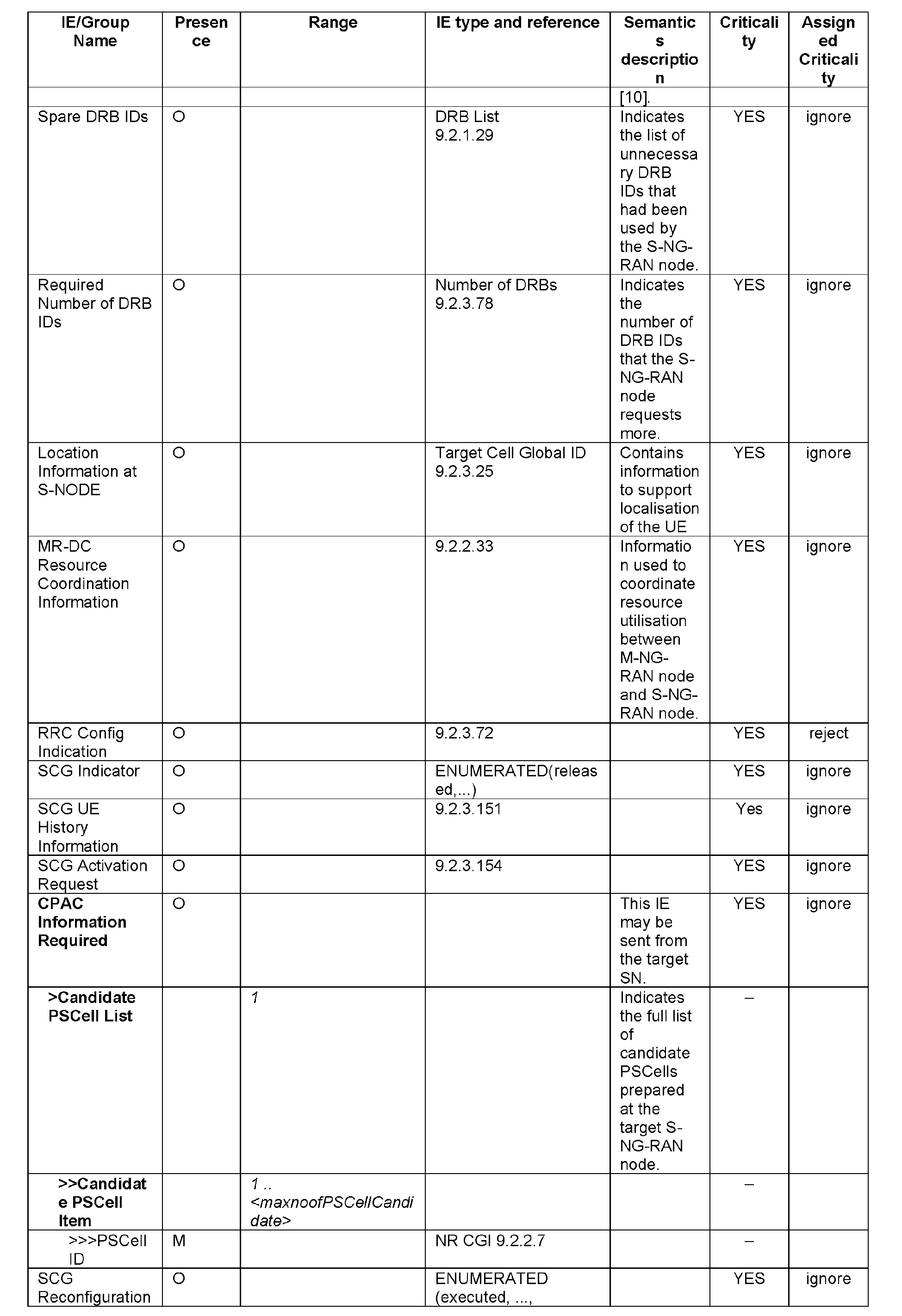

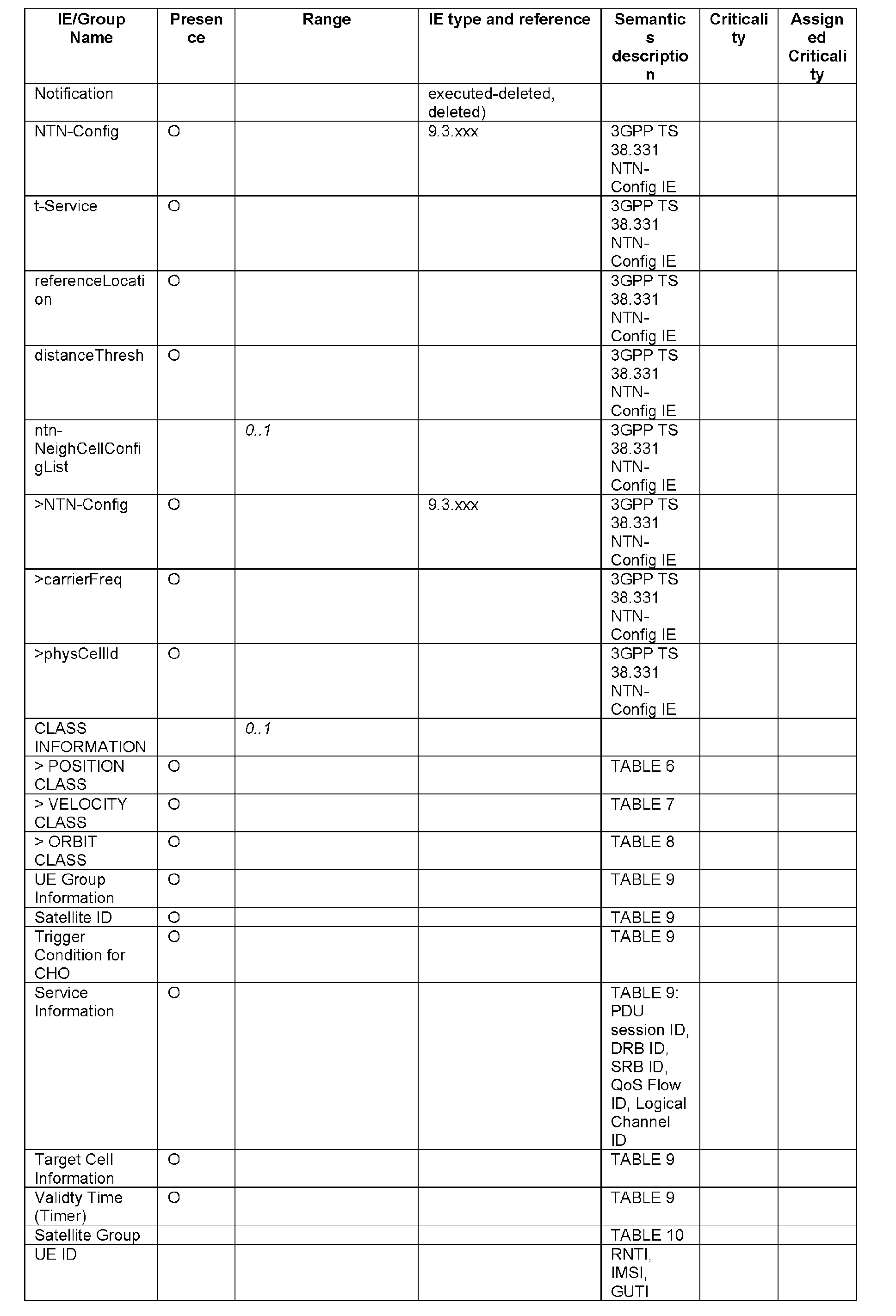

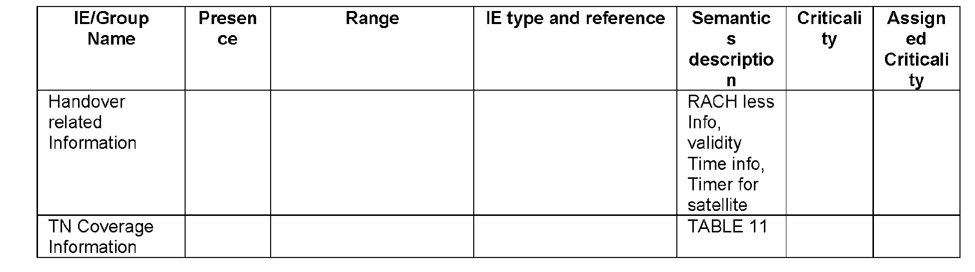

For the IEs according to the Table 25, 3GPP TS 38.423 standard, Table 13 for 'NTN-Config' and Table 14 for `EphemerisInfo' may be referenced.

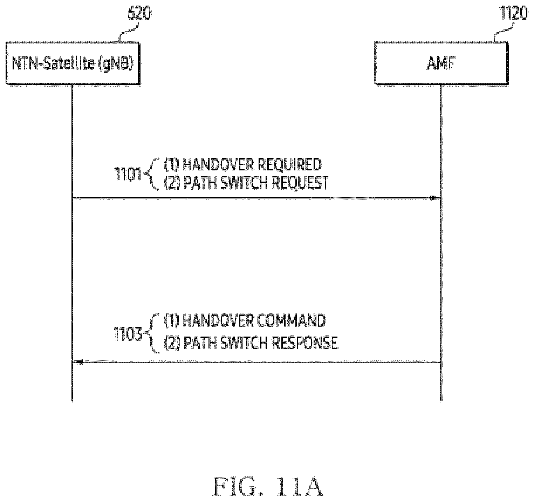

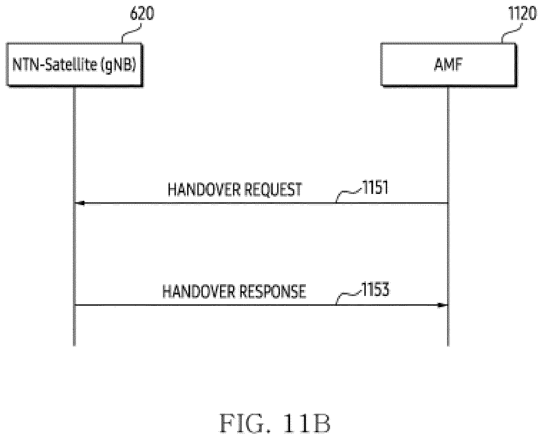

FIGS. 11A and 11B illustrate an example of signaling through an NG interface in an NTN. For an AMF for the NG interface, descriptions of the AMF 235 and the AMF 640 may be referenced.

Referring to FIG. 11A, in an operation 1101, a satellite 620 may transmit a first message to an AMF 1120 through the NG interface (e.g., an N2 interface). The AMF 1120 may receive the first message from the satellite 620.

In an operation 1103, the AMF 1120 may transmit a second message to the satellite 620 through an NG interface (e.g., the N2 interface). The satellite 620 may receive the second message from the AMF 1120.

According to an embodiment, the first message may be a handover required message, and the second message may be a handover command message. The satellite 620 may transmit a handover required message to the AMF 1120 through the NG interface (e.g., the N2 interface). The AMF 1120 may transmit a handover command message to the satellite 620 through the NG interface (e.g., the N2 interface). The handover required message may include at least one of the information in Table 3 to Table 11. The handover command message may include at least one of the information in Table 3 to Table 11. For example, the first message may include the following IEs as exemplified in Table 26.

**[Table 26]**

| **IE/Group Name** | **Presenc e** | **Range** | **IE type and referenc e** | **Semantics descriptio n** | **Criticalit y** | **Assigne d Criticalit y** |
|---|---|---|---|---|---|---|
| Message Tvpe | M | | 9.3.1.1 | | YES | reject |
| AMF UE NGAP ID | M | | 9.3.3.1 | | YES | reject |
| RAN UE NGAP ID | M | | 9.3.3.2 | | YES | reject |
| Handover Type | M | | 9.3.1.22 | | YES | reject |
| Cause | M | | 9.3.1.2 | | YES | ignore |
| Target ID | M | | 9.3.1.25 | | YES | reject |
| Direct Forwarding Path Availability | O | | 9.3.1.64 | | YES | ignore |
| PDU Session Resource List | | *1* | | | YES | reject |
| >PDU Session Resource Item | | *1..<maxnoofPDUSessions* > | | | - | |
| >>PDU Session ID | M | | 9.3.1.50 | | - | |
| >>Handover Required Transfer | M | | OCTET STRING | Containing the *Handover Required Transfer* IE specified in subclause 9.3.4.14. | - | |
| Source to Target Transparent Container | M | | 9.3.1.20 | | YES | reject |
| NTN-Config | O | | 9.3.xxx | 3GPP TS 38.331 NTN-Config IE | | |
| t-Service | O | | | 3GPP TS 38.331 NTN-Config IE | | |
| referenceLocation | O | | | 3GPP TS 38.331 NTN-Config IE | | |
| distanceThresh | O | | | 3GPP TS 38.331 NTN-Config IE | | |
| ntn-NeighCellConfigLis t | | *0*..*1* | | 3GPP TS 38.331 NTN-Config IE | | |
| >NTN-Config | O | | 9.3.xxx | 3GPP TS 38.331 NTN-Config IE | | |
| >carrierFreq | O | | | 3GPP TS 38.331 NTN-Config IE | | |
| >physCellId | O | | | 3GPP TS 38.331 NTN-Config IE | | |
| CLASS INFORMATION | | *0..1* | | | | |
| > POSITION CLASS | O | | | TABLE 6 | | |
| > VELOCITY CLASS | O | | | TABLE 7 | | |
| > ORBIT CLASS | O | | | TABLE 8 | | |
| UE Group Information | O | | | TABLE 9 | | |
| Satellite ID | O | | | TABLE 9 | | |
| Trigger Condition for CHO | O | | | TABLE 9 | | |
| Service Information | O | | | TABLE 9: PDU session ID, DRB ID, SRB ID, QoS Flow ID, Logical Channel ID | | |
| Target Cell Information | O | | | TABLE 9 | | |
| Validtv Time (Timer) | O | | | TABLE 9 | | |
| Satellite Group | | | | TABLE 10 | | |
| UE ID | | | | RNTI, IMSI, GUTI | | |
| Handover related Information | | | | RACH less Info, validity Time info, Timer for satellite | | |
| TN Coverage Information | | | | TABLE 11 | | |

For the IEs according to the Table 26, 3GPP TS 38.413 standard, Table 13 for 'NTN-Config' and Table 14 for `EphemerisInfo' may be referenced.

According to an embodiment, the first message may be a path switch request message, and the second message may be a path switch response message. The satellite 620 may transmit a path switch request message to the AMF 1120 through the NG interface (e.g., the N2 interface). The AMF 1120 may transmit a path switch response message to the satellite 620 through the NG interface (e.g., the N2 interface). The path switch request message may include at least one of the information in Table 3 to Table 11. The path switch response message may include at least one of the information in Table 3 to Table 11. For example, the first message may include the following IEs as exemplified in Table 27.

**[Table 27]**

| **IE/Group Name** | **Presenc e** | **Range** | **IE type and reference** | **Semantics descriptio n** | **Criticalit y** | **Assigne d Criticalit y** |
|---|---|---|---|---|---|---|
| Message Type | M | | 9.3.1.1 | | YES | reject |
| RAN UE NGAP ID | M | | 9.3.3.2 | | YES | reject |
| Source AMF UE NGAP ID | M | | AMF UE NGAP ID 9.3.3.1 | | YES | reject |
| User Location Information | M | | 9.3.1.16 | | YES | ignore |
| UE Security Capabilities | M | | 9.3.1.86 | | YES | ignore |
| PDU Session Resource to be Switched in Downlink List | | *1* | | | YES | reject |
| >PDU Session Resource to be Switched in Downlink Item | | *1.. <maxnoofPDUSession s>* | | | - | |
| >>PDU Session ID | M | | 9.3.1.50 | | - | |
| >>Path Switch Request Transfer | M | | OCTET STRING | Containing the *Path Switch Request Transfer* IE specified in subclause 9.3.4.8. | - | |
| PDU Session Resource Failed to Setup List | | *0..1* | | | YES | ignore |
| >PDU Session Resource Failed to Setup Item | | *1.. <maxnoofPDUSession s>* | | | - | |
| >>PDU Session ID | M | | 9.3.1.50 | | - | |
| >>Path Switch Request Setup Failed Transfer | M | | OCTET STRING | Containing the *Path Switch Request Setup Failed Transfer* IE specified in subclause 9.3.4.15. | - | |
| RRC Resume Cause | O | | RRC Establishme nt Cause 9.3.1.111 | | YES | ignore |
| RedCap Indication | O | | 9.3.1.228 | | YES | ignore |
| NTN-Config | O | | 9.3.xxx | 3GPP TS 38.331 NTN-Config IE | | |
| t-Service | O | | | 3GPP TS 38.331 NTN-Config IE | | |
| referenceLocation | O | | | 3GPP TS 38.331 NTN-Config IE | | |
| distanceThresh | O | | | 3GPP TS 38.331 NTN-Config IE | | |
| ntn-NeighCellConfigLi st | | 0..1 | | 3GPP TS 38.331 NTN-Config IE | | |
| >NTN-Config | O | | 9.3.xxx | 3GPP TS 38.331 NTN-Config IE | | |
| >carrierFreq | O | | | 3GPP TS 38.331 NTN-Config IE | | |
| >physCellld | O | | | 3GPP TS 38.331 NTN-Config IE | | |
| CLASS INFORMATION | | 0..1 | | | | |
| > POSITION CLASS | O | | | TABLE 6 | | |
| > VELOCITY CLASS | O | | | TABLE 7 | | |
| > ORBIT CLASS | O | | | TABLE 8 | | |
| UE Group Information | O | | | TABLE 9 | | |
| Satellite ID | O | | | TABLE 9 | | |
| Trigger Condition for CHO | O | | | TABLE 9 | | |
| Service Information | O | | | TABLE 9: PDU session ID, DRB ID, SRB ID, QoS Flow ID, Logical Channel ID | | |
| Target Cell Information | O | | | TABLE 9 | | |
| Validty Time (Timer) | O | | | TABLE 9 | | |
| Satellite Group | | | | TABLE 10 | | |
| UE ID | | | | RNTI, IMSI, GUTI | | |
| Handover related Information | | | | RACH less Info, validity Time info, Timer for satellite | | |
| TN Coverage Information | | | | TABLE 11 | | |

For the IEs according to the Table 27, 3GPP TS 38.413 standard, Table 13 for 'NTN-Config' and Table 14 for `EphemerisInfo' may be referenced.

Referring to FIG. 11B, in an operation 1151, the AMF 1120 may transmit a first message to the satellite 620 through the NG interface (e.g., the N2 interface). The satellite 620 may receive the first message from the AMF 1120.

In an operation 1153, the satellite 620 may transmit a second message to the AMF 1120 through the NG interface (e.g., the N2 interface). The AMF 1120 may receive the second message from the satellite 620.

According to an embodiment, the first message may be a handover request message, and the second message may be a handover response message. The AMF 1120 may transmit a handover request message to the satellite 620 through the NG interface (e.g., the N2 interface). The satellite 620 may transmit a handover response message to the AMF 1120 through the NG interface (e.g., the N2 interface). The handover request message may include at least one of the information in Table 3 to Table 11. The handover response message may include at least one of the information in Table 3 to Table 11. For example, the first message may include the following IEs as exemplified in Table 28.

**[Table 28]**

| IE/Group Name | **Presenc e** | **Range** | **IE type and referenc e** | **Semantics descriptio n** | **Criticalit y** | **Assigne d Criticalit y** |
|---|---|---|---|---|---|---|
| Message Type | M | | 9.3.1.1 | | YES | reject |
| AMF UE NGAP ID | M | | 9.3.3.1 | | YES | reject |
| Handover Type | M | | 9.3.1.22 | | YES | reject |
| Cause | M | | 9.3.1.2 | | YES | ignore |
| UE Aggregate Maximum Bit Rate | M | | 9.3.1.58 | | YES | reject |
| Core Network Assistance Information for RRC INACTIVE | O | | 9.3.1.15 | | YES | ignore |
| UE Security Capabilities | M | | 9.3.1.86 | | YES | reject |
| Security Context | M | | 9.3.1.88 | | YES | reject |
| New Security Context Indicator | O | | 9.3.1.55 | | YES | reject |
| NASC | O | | NAS-PDU 9.3.3.4 | Refers to either the "Intra N1 mode NAS transparent container" or the "S1 mode to N1 mode NAS transparent container", the details of the IE definition and the encoding arespecifie d in TS 24.501 [26]. | YES | reject |
| PDU Session Resource Setup List | | 1 | | | YES | reject |
| >PDU Session Resource Setup Item | | *1.. <maxnoofPDUSessions* > | | | - | |
| >>PDU Session ID | M | | 9.3.1.50 | | - | |
| >>S-NSSAI | M | | 9.3.1.24 | | - | |
| >>Handover Request Transfer | M | | OCTET STRING | Containing the *PDU Session Resource Setup Request Transfer* IE specified in subclause 9.3.4.1. | - | |
| >>PDU Session Expected UE Activity Behaviour | O | | Expected UE Activity Behaviou r 9.3.1.94 | Expected UE Activity Behaviour for the PDU Session. | YES | ignore |
| Allowed NSSAI | M | | 9.3.1.31 | Indicates the S-NSSAIs permitted by the network. | YES | reject |
| Trace Activation | O | | 9.3.1.14 | | YES | ignore |
| Masked IMEISV | O | | 9.3.1.54 | | YES | ignore |
| Source to Target Transparent Container | M | | 9.3.1.20 | | YES | reject |
| Mobility Restriction List | O | | 9.3.1.85 | | YES | ignore |
| Location Reporting Request Type | O | | 9.3.1.65 | | YES | ignore |
| RRC Inactive Transition Report Request | O | | 9.3.1.91 | | YES | ignore |
| GUAMI | M | | 9.3.3.3 | | YES | reject |
| Redirection for Voice EPS Fallback | O | | 9.3.1.116 | | YES | ignore |
| CN Assisted RAN Parameters Tuning | O | | 9.3.1.119 | | YES | ignore |
| SRVCC Operation Possible | O | | 9.3.1.128 | | YES | ignore |
| IAB Authorized | O | | 9.3.1.129 | | YES | reject |
| Enhanced Coverage Restriction | O | | 9.3.1.140 | | YES | ignore |
| UE Differentiation Information | O | | 9.3.1.144 | | YES | ignore |
| NR V2X Services Authorized | O | | 9.3.1.146 | | YES | ignore |
| LTE V2X Services Authorized | O | | 9.3.1.147 | | YES | ignore |
| NR UE Sidelink Aggregate Maximum Bit Rate | O | | 9.3.1.148 | This IE applies only if the UE is authorized for NR V2X services. | YES | ignore |
| LTE UE Sidelink Aggregate Maximum Bit Rate | O | | 9.3.1.149 | This IE applies only if the UE is authorized for LTE V2X services. | YES | ignore |
| PC5 QoS Parameters | O | | 9.3.1.150 | This IE applies only if the UE is authorized for NR V2X services. | YES | ignore |
| CE-mode-B Restricted | O | | 9.3.1.155 | | YES | ignore |
| UE User Plane CloT Support Indicator | O | | 9.3.1.160 | | YES | ignore |
| Management Based MDT PLMN List | O | | MDT PLMN List 9.3.1.168 | | YES | ignore |
| UE Radio Capability ID | O | | 9.3.1.142 | | YES | reject |
| Extended Connected Time | O | | 9.3.3.31 | | YES | ignore |
| Time Synchronisation Assistance Information | O | | 9.3.1.220 | | YES | ignore |
| UE Slice Maximum Bit Rate List | O | | 9.3.1.231 | | YES | ignore |
| 5G ProSe Authorized | O | | 9.3.1.233 | | YES | ignore |
| 5G ProSe UE PC5 Aggregate Maximum Bit Rate | O | | NR UE Sidelink Aggregat e Maximum Bit Rate 9.3.1.148 | This IE applies only if the UE is authorized for 5G ProSe services. | YES | ignore |
| 5G ProSe PC5 QoS Parameters | O | | 9.3.1.234 | This IE applies only if the UE is authorized for 5G ProSe services. | YES | ignore |
| NTN-Config | O | | 9.3.xxx | 3GPP TS 38.331 NTN-Config IE | | |
| t-Service | O | | | 3GPP TS 38.331 NTN-Config IE | | |
| referenceLocation | O | | | 3GPP TS 38.331 NTN-Config IE | | |
| distanceThresh | O | | | 3GPP TS 38.331 NTN-Config IE | | |
| ntn-NeighCellConfigLis t | | 0..1 | | 3GPP TS 38.331 NTN-Config IE | | |
| >NTN-Config | O | | 9.3.xxx | 3GPP TS 38.331 NTN-Config IE | | |
| >carrierFreq | O | | | 3GPP TS 38.331 NTN-Config IE | | |
| >physCellld | O | | | 3GPP TS 38.331 NTN-Config IE | | |
| CLASS INFORMATION | | 0..1 | | | | |
| > POSITION CLASS | O | | | TABLE 6 | | |
| > VELOCITY CLASS | O | | | TABLE 7 | | |
| > ORBIT CLASS | O | | | TABLE 8 | | |
| UE Group Information | O | | | TABLE 9 | | |
| Satellite ID | O | | | TABLE 9 | | |
| Trigger Condition for CHO | O | | | TABLE 9 | | |
| Service Information | O | | | TABLE 9: PDU session ID, DRB ID, SRB ID, QoS Flow ID, Logical Channel ID | | |
| Target Cell Information | O | | | TABLE 9 | | |
| Validty Time (Timer) | O | | | TABLE 9 | | |
| Satellite Group | | | | TABLE 10 | | |
| UE ID | | | | RNTI, IMSI, GUTI | | |
| Handover related Information | | | | RACH less Info, validity Time info, Timer for satellite | | |
| TN Coverage Information | | | | TABLE 11 | | |

For the IEs according to the Table 28, 3GPP TS 38.413 standard, Table 13 for 'NTN-Config' and Table 14 for `EphemerisInfo' may be referenced.

In FIG. 11B, the handover request message and the handover response message are described as examples, but the embodiment of the present disclosure is not limited thereto. In addition to a handover in which a cell is changed, a mobility order message and a mobility response message may be used as an embodiment of the present disclosure as messages used to confirm mobility of a terminal.

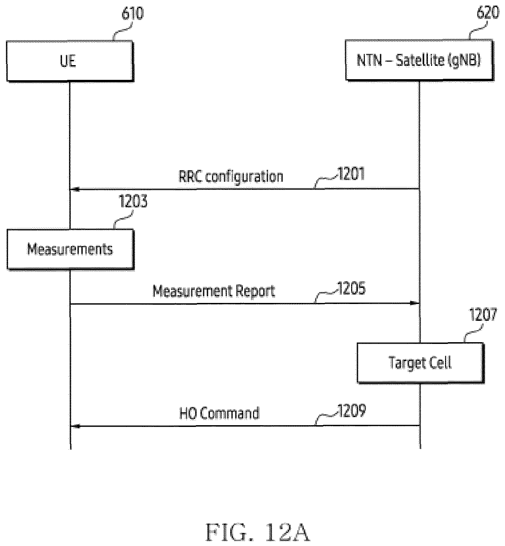

FIG. 12A illustrates an example of a handover procedure using a regenerative satellite. The handover procedure may include a handover from a non-terrestrial base station to a terrestrial base station, a handover from a terrestrial base station to a non-terrestrial base station, and a handover from a non-terrestrial base station to a non-terrestrial base station.

Referring to FIG. 12A, in an operation 1201, a satellite 620 may transmit an RRC configuration message to a UE 610. The RRC configuration message may include measurement configuration information. The RRC configuration message may include, for example, (i) measurement object information, (ii) reporting configuration information, (iii) measurement identity information, (iv) quantity configuration information, and (v) measurement gap information. The measurement object information may indicate an object on which the UE 610 will perform measurement.

Specifically, the measurement object information may indicate at least one of an intra-cell measurement object, an inter-cell measurement object, and an inter radio access technology (RAT) measurement object. A portion of the measurement object information may include identification information on a cell(s) served through a satellite and/or the satellite. The reporting configuration information may indicate a report type or a report condition regarding when the UE 610 reports a measurement result. Specifically, the report type indicates a type of a measurement result. The report condition may be information on an event or a cycle that triggers reporting of a measurement result in the UE 610. The measurement identity information may be information on a measurement identity indicating when and in what type the UE 610 will report for a certain measurement object, by associating a measurement object with a report configuration. The quantity configuration information may indicate a unit of measurement and/or a unit of report or be parameter information for filtering of a measurement result value. The measurement gap information may be information on a measurement gap, which is a period in which the UE 610 is capable of being used for measurement without consideration of data transmission with a serving cell.

In an operation 1203, the UE 610 may perform measurement. The UE 610 may perform measurement on each cell among one or more cells. The one or more cells may include a serving cell and at least one neighboring cell. The one or more cells may include a cell provided by a satellite and/or a cell provided by a terrestrial base station. The UE 610 may perform measurement based on the measurement configuration information. For example, the UE 610 may measure cell quality based on reference signals (e.g., a CRS and a CSI-RS) and/or synchronization signals (e.g., an SSB) received from satellite 620. The UE 610 may measure cell quality of a serving cell provided by the satellite 620. The UE 610 may measure cell quality of a neighboring cell with respect to a cell of the satellite 620. For example, the cell quality may indicate information on a signal related to a cell. A signal related to the cell may represent a signal received through the cell. The cell quality may be information including a parameter related to the signal. For example, the cell quality may be an index indicating strength of the signal or an index indicating quality of the signal. The parameter related to the signal may be one parameter selected from each parameter of a plurality of signals including the signal. For example, the parameter related to the signal may represent the largest signal strength value among signal strength values of each of a plurality of signals. The cell quality may be, for example, at least one of reference signal received power (RSRP), beam reference signal received power (BRSRP), reference signal received quality (RSRQ), a received signal strength indicator (RSSI), a signal to interference and noise ratio (SINR), a carrier to interference and noise ratio (CINR), a signal to noise ratio (SNR), error vector magnitude (EVM), a bit error rate (BER), and a block error rate (BLER). In addition to the above-described example, of course, other terms having an equivalent technical meaning or other metrics indicating cell quality may be used. Hereinafter, in the present disclosure, high cell quality represents a case in which a signal quality value related to a signal size is large or a cell quality value related to an error rate is small. The higher the cell quality, the more a smooth wireless communication environment is guaranteed in the corresponding cell.

The UE 610 may generate a measurement report. The measurement report may include a measurement result of the UE 610. The measurement result may include cell quality for each cell. The measurement result may include identification information for a cell and cell quality for the cell. For example, the UE 610 may include in the measurement report information on a neighboring cell that provides a higher signal quality than a serving cell and a measurement result including the cell quality of the neighboring cell. According to an embodiment, in case that the cell is serviced by a satellite, the UE 610 may additionally include in the measurement report information (e.g., a satellite ID, a satellite group ID, location information, and an orbit ID) on the satellite.

In an operation 1205, the UE 610 may transmit a measurement report to the satellite 620. For example, the UE 610 may periodically perform a measurement report. For example, the UE 610 may perform a measurement report based on an event. When a trigger condition set in measurement configuration information is satisfied, the UE 610 may perform the measurement report. As an example, when channel quality of a serving cell provided from the satellite 620 is lower than channel quality of a neighboring cell, the UE 610 may transmit a measurement report to the satellite 620.

In an operation 1207, the satellite 620 may identify a target cell. The satellite 620 may identify a target cell which is a handover target based on the measurement report and/or a policy. According to an embodiment, the satellite 620 may identify a target cell indicated through the measurement report. The target cell may be provided by another satellite or may be provided by a terrestrial base station. FIG. 12A illustrates that a target cell is identified after receiving a measurement report, but embodiments of the present disclosure are not limited thereto. Apart from a measurement report, based on a satellite moving along a designated orbit, the satellite 620 may identify a predetermined target cell. The predetermined target cell may be provided by a satellite adjacent to the satellite 620. The satellite may be configured to service the area served by the satellite 620 during a first time period in a second time period different from the first time period. The second time period may partially overlap with the first time period. The satellite 620 may identify the target cell according to a value set in a core network entity (e.g., the AMF 1120) or an internal memory based on information on the satellite.

In an operation 1209, the satellite 620 may transmit a handover command to the UE 610. The satellite 620 may transmit a handover command including information for indicating the target cell to the UE 610. For example, the satellite 620 may transmit an RRC reconfiguration message to the UE 610. The RRC reconfiguration message may be used to indicate a handover to the target cell. For example, the RRC reconfiguration message may include 'Reconfiguration with sync' IE. The RRC reconfiguration message may include information on the target cell. According to an embodiment, in case that the target cell is provided by a satellite, the RRC reconfiguration message may further include information related to the satellite providing the target cell. For example, the satellite related information may include NTN-related information (e.g., information in Table 3), NTN configuration information (e.g., an NTN-Config IE), and/or ephemeris information (e.g., an EphemerisInfo IE).

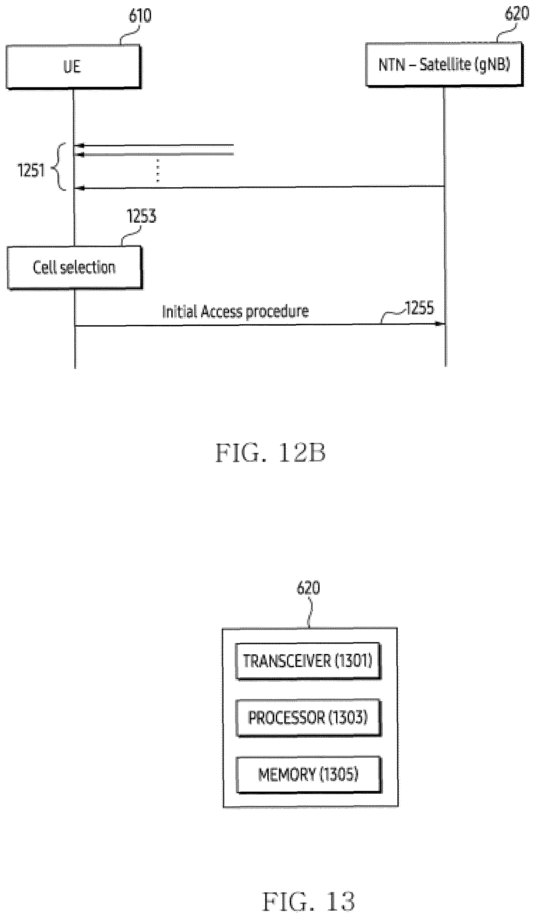

FIG. 12B illustrates an example of cell selection using a regenerative satellite (e.g., the satellite 620). The cell selection may include cell selection and/or cell reselection.

Referring to FIG. 12B, in an operation 1251, the UE 610 may receive downlink signals (e.g., an CRS and an SSB). The UE 610 may perform measurement based on the downlink signals. The UE 610 may perform measurement based on cell-specific downlink signals. The UE 610 may obtain cell quality for each cell. A cell to be measured may include a cell provided by a satellite and/or a cell provided by a terrestrial base station.

In an operation 1253, the UE 610 may select a cell. The UE 610 may perform measurement based on the downlink signals. The UE 610 may select a cell based on a measurement result. For example, the UE 610 may camp-on a cell in case that cell quality of the cell exceeds a threshold value. The UE 610 may receive system information (e.g., an MIB and an SIB 1) from the cell. The UE 610 may initiate an access procedure to the cell based on the system information.

In an operation 1255, the UE 610 may perform an initial access procedure. The UE 610 may perform a cell connection procedure to access the cell. For example, the UE (610) may perform a RACH procedure (e.g., transmitting a random access preamble, receiving a random access response, transmitting Msg 3 (RRC Setup Request, receiving Msg 4 (Contention resolution) (RRC Setup)) based on the system information. If the cell to be accessed is provided by a satellite, the UE 610 may omit at least a portion of the RACH procedure.

Cell selection described through FIGS. 12A and 12B may be determined by considering a unique characteristic (hereinafter referred to as a satellite characteristic) of a satellite, which is a non-terrestrial base station, in addition to signal quality such as RSRP. The satellite characteristic may include various factors. For example, the satellite characteristic may include at least one of mobility of a satellite, a coverage characteristic that serve a relatively wide geographical area, and predictability of moving in a designated orbit. The mobility or the predictability of a satellite may be quantified by defining one group of satellites moving in the same orbit or satellites serving the same area. Therefore, the cell selection may be selected based on at least one of information (e.g., a specific orbit and a specific NTN gateway) on a group to which the corresponding satellite belongs, ephemeris information (e.g., an EphemerisInfo IE) of the satellite, and/or information on a distance or communication time (e.g., a TA) between the satellite and the UE 610 located on the ground, in addition to signal quality such as RSRP. Cell quality used in a triggering condition (e.g., comparing cell quality to a threshold value, and comparing cell quality of a serving cell to cell quality of a neighboring cell) of a measurement report of a standard or a trigger condition (e.g., comparing cell quality to a threshold value, and comparing cell quality of a serving cell to cell quality of a neighboring cell) in a conditional handover may be determined based on at least one of the factors in addition to the signal quality.

FIG. 13 illustrates an example of components of a satellite (e.g., the satellite 260 or the satellite 620). The terms '... unit', '... device', and the like, used hereinafter represent a unit that processes at least one function or operation, which may be implemented as hardware or software or a combination of hardware and software.

Referring to FIG. 13, the satellite 620 may include a transceiver 1301, a processor 1303, and a memory 1305. The transceiver 1301 performs functions for transmitting and receiving a signal through a wireless channel. For example, the transceiver 1301 up-converts a baseband signal into an RF band signal and then transmits it through an antenna, and down-converts the RF band signal received through the antenna into the baseband signal. For example, the transceiver 1301 may include a transmission filter, a reception filter, an amplifier, a mixer, an oscillator, a DAC, an ADC, and the like.

The transceiver 1301 may include a plurality of transmission/reception paths. Furthermore, the transceiver 1301 may include an antenna unit. The transceiver 1301 may include at least one antenna array configured with a plurality of antenna elements. In terms of hardware, the transceiver 1301 may be configured with a digital circuit and an analog circuit (e.g., a radio frequency integrated circuit (RFIC)). Here, the digital circuit and the analog circuit may be implemented as one package. In addition, the transceiver 1301 may include a plurality of RF chains. The transceiver 1301 may perform beamforming. The transceiver 1301 may apply a beamforming weight to a signal in order to assign directivity to the signal to be transmitted and received according to a setting of the processor 1303. According to an embodiment, the transceiver 1301 may include a radio frequency (RF) block (or a RF unit).

The transceiver 1301 may transmit and receive a signal on a radio access network. For example, the transceiver 1301 may transmit a downlink signal. The downlink signal may include a synchronization signal (SS), a reference signal (RS) (e.g., a cell-specific reference signal (CRS) and a demodulation (DM)-RS), system information (e.g., a MIB, a SIB, and remaining system information (RMSI)), other system information (OSI)), a configuration message, control information, or downlink data. In addition, for example, the transceiver 1301 may receive an uplink signal. The uplink signal may include a random access related signal (e.g., a random access preamble (RAP) (or a message 1 (Msg 1)), or a message 3 (Msg 3), a reference signal (e.g., a sounding reference signal (SRS), or a DM-RS), or a power headroom report (PHR). Only the transceiver 1301 is illustrated in FIG. 13, but according to another implementation example, the satellite 620 may include two or more RF transceivers.

The processor 1303 controls overall operations of the satellite 620. The processor 1303 may be referred to as a control unit. For example, the processor 1303 transmits and receives a signal through the transceiver 1301. Furthermore, the processor 1303 writes and reads data to the memory 1305. Additionally, the processor 1303 may perform functions of a protocol stack required by a communication standard. Only the processor 1303 is illustrated in FIG. 13, but according to another implementation example, the satellite 620 may include two or more processors. The processor 1303, which is an instruction set or a code stored in the memory 1305, may be a storage space that stores an instructions/code or an instructions/code that are temporarily residing in the processor 1303, or may be part of a circuit constituting the processor 1303. In addition, the processor 1303 may include various modules for performing communication. The processor 1303 may control the satellite 620 to perform operations according to embodiments.

The memory 1305 stores data such as a basic program, an application program, setting information, and the like, for an operation of the satellite 620. The memory 1305 may be referred to as a storage unit. The memory 1305 may be configured with a volatile memory, a non-volatile memory, or a combination of the volatile memory and the non-volatile memory. Additionally, the memory 1305 provides stored data according to a request of the processor 1303. According to an embodiment, the memory 1305 may include a memory for a condition, a command, or a setting value related to an SRS transmission method.

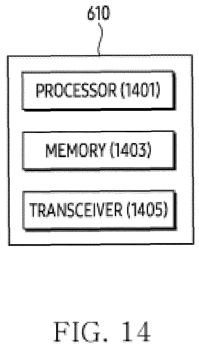

FIG. 14 illustrates an example of components of a terminal (e.g., a UE 610). The terminal exemplifies the UE 610. The UE 610 may perform access to a gNB (e.g., the gNB 120) that provides NR access through an NTN.

Referring to FIG. 14, the UE 610 may include at least one processor 1401, at least one memory 1403, and at least one transceiver 1405. Hereinafter, a component is described in a singular, but implementation of a plurality of components or sub-components is not excluded.

The processor 1401 controls overall operations of the UE 610. For example, the processor 1401 writes and reads data to the memory 1403. For example, the processor 1401 transmits and receives a signal through the transceiver 1405. One processor is illustrated in FIG. 14, but embodiments of the present disclosure are not limited thereto. The UE 610 may include at least one processor to perform embodiments of the present disclosure. The processor 1401 may be referred to as a control unit or control means. According to embodiments, the processor 1401 may control the UE 610 to perform at least one of operations or methods according to embodiments of the present disclosure.

The memory 1403 may store data such as a basic program, an application program, and setting information for an operation of the UE 610. The memory 1403 may store various data used by at least one component (e.g., the transceiver 1405 or the processor 1401). The data may include, for example, input data or output data for software and commands related thereto. The memory 1403 may be configured with a volatile memory, a nonvolatile memory, or a combination of the volatile memory and the nonvolatile memory. Additionally, the memory 1403 may provide stored data according to a request of the processor 1401.

The transceiver 1405 performs functions for transmitting and receiving a signal through a wireless channel. For example, the transceiver 1405 performs a conversion function between a baseband signal and a bit stream according to a physical layer standard of system. For example, when transmitting data, the transceiver 1405 generates complex symbols by encoding and modulating a transmission bit stream. In addition, when receiving data, the transceiver 1405 restores a reception bit stream by demodulating and decoding the baseband signal. In addition, the transceiver 1405 up-converts the baseband signal into a radio frequency (RF) band signal and then transmits it through an antenna, and down-converts the RF band signal received through the antenna into the baseband signal.

To this end, the transceiver 1405 may include a transmission filter, a reception filter, an amplifier, a mixer, an oscillator, a digital to analog converter (DAC), an analog to digital converter (ADC), and the like. In addition, the transceiver 1405 may include a plurality of transmission/ reception paths. Furthermore, the transceiver 1405 may include at least one antenna array configured with a plurality of antenna elements. In terms of hardware, the transceiver 1405 may be configured with a digital unit and an analog unit, and the analog unit may be configured with a plurality of sub-units according to operating power, operating frequency, and the like.

The transceiver 1405 transmits and receives a signal as described above. Accordingly, the transceiver 1405 may be referred to as a 'transmission unit', a 'reception unit', or a 'transmission/reception unit'. In addition, in the following description, transmission and reception performed through a wireless channel, a backhaul network, an optical cable, Ethernet, or another wired path are used in a meaning of including processing as described above being performed by the transceiver 1405. According to an embodiment, the transceiver 1405 may provide an interface for performing communication with other nodes in a network. That is, the transceiver 1405 may convert a bit stream transmitted from the UE 610 to another node, for example, another access node, another base station, an upper node, a core network, and the like into a physical signal, and may convert a physical signal received from another node into a bit stream.

In describing embodiments of the present disclosure, terms and messages defined in 3GPP are used to describe a message between a satellite (e.g., the satellite 620) and a terminal (e.g., the UE 610), but embodiments of the present disclosure are not limited thereto. Terms and messages having a technical meaning equivalent to the above-described terms and messages may be used instead. Furthermore, a gNB, a gNB-CU, and a gNB-DU, as well as a gNB-CU-control plane (CP) (e.g., the C-plane in FIG. 3A) and a gNB-CU-user plane (UP) (e.g., the U-plane in FIG. 3B) may be used as a satellite. In addition, not only a satellite may be used as a base station (e.g., a gNB) or a part of a base station (e.g., a DU), but also a core network entity (e.g., the AMF 235) connected to a base station may be implemented as the satellite. For example, communication between the satellite 620 and the satellite operating as the AMF 235 may be defined. For example, logical nodes including the AMF 235 and the gNB 120 may be implemented in one satellite. As implemented in a software manner through network virtualization, separated logical nodes may be disposed in a satellite, which is one piece of hardware.

In embodiments, an apparatus of a satellite for providing non-terrestrial network (NTN) access is provided. The apparatus may comprise at least one processor and at least one transceiver. The at least one processor may be configured to transmit to a terminal on a cell provided by the satellite through the at least one transceiver, a message including information related to a handover. The information related to a handover may include information for a group to which the satellite belongs, information for a target satellite of a target cell of a handover for the terminal, information for a terminal group to which the terminal belongs, information for a condition of a conditional handover of the terminal, and information for at least one of a position, a velocity, or an orbit of the target satellite.

According to an embodiment, the message may include at least one of position class information for indicating a position of the satellite or the target satellite, velocity class information for indicating a velocity of the satellite or the target satellite, or orbit class information for indicating an orbit of the satellite or the target satellite.

According to an embodiment, the apparatus may be configured to receive, from an access and mobility management function (AMF) through the at least one transceiver, a handover request message. The handover request message may include at least one of a satellite identifier (ID) for the target satellite, a satellite group ID of a satellite group to which the target satellite belongs, orbital information of the target satellite, position information of the target satellite, velocity information of the target satellite, timing advance (TA) information of the target satellite, valid time information for the target satellite, polarization information for the target satellite, or scheduling offset information for the target satellite.

According to an embodiment, the message may include an event type for the conditional handover and at least one parameter for the event type. The message may include valid time information for the terminal group to which the terminal belongs. The valid time information may be used to indicate a time interval for the conditional handover by terminals in the terminal group.

According to an embodiment, the at least one processor may be configured to receive, from an access and mobility management function (AMF) through the at least one transceiver, a handover command message. The handover command message may include at least one of a satellite identifier (ID) for the target satellite, a satellite group ID of a satellite group to which the target satellite belongs, orbital information of the target satellite, position information of the target satellite, velocity information of the target satellite, timing advance (TA) information of the target satellite, valid time information for the target satellite, polarization information for the target satellite, or scheduling offset information for the target satellite.

According to an embodiment, the at least one processor may be configured to transmit, to an access and mobility management function (AMF) through the at least one transceiver, a handover required message. The handover required message may include at least one of a satellite identifier (ID) for the target satellite, a satellite group ID of a satellite group to which the target satellite belongs, orbital information of the target satellite, position information of the target satellite, velocity information of the target satellite, timing advance (TA) information of the target satellite, valid time information for the target satellite, polarization information for the target satellite, or scheduling offset information for the target satellite.

According to an embodiment, the at least one processor may be configured to determine a handover to the target cell of the target satellite, transmit, to the target satellite through the at least one transceiver, a handover command message, and receive, from the target satellite through the at least one transceiver, a handover response message.

According to an embodiment, the at least one processor may be configured to transmit, to the terminal through the at least one transceiver, a message including measurement configuration information and receive, from the terminal through the at least one transceiver, a measurement report message, according to the measurement configuration information. The measurement configuration information may include information related to measurement of each cell of one or more cells. The measurement report message may include a cell equality of a cell provided by a satellite. The cell quality may be determined based on at least one of a signal quality, an orbit of the satellite, a satellite group to which the satellite belongs, a distance between the satellite and the terminal, or timing advance (TA) information for the satellite.

According to an embodiment, the at least one processor may be configured to transmit, to a next generation node base station (gNB)-central unit (CU) through a F1 interface via the at least one transceiver, a gNB-distributed unit (DU) configuration update message and receive, from the gNB-CU through the F1 interface via the at least one transceiver, a gNB-DU configuration update acknowledge message. The gNB-DU configuration update message may include at least one of information on one or more cells provided by the satellite, information on an orbit of the satellite, information on a satellite group to which the satellite belongs, information on a velocity of the satellite, information on a service time of the satellite, or information on a capability of the satellite. The satellite may correspond to a protocol of a physical (PHY) layer, a protocol of a medium access control (MAC) layer, and a protocol of a radio link control (RLC) layer, and the gNB-CU corresponds to a protocol of a radio resource control (RRC) layer and a protocol of a packet data convergence protocol (PDCP) layer.

According to an embodiment, the at least one processor may be configured to broadcast, through the at least one transceiver, system information on a cell provided by the satellite. The system information may include at least one of information on a satellite group to which the satellite belongs, information on an orbit of the satellite group, information on a cell of each satellite belonging to the satellite group, or information on an NTN gateway associated with the satellite group.

In embodiments, a method performed by a satellite for providing non-terrestrial network (NTN) access is provided. The method may comprise transmitting, to a terminal on a cell provided by the satellite, a message including information related to a handover. The information related to a handover includes information for a group to which the satellite belongs, information for a target satellite of a target cell of a handover for the terminal, information for a terminal group to which the terminal belongs, information for a condition of a conditional handover of the terminal, and information for at least one of a position, a velocity, or an orbit of the target satellite.

According to an embodiment, the message may include at least one of position class information for indicating a position of the satellite or the target satellite, velocity class information for indicating a velocity of the satellite or the target satellite, or orbit class information for indicating an orbit of the satellite or the target satellite.

According to an embodiment, the method may comprise receiving, from an access and mobility management function (AMF), a handover request message. The handover request message may include at least one of a satellite identifier (ID) for the target satellite, a satellite group ID of a satellite group to which the target satellite belongs, orbital information of the target satellite, position information of the target satellite, velocity information of the target satellite, timing advance (TA) information of the target satellite, valid time information for the target satellite, polarization information for the target satellite, or scheduling offset information for the target satellite.

The message may include an event type for the conditional handover and at least one parameter for the event type. The message may include valid time information for the terminal group to which the terminal belongs. The valid time information may be used to indicate a time interval for the conditional handover by terminals in the terminal group.

According to an embodiment, the method may comprise receiving, from an access and mobility management function (AMF), a handover command message. The handover command message may include at least one of a satellite identifier (ID) for the target satellite, a satellite group ID of a satellite group to which the target satellite belongs, orbital information of the target satellite, position information of the target satellite, velocity information of the target satellite, timing advance (TA) information of the target satellite, valid time information for the target satellite, polarization information for the target satellite, or scheduling offset information for the target satellite.

According to an embodiment, the method may comprise transmitting, to an access and mobility management function (AMF), a handover required message. The handover required message may include at least one of a satellite identifier (ID) for the target satellite, a satellite group ID of a satellite group to which the target satellite belongs, orbital information of the target satellite, position information of the target satellite, velocity information of the target satellite, timing advance (TA) information of the target satellite, valid time information for the target satellite, polarization information for the target satellite, or scheduling offset information for the target satellite.

According to an embodiment, the method may comprise determining a handover to the target cell of the target satellite, transmitting, to the target satellite, a handover command message, and receiving, from the target satellite, a handover response message.

According to an embodiment, the method may comprise transmitting, to the terminal, a message including measurement configuration information, and receiving, from the terminal, a measurement report message, according to the measurement configuration information. The measurement configuration information may include information related to measurement of each cell of one or more cells. The measurement report message may include a cell equality of a cell provided by a satellite. The cell quality may be determined based on at least one of a signal quality, an orbit of the satellite, a satellite group to which the satellite belongs, a distance between the satellite and the terminal, or timing advance (TA) information for the satellite.

According to an embodiment, the method may comprise transmitting, to a next generation node base station (gNB)-central unit (CU) through a F1 interface, a gNB-distributed unit (DU) configuration update message, and receiving, from the gNB-CU through the F1 interface, a gNB-DU configuration update acknowledge message. The gNB-DU configuration update message may include at least one of information on one or more cells provided by the satellite, information on an orbit of the satellite, information on a satellite group to which the satellite belongs, information on velocity of the satellite, information on a service time of the satellite, or information on a capability of the satellite. The satellite may correspond to a protocol of a physical (PHY) layer, a protocol of a medium access control (MAC) layer, and a protocol of a radio link control (RLC) layer, and the gNB-CU corresponds to a protocol of a radio resource control (RRC) layer and a protocol of a packet data convergence protocol (PDCP) layer.

According to an embodiment, the method may comprise broadcasting system information on a cell provided by the satellite. The system information may include at least one of information on a satellite group to which the satellite belongs, information on an orbit of the satellite group, information on a cell of each satellite belonging to the satellite group, or information on an NTN gateway associated with the satellite group.

In embodiments, a non-transitory recording medium is provided. The non-transitory recording medium may include a memory storing instructions. The instructions, when executed by at least one processor, may cause a satellite for providing non-terrestrial network (NTN) access to transmit, to a terminal on a cell provided by the satellite, a message including information related to a handover, and the information related to a handover may include information for a group to which the satellite belongs, information for a target satellite of a target cell of a handover for the terminal, information for a terminal group to which the terminal belongs, information for a condition of a conditional handover of the terminal, and information for at least one of a position, a velocity, or an orbit of the target satellite.

Methods according to embodiments described in a claim or a specification of the present disclosure may be implemented in a form of hardware, software, or a combination of the hardware and the software.

In case of software implementation, a computer-readable storage medium for storing one or more programs (a software module) may be provided. One or more programs stored in the computer-readable storage medium are configured for execution by one or more processors in an electronic device. One or more programs include instructions that cause the electronic device to execute the methods according to embodiments described in a claim or a specification of the present disclosure.

This program (a software module or software) may be stored in a random access memory, a non-volatile memory including a flash memory, a read only memory (ROM), an electrically erasable programmable read only memory (EEPROM), a magnetic disk storage device, a compact disc-ROM (CD-ROM), digital versatile discs (DVDs), another form of an optical storage device, or a magnetic cassette. In addition, it may be stored in a memory configured with a portion or all combinations thereof. In addition, a plurality of each configuration memory may be included.

In addition, a program may be stored in a communication network such as Internet, Intranet, a local area network (LAN), a wide area network (WAN), or a storage area network (SAN), or an attachable storage device that is capable of being accessed through a communication network configured with a combination thereof. Such a storage device may connect to a device performing an embodiment of the present disclosure through an external port. In addition, a separate storage device on the communication network may connect to the device performing an embodiment of the present disclosure. In the above-described specific embodiments of the present disclosure, a component included in the disclosure is expressed in a singular or a plural according to a presented specific embodiment. However, a singular or plural expression is selected appropriately for a situation presented for convenience of explanation and the present disclosure is not limited to a singular or plural component, and even a component expressed in a plural may be configured with a singular or even a component expressed in a singular may be configured with a plural.

Meanwhile, in a detailed description of the present disclosure, a specific embodiment is described, but various modifications are, of course, possible without departing from scope of the present disclosure.

## Claims

1. An apparatus of a satellite for providing non-terrestrial network (NTN) access comprising:
at least one processor; and
at least one transceiver,
wherein the at least one processor is configured to:
transmit, to a terminal on a cell provided by the satellite through the at least one transceiver, a message including information related to a handover, and
wherein the information related to a handover includes information for a group to which the satellite belongs, information for a target satellite of a target cell of a handover for the terminal, information for a terminal group to which the terminal belongs, information for a condition of a conditional handover of the terminal, and information for at least one of a position, a velocity, or an orbit of the target satellite.

2. The apparatus of claim 1,
wherein the message includes at least one of position class information for indicating a position of the satellite or the target satellite, velocity class information for indicating a velocity of the satellite or the target satellite, or orbit class information for indicating an orbit of the satellite or the target satellite.

3. The apparatus of claim 1,
wherein the at least one processor is configured to receive, from an access and mobility management function (AMF) through the at least one transceiver, a handover request message, and
wherein the handover request message includes at least one of a satellite identifier (ID) for the target satellite, a satellite group ID of a satellite group to which the target satellite belongs, orbital information of the target satellite, position information of the target satellite, velocity information of the target satellite, timing advance (TA) information of the target satellite, valid time information for the target satellite, polarization information for the target satellite, or scheduling offset information for the target satellite.

4. The apparatus of claim 1,
wherein the message includes an event type for the conditional handover and at least one parameter for the event type,
wherein the message includes valid time information for the terminal group to which the terminal belongs, and
wherein the valid time information is used to indicate a time interval for the conditional handover by terminals in the terminal group.

5. The apparatus of claim 1,
wherein the at least one processor is configured to receive, from an access and mobility management function (AMF) through the at least one transceiver, a handover command message, and
wherein the handover command message includes at least one of a satellite identifier (ID) for the target satellite, a satellite group ID of a satellite group to which the target satellite belongs, orbital information of the target satellite, position information of the target satellite, velocity information of the target satellite, timing advance (TA) information of the target satellite, valid time information for the target satellite, polarization information for the target satellite, or scheduling offset information for the target satellite.

6. The apparatus of claim 1,
wherein the at least one processor is configured to transmit, to an access and mobility management function (AMF) through the at least one transceiver, a handover required message, and
wherein the handover required message includes at least one of a satellite identifier (ID) for the target satellite, a satellite group ID of a satellite group to which the target satellite belongs, orbital information of the target satellite, position information of the target satellite, velocity information of the target satellite, timing advance (TA) information of the target satellite, valid time information for the target satellite, polarization information for the target satellite, or scheduling offset information for the target satellite.

7. The apparatus of claim 1, wherein the at least one processor is configured to:
determine a handover to the target cell of the target satellite;
transmit, to the target satellite through the at least one transceiver, a handover command message; and
receive, from the target satellite through the at least one transceiver, a handover response message.

8. The apparatus of claim 1, wherein the at least one processor is configured to:
transmit, to the terminal through the at least one transceiver, a message including measurement configuration information; and
receive, from the terminal through the at least one transceiver, a measurement report message, according to the measurement configuration information,
wherein the measurement configuration information includes information related to measurement of each cell of one or more cells,
wherein the measurement report message includes a cell equality of a cell provided by a satellite, and
wherein the cell quality is determined based on at least one of a signal quality, an orbit of the satellite, a satellite group to which the satellite belongs, a distance between the satellite and the terminal, or timing advance (TA) information for the satellite.

9. The apparatus of claim 1, wherein the at least one processor is configured to:
transmit, to a next generation node base station (gNB)-central unit (CU) through a F1 interface via the at least one transceiver, a gNB-distributed unit (DU) configuration update message, and
receive, from the gNB-CU through the F1 interface via the at least one transceiver, a gNB-DU configuration update acknowledge message, and
wherein the gNB-DU configuration update message includes at least one of information on one or more cells provided by the satellite, information on an orbit of the satellite, information on a satellite group to which the satellite belongs, information on a velocity of the satellite, information on a service time of the satellite, or information on a capability of the satellite, and
wherein the satellite corresponds to a protocol of a physical (PHY) layer, a protocol of a medium access control (MAC) layer, and a protocol of a radio link control (RLC) layer, and the gNB-CU corresponds to a protocol of a radio resource control (RRC) layer and a protocol of a packet data convergence protocol (PDCP) layer.

10. The apparatus of claim 1, wherein the at least one processor is configured to:
broadcast, through the at least one transceiver, system information on a cell provided by the satellite, and
wherein the system information includes at least one of information on a satellite group to which the satellite belongs, information on an orbit of the satellite group, information on a cell of each satellite belonging to the satellite group, or information on an NTN gateway associated with the satellite group.

11. A method performed by a satellite for providing non-terrestrial network (NTN) access comprising:
transmitting, to a terminal on a cell provided by the satellite, a message including information related to a handover, and
wherein the information related to a handover includes information for a group to which the satellite belongs, information for a target satellite of a target cell of a handover for the terminal, information for a terminal group to which the terminal belongs, information for a condition of a conditional handover of the terminal, and information for at least one of a position, a velocity, or an orbit of the target satellite.

12. The method of claim 11,
wherein the message includes at least one of position class information for indicating a position of the satellite or the target satellite, velocity class information for indicating a velocity of the satellite or the target satellite, or orbit class information for indicating an orbit of the satellite or the target satellite.

13. The method of claim 11, further comprising:
receiving, from an access and mobility management function (AMF), a handover request message, and
wherein the handover request message includes at least one of a satellite identifier (ID) for the target satellite, a satellite group ID of a satellite group to which the target satellite belongs, orbital information of the target satellite, position information of the target satellite, velocity information of the target satellite, timing advance (TA) information of the target satellite, valid time information for the target satellite, polarization information for the target satellite, or scheduling offset information for the target satellite.

14. The method of claim 11,
wherein the message includes an event type for the conditional handover and at least one parameter for the event type,
wherein the message includes valid time information for the terminal group to which the terminal belongs, and
wherein the valid time information is used to indicate a time interval for the conditional handover by terminals in the terminal group.

15. The method of claim 11, further comprising:
receiving, from an access and mobility management function (AMF), a handover command message, and
wherein the handover command message includes at least one of a satellite identifier (ID) for the target satellite, a satellite group ID of a satellite group to which the target satellite belongs, orbital information of the target satellite, position information of the target satellite, velocity information of the target satellite, timing advance (TA) information of the target satellite, valid time information for the target satellite, polarization information for the target satellite, or scheduling offset information for the target satellite.
